(19) **Europäisches Patentamt**

**European Patent Office**

**Office européen des brevets**

(11) **EP 1 381 191 B1**

(12) **EUROPEAN PATENT SPECIFICATION**

(45) Date of publication and mention
of the grant of the patent:
**21.06.2006 Bulletin 2006/25**

(51) Int Cl.:
**H04L 12/56** *(2006.01)*

(21) Application number: **03015565.9**

(22) Date of filing: **11.07.2003**

(54) **Node search method, node, mobile communication system, and computer program product**

Knotensuchverfahren, Knoten, mobiles Kommunikationssystem und Computerprogrammprodukt

Procédé de recherche de noeud, noeud, système de communication mobile et programme d'ordinateur

(84) Designated Contracting States:
**DE GB IT**

(30) Priority: **12.07.2002 JP 2002204788**

(43) Date of publication of application:
**14.01.2004 Bulletin 2004/03**

(73) Proprietor: **NTT DoCoMo, Inc.**
**Tokyo 100-6150 (JP)**

(72) Inventors:
• **Omae, Koji,**
 **NTT DoCoMo, Inc.**
 **Intell.Prop.Dpt**
 **Chiyoda-ku,**
 **Tokyo (JP)**
• **Inoue, Masahiro,**
 **NTT DoCoMo, Inc.**
 **Intell.Prop.Dpt**
 **Chiyoda-ku,**
 **Tokyo (JP)**

• **Okajima, Ichiro,**
 **NTT DoCoMo, Inc.**
 **Intell.Prop.Dpt**
 **Chiyoda-ku,**
 **Tokyo (JP)**
• **Umeda, Narumi,**
 **NTT DoCoMo, Inc.**
 **Intell.Prop.Dpt**
 **Chiyoda-ku,**
 **Tokyo (JP)**

(74) Representative: **HOFFMANN EITLE**
 **Patent- und Rechtsanwälte**
 **Arabellastrasse 4**
 **81925 München (DE)**

(56) References cited:
 **WO-A-01/41375      US-A- 5 719 861**
 **US-B1- 6 304 556**

EP 1 381 191 B1

**Description**

**BACKGROUND OF THE INVENTION**

**1. Field of the Invention**

The present invention relates to a node search method, node, a mobile communication system, and a computer program product.

**2. Description of the Related Art**

As a conventional method whereby a particular node searches a group formed of a plurality of nodes for the nearest located node, there is a method utilizing an anycast address (http://www.ietf.org/rfc/rfc2373.txt). The anycast address is an address that makes it possible to select the nearest located node from among a plurality of nodes and access the node. The anycast address has been introduced in Internet Protocol version 6 (IPv6).

On the other hand, in the Internet Protocol (IP) network, there is a mobility management node, which effects management so as to deliver a packet to a mobile node even if the mobile node moves. The mobility management node conducts, for example, transfer and buffering of a packet directed to a mobile node. Therefore, the mobile node needs to search for a mobility management node that exists in the neighborhood (http://www.ietf.org/rfc/rfc.2461.txt). Accordingly, in an access router to which the mobile node is connected, a mobility management node in the neighborhood of the access router is previously set. Further, the mobile node causes the access router connected thereto to notify the preset mobility management node, and detects a neighbor node. Such a method is conducted (http://www.ietf.org/internet-drafts/draft-ietf-mobileip-hmi pv6-08.txt).

However, the method of searching for a neighbor node by using the anycast address has the following problems. Since the anycast address has been introduced in IPv6, it cannot be used in networks using IPv4. Furthermore, it is necessary to conduct a setting for adding an entry of the anycast address to the routing table of every router in a network for which it is desired to validate the anycast address. Furthermore, in the anycast address, the criterion for a decision as to whether the distance between nodes is short depends upon the routing protocol adopted for the network. Therefore, the node itself cannot search for a neighbor node on the basis of its own decision criterion.

Furthermore, in the anycast address, a node itself belonging to a group cannot detect a node in the group that is located nearest the node itself except the node itself. Furthermore, in the anycast address, in the case where the nearest node cannot be used for some reason, such as for reasons of security or a contract, a neighbor node that takes the place of the nearest node cannot be detected. In other words, a neighbor node cannot be detected according to the situation in some cases.

On the other hand, in the method in which a mobile node causes an access router to notify a neighbor mobility management node, the neighbor mobility management node is previously set in the access router in order to cause the access router to notify the neighbor mobility management node. Therefore, the method has the following problems. A fixed relation is formed between the access router and the mobility management node by the setting. In the case where there has been a change of situation, such as addition, deletion or a failure, of a mobility management node, it is necessary to alter the fixed relation in order to make it possible to suitably detect a neighbor mode. In other words, it is necessary to alter the setting in all neighbor access routers.

In addition, if there is an access router for which a mobility management node has not been set, then a mobile node connected to the access router cannot detect a mobility management node. Even in the case where a large number of mobile nodes are connected to an access router, a mobile node can detect only the set mobility management node. Therefore, the mobility management node is congested. Even if congestion occurs, the mobile node cannot detect other mobility management nodes.

US 6,304,556 discloses two network communication protocols, one for routing and one for mobility management, are presented that are particularly suited for use with ad-hoc networks. The routing protocol is a proactive-reactive hybrid routing protocol that limits the scope of the proactive procedure to the node's local neighborhood. Routing zones are defined for each node that includes nodes whose distance from the subject node in hops is at most some predefined number, referred to as the zone radius. Each node is required to know the topology of the network within its routing zone only. The reactive procedure is limited during route discovery to queries of only those nodes located on the periphery of routing zones. In this manner, the queries hop across nodes in distances of zone radius, thus limiting the scope of the reactive procedure. The zone radius is preferably adjustable to accommodate different and differing network topologies and network operational conditions in the most efficient manner. The mobility management protocol relies on some network nodes assuming the mobility management function. In this scheme, each network node is "associated" with one or more mobility management nodes. The mobility management nodes form a virtual network which is embedded within the actual ad-hoc network. Each mobility management node knows the location of all nodes within its zone, and communicates this information to any other mobility management node that requests it.

WO 01/41375 A2 discusses how in conventional ad-hoc networks using reactive routing protocols the route between the source node and the destination node is not updated until the route is actually broken. In response to predetermined events a request for updated route message can be sent to the destination node to determine if another route exists between the source node and the destination node. A reply to the request for updated route can be provided by either the destination node or by a node which has a cached route between the source node and the destination node. This updated route request scheme can be implemented in networks which use source routing and networks which use distance vector routing.

US 5,719,861 discloses how in a network including a simple element having no routing function, each node includes.a health-check function to keep track of the respective statuses of its managing simple elements. A source node broadcasts an address request signal (TARP) including the ID of a destination simple element and then waits for its response signal. Each node, receiving the address request signal, further broadcasts it when neither managing nor normally communicating with the destination simple element, and otherwise sends the response signal back to the source node. When the response signal is received from another node, the source node transmits a management message to the destination simple element via the node sending the response signal. Since it is checked that each node normally communicates with its managing simple elements by the health-check function, the node cannot send the response signal in the case where some failure exists between the node itself and the destination simple element.

## BRIEF SUMMARY OF THE INVENTION

An object of the present invention is to provide a node search method, node, a mobile communication system, and a computer program product whereby a service node for providing a service to a mobile node and the mobile node can search for the service node autonomously and easily according to the circumstances.

According to the present invention there is provided a node search method as defined in the appended independent claim 1, a node as defined in the appended independent claim 2 and a mobile communication system as defined in the appended independent claim 15. Preferred embodiments are defined in the dependent claims.

## BRIEF DESCRIPTION OF THE SEVERAL VIEWS OF THE DRAWINGS

Fig. 1 is a diagram showing a configuration of a mobile communication system according to a first embodiment of the present invention:
Fig. 2 is a block diagram showing a configuration of a MAP according to a first embodiment of the present invention;
Fig. 3 is a diagram showing a neighbor MAP table and a second table in a MAP(k) according to a first embodiment of the present invention:
Fig. 4 is a block diagram showing a configuration of a MN according to a first embodiment of the present invention;
Fig. 5 is a diagram showing a neighbor MAP table and a second table in a MN(a) according to a first embodiment of the present invention;
Fig. 6 is a diagram showing a search for a MAP conducted by another MAP according to a first embodiment of the present invention;
Fig. 7 is a diagram showing a MAP search packet according to a first embodiment of the present invention;
Figs. 8A and 8B are diagrams showing a MAP notice request packet according to a first embodiment of the present invention:
Figs. 9A and 9B are diagrams showing MAP notice packets according to a first embodiment of the present invention;
Fig. 10 is a diagram showing a neighbor MAP table and a second table of a MAP(k) when receiving a MAP notice packet from a MAP(i), according to a first embodiment of the present invention;
Fig. 11 is a diagram showing a neighbor MAP table and a second table of a MAP(k) when receiving a MAP notice packet from a MAP (j), according to a first embodiment of the present invention;
Fig. 12 is a diagram showing a neighbor MAP registration request packet according to a first embodiment of the present invention;
Fig. 13 is a diagram showing a neighbor MAP table and a second table of a MAP(f) according to a first embodiment of the present invention;
Fig. 14 is a diagram showing a neighbor MAP registration acknowledgement packet according to a first embodiment of the present invention;
Fig. 15 is a diagram showing a mobile communication system at the time when a MAP(o) is newly arranged, according to a first embodiment of the present invention;
Fig. 16 is a diagram showing how a MAP(o) searches for a more neighboring MAP, according to a first embodiment of the present invention;

Fig. 17 is a diagram showing the state after a registration request issued by a MAP(o), according to a first embodiment of the present invention;

Fig. 18 is a diagram showing a mobile communication system after arrangement of a MAP(o), according to a first embodiment of the present invention;

Fig. 19 is a diagram showing a search for a MAP conducted by a MN, according to a first embodiment of the present invention;

Fig. 20 is a diagram showing a neighbor MAP table and a second table of a MAP(k) according to a first embodiment of the present invention;

Fig. 21 is a diagram showing a neighbor MAP table and a second table in a MN according to a second embodiment of the present invention;

Fig. 22 is a diagram showing a search for a MAP conducted by another MAP, according to a second embodiment of the present invention;

Fig. 23 is a diagram showing a MAP search packet according to a second embodiment of the present invention;

Figs. 24A and 24B are diagrams showing encapsulated MAP notice packets according to a second embodiment of the present invention;

Fig. 25 is a diagram showing a MAP notice packet transmitted by a MAP(i), according to a second embodiment of the present invention;

Fig. 26 is a diagram showing a neighbor MAP table and a second table of a MAP(k) when receiving a MAP notice packet from a MAP(l), according to a second embodiment of the present invention;

Fig. 27 is a diagram showing a MAP notice packet transmitted by a MAP(j), according to a second embodiment of the present invention;

Fig. 28 is a diagram showing a search for a MAP conducted by a MN. according to a second embodiment of the present invention;

Fig. 29 is a block diagram showing a configuration of a MAP according to a variation of the present invention; and

Fig. 30 is a block diagram showing a configuration of a MN according to a variation of the present invention.

## DETAILED DESCRIPTION OF THE INVENTION

A node search method is a node search method for searching for a service node for providing a service to a mobile node, in a mobile communication system including a plurality of service nodes and the mobile node, each of the service nodes and the mobile node having a node storage unit configured to store addresses of service nodes. The node search method comprises transmitting a node search packet for searching for the service node from a node, which searches for the service node (hereafter referred to as search node) to an address stored in the node storage unit of the search node, returning a node notice packet from at least one of a service node, which has received the node search packet (hereafter referred to as search packet reception node), and a service node other than the search packet reception node (hereafter referred to as peripheral node), to the search node in response to the node search packet, detecting the service node on a basis of a returned node notice packet by the search node, and updating the node storage unit of the search node on a basis of a detected service node by the search node.

The peripheral node is a service node other than the search packet reception node. Therefore, all service nodes other than the search packet reception node included in the mobile communication system can become peripheral nodes. According to such a node search method, the search node, which wants to search for a service node, can autonomously search for a service node by transmitting a node search packet. By simply transmitting a node search packet, the search node can receive a node notice packet from the search packet reception node or the peripheral node in response to the node search packet. Further, the search node can detect a service node on the basis of the node notice packet. Therefore, the search node can easily detect other service nodes included in the mobile communication system.

In addition, the search node can receive a node notice packet, which meets the situation at the time of transmission of the node search packet. Therefore, the search node can detect a service node, which meets the situation at that time. The search node updates the node storage unit on the basis of the detected service node. Therefore, the search node can dynamically hold nodes, which meets the situation at that time.

A node comprises a node storage unit configured to store addresses of service nodes, a search packet creation unit configured to create a node search packet to be transmitted to an address stored in the node storage unit, in order to search for the service node, a communication unit configured to communicate, transmit the node search packet created by the search packet creation unit, and receive a node notice packet returned from at least one of the search packet reception node and the peripheral node in response to a transmitted node search packet, a detection unit configured to detect the service node on a basis of the node notice packet received by the communication unit, and an update unit configured to update the node storage unit on a basis of the service node detected by the detection unit.

According to this node, the search packet creation unit creates anode search packet to be transmitted to an address stored in the node storage unit. The communication unit transmits the node search packet and receives a node notice packet in response to the node search packet. The detection unit detects the service node on the basis of the node notice packet. Therefore, the node can autonomously search for the service node. The node can receive a node notice packet from the search packet reception node or the peripheral node. Further, the node can detect the service node on the basis of the node notice packet. Therefore, the node can easily detect service nodes included in the mobile communication system.

In addition, the node can receive a node notice packet, which meets the situation at the time of transmission of the node search packet. Therefore, the node can detect the service node, which meets the situation at that time. The update unit updates the node storage unit on the basis of the detected service node. Therefore, the node can dynamically hold service nodes, which meets the situation at that time.

A mobile communication system comprises the search node configured to search for the service node by transmitting a node search packet in order to search for the service node, the search packet reception node configured to receive the node search packet transmitted from the search node, and the peripheral node, wherein the search node comprises a node storage unit configured to store addresses of service nodes, a search packet creation unit configured to create a node search packet to be transmitted to an address stored in the node storage unit, a communication unit configured to communicate, transmit the node search packet created by the search packet creation unit, and receive a node notice packet returned from at least one of the search packet reception node and the peripheral node in response to a transmitted node search packet, a detection unit configured to detect the service node on a basis of the node notice packet received by the communication unit, and an update unit configured to update the node storage unit on a basis of the service node detected by the detection unit.

A computer program product is a computer program product for causing a computer to function as a node. The computer program product comprises a first computer program code for causing the computer to store addresses of service nodes, a second computer program code for causing the computer to create a node search packet to be transmitted to a stored address, in order to search for the service node, a third computer program code for causing the computer to communicate, transmit the node search packet created, and receive a node notice packet returned from at least one of the search packet reception node and the peripheral node in response to a transmitted node search packet, a fourth computer program code for causing the computer to detect the service node on a basis of the node notice packet received, and a fifth computer program code for causing the computer to update the addresses on a basis of a detected service node.

[First Embodiment]

[Mobile Communication System]

(General Configuration of Mobile Communication System)

The mobile communication system uses a mobility management scheme called HMIP (Hierarchical Mobile IPv6). The HMIP has been obtained by expanding Mobile IPv6. The HMIP is a mobility management scheme for transferring a packet transmitted toward a home address of a mobile node (hereafter referred to as MN) to the MN via nodes called home agent (hereafter referred to as HA) and mobility anchor point (hereafter referred to as MAP).

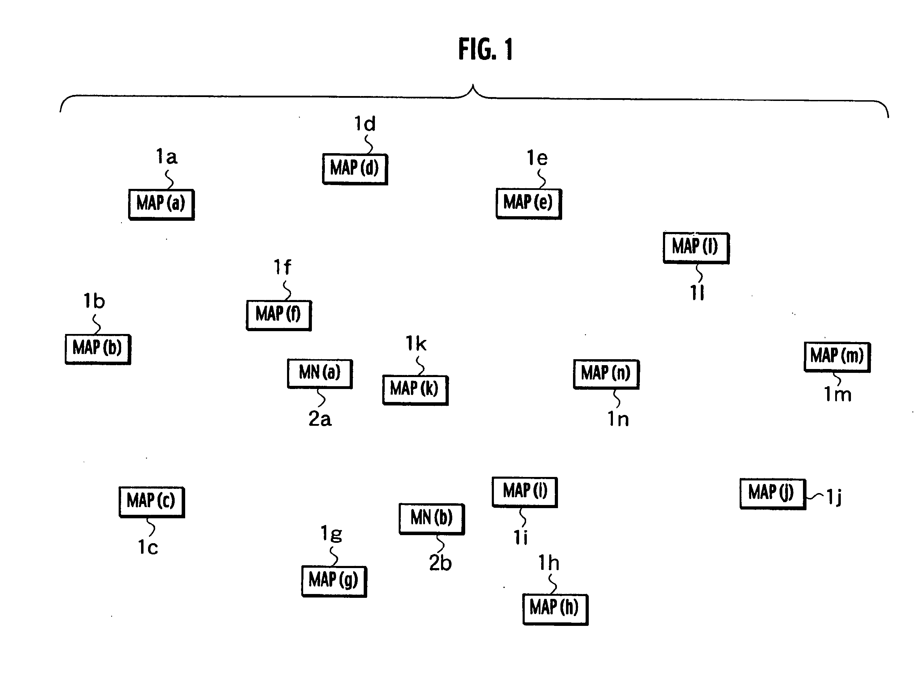

As shown in Fig. 1, the mobile communication system comprises a plurality of nodes, such as MAP(a) 1a to MAP(n) 1n, MN(a) 2a, and MN(b) 2b. A plurality of nodes MAP(a) 1a to MAP(n) 1n form a group. MAP(a) 1a to MAP(n) 1n each grasp a MAP located in its own neighborhood (hereafter referred to as neighbor MAP) by searching for another MAPs. The MAP(a) 1a to MAP(n) 1n accept registration of the home address and care of address from the MN(a) 2a and MN(b) 2b. Further, the MAP(a) 1a to MAP(n) In receive packets transmitted toward home addresses of the MN(a) 2a and MN(b) 2b, via the HA, and conduct buffering of the packets and transfer of the packets to the care of address . MAP(a) 1a to MAP(n) In are service nodes for providing a service to MN(a) 2a and MN(b). This service by MAP(a)1a to MAP (n) 1n is a mobility management.

The MN(a) 2a and MN(b) 2b search for MAPs, and grasp neighbor MAPs. MN(a) 2a and MN(b) 2b each select a neighbor MAP to be used, and register the home address and care of address in the neighbor MAP. Furthermore, the MN(a) 2aandMN(b) 2b each register the home address and an address of the neighbor MAP to be used, in the HA.

There are a plurality of nodes MAP(a) 1a to MAP(n) 1n, MN(a) 2a, and MN(b) 2b. In the ensuing description, therefore, an alphabetic letter in parentheses is used as a MAP symbol or a MN symbol for discriminating aMAP or aMN. Information concerning a node, such as a MAP or a MN, is hereafter referred to as node information. In the node information, there is information concerning the node itself (hereafter referred to as own-node information) and information concerning the relation between the node and another node (hereafter referred to as inter-node information) . In the own-node information, there is information concerning the characteristics and state of the node itself, such as the processing capability of the node, traffic volume in the node, the number of nodes using the node, transmission power value of the node, and reliability of the node. In the inter-node information, there is information concerning the delay value, the number of hops and the cost in packet transmission between the node and another node, and information concerning the link capacity and propagation path.

There are various criteria for making a decision as to whether the distance between nodes is short. Therefore, the neighbor MAP means a nearby MAP, but it differs depending upon the decision criterion. For example, there are various decision criteria as to whether the distance between nodes is short, such as a shorter delay value in packet transmission between nodes, a smaller number of hops between nodes, a lower cost in packet transmission between nodes, a larger link capacity between nodes, a better propagation path between nodes, a larger processing capability of the node, a smaller traffic volume in the node, a smaller number of nodes using the node, and a lower transmission power of the node, all of which indicate a shorter distance. As for the decision criterion, a plurality of decision criterion parameters may also be combined. As the decision criterion, a suitable criterion can be used for each node. Furthermore, as to the decision criterion as to whether the distance is short, various decision criteria can be used depending upon the routing protocol adopted by the mobile communication system.

Since there are various decision criteria as to whether the distance between nodes is short, there are various kinds of information required for the decision as to whether the distance between nodes is short (hereafter referred to as remoteness/nearness decision information). For example, in the remoteness/nearness decision information, there are the delay value in packet transmission between nodes, the number of hops between nodes, the cost in packet transmission between nodes, the link capacity between nodes, the propagation path information between nodes, the node processing capability, the traffic volume, the number of nodes using the node, the node transmission power, and the reliability. In the present embodiment, a decision criterion "a shorter delay value in packet transmission between nodes indicates a shorter distance" is used as the decision criterion for determining whether the distance between nodes is short. Furthermore, as for the remoteness/nearness decision information, the delay value in packet transmission between nodes is used.

(Configuration of MAP)

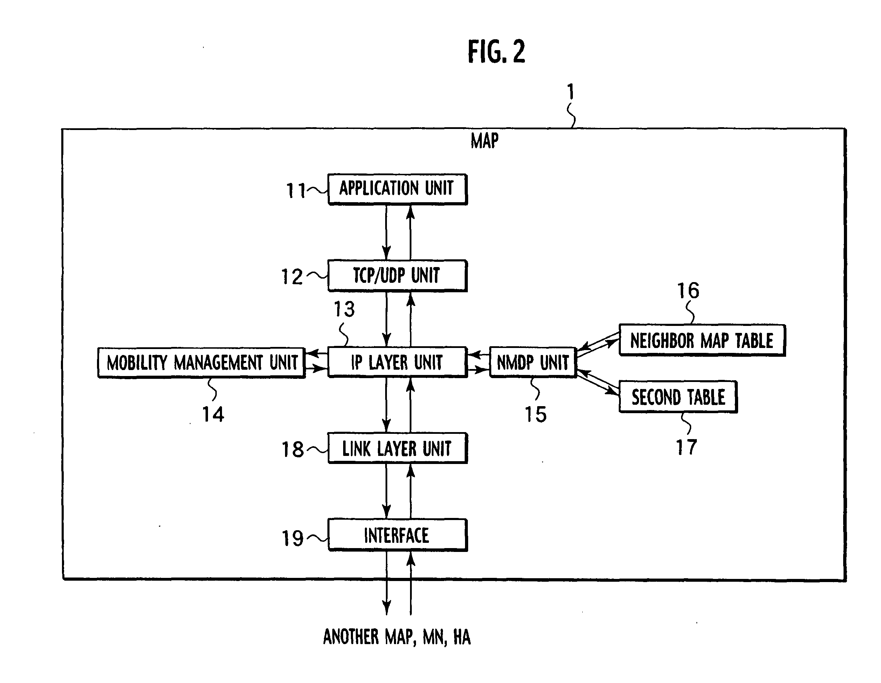

MAP(a) 1a to MAP(n) 1n each have a configuration similar to that of MAP 1 shown in Fig. 2. As shown in Fig. 2, the MAP 1 comprises an application unit 11, a TCP/UDP (Transmission Control Protocol/ User Data gram Protocol) unit 12, an IP layer unit 13, a mobility management unit 14, an NMDP (Neighbor MAP Discovery Protocol) unit 15, a neighbor MAP table 16, a second table 17, a link layer unit 18, and an interface 19.

The application unit 11 has various applications installed therein. The application unit 11 is connected to the TCP/UDP unit 12. The application unit 11 supplies data to the TCP/UDP unit 12, and acquires data from the TCP/UDP unit 12. The TCP/UDP unit 12 conducts control of the TCP/UDP level. The TCP/UDP unit 12 is connected to the application unit 11 and the IP layer unit 13. The TCP/UDP unit 12 adds a TCP/UDP header to the data acquired from the application unit 11, and supplies resultant data to the IP layer unit 13. The TCP/UDP unit 12 removes a TCP/UCP header from data acquired from the IP layer unit 13, and supplies resultant data to a suitable application in the application unit 11.

The IP layer unit 13 conducts control of the IP level. The IP layer unit 13 is connected to the TCP/UDP unit 12, the mobility management unit 14, and the NMDP unit 15. The IP layer unit 13 adds an IP header to the data with the TCP/UDP header added thereto acquired from the TCP/UDP unit 12, and supplies resultant data to the link layer unit 18. The IP layer unit 13 removes an IP header from the data acquired from the link layer unit 18, and supplies resultant data to the TCP/UDP unit 12.

If the IP layer unit 13 has acquired a packet for mobility management, such as a packet for requesting registration of a home address and a care of address, which is called Binding Update Packet, from MN to MAP, or a packet directed to a home address of a MN, from the link layer unit 18, then the IP layer unit 13 supplies the packet to the mobility management unit 14. Furthermore, the IP layer unit 13 acquires a packet for mobility management, such as a response to the home address and care of address registration request, which is called binding update ACK packet, from MAP to MN, or a packet directed to a care of address of a MN, from the mobility management unit 14, and supplies the packet to the link layer unit 18.

If the IP layer unit 13 has acquired a packet concerning a search for a MAP from the link layer unit 18, then the IP layer unit 13 supplies it to the NMDP unit 15. Furthermore, the IP layer unit 13 acquires a packet concerning a search for a MAP from the NMDP unit 15, and supplies it to the link layer unit 18. As packets concerning a search for a MAP, there are a MAP search packet for searching for a MAP, a MAP notice packet returned in response to a MAP search packet, a MAP notice request packet for requesting return of a MAP notice packet, a neighbor MAP registration request packet for requesting registration in another MAP, and a neighbor MAP registration acknowledgement packet returned in response to a neighbor MAP registration request packet. Incidentally, the MAP search packet corresponds to a node search packet in claims. The MAP notice packet corresponds to a node notice packet in claims. The MAP notice request packet corresponds to a node notice request packet in claims. The neighbor MAP registration request packet corresponds to a node registration request packet in claims.

The mobility management unit 14 conducts mobility management. In other words, the mobility management unit 14 conducts processing concerning mobility management conducted by the MAP 1 in the HMIP scheme. The mobility management unit 14 is connected to the IP layer unit 13. Specifically, the mobility management unit 14 conducts creation and processing of packets required for the mobility management. For example, the mobility management unit 14 acquires a home address and a care of address of a MN from the binding update packet directed from a MN to a MAP acquired from the IP layer unit 13. The mobility management unit 14 conducts binding control for controlling the acquired home address and care of address of the MN in association with each other. The mobility management unit 14 creates a binding update ACK packet from a MAP to a MN in response to the binding update packet, and supplies it to the IP layer unit 13. In addition, the mobility management unit 14 conducts decapsulation or encapsulation of a packet directed to a MN. For example, the mobility management unit 14 encapsulates a packet directed to the home address of the MN and acquired from the IP layer unit 13, by using a care of address corresponding to the home address, and supplies the encapsulated packet to the IP layer unit 13.

The NMDP unit 15 conducts control on the search for a MAP. In other words, the NMDP unit 15 conducts processing concerning the search for a MAP performed by the MAP 1. The NMDP unit 15 is connected to the IP layer unit 13, the neighbor MAP table 16, and the second table 17. Specifically, the NMDP unit 15 conducts a processing and a creation of a packet concerning the search for a MAP. For example, from the MAP search packet, MAP notice packet, MAP notice request packet, neighbor MAP registration request packet, and neighbor MAP registration acknowledgement packet acquired from the IP layer unit 13, the NMDP unit 15 acquires information included in these packets.

The NMDP unit 15 creates a MAP search packet, a MAP notice packet, a MAP notice request packet, a neighbor MAP registration request packet, and a neighbor MAP registration acknowledgement packet by accessing the neighbor MAP table 16 and the second table 17, and supplies them to the IP layer unit 13. In other words, the NMDP unit 15 functions as a search packet creation unit configured to create a node search packet, a notice packet creation unit configured to create a node notice packet, a request packet creation unit configured to create a node notice request packet, a request packet creation unit configured to create a node registration request packet, and an acknowledgement packet creation unit configured to create a node registration acknowledgement packet.

In addition, the NMDP unit 15 conducts MAP detection, determination of inter-node information between the MAP and another MAP, and update of the neighbor MAP table 16 and the second table 17 on the basis of information acquired from a packet concerning a search for a MAP, or information stored in the neighbor MAP table 16 and the second table 17. In other words, the NMDP unit 15 functions as a detection unit configured to detect the service node, a determination unit configured to determine inter-node information between the node and another node, and an update unit configured to update the neighbor MAP table 16 and the second table 17.

The neighbor MAP table 16 is a node storage unit configured to store addresses of service nodes. As a general rule, the neighbor MAP table 16 stores information concerning a plurality of neighbor MAPs. The neighbor MAP table 16 stores the lifetime of information concerning the neighbor MAPS as well. The neighbor MAP table 16 is connected to the NMDP unit 15.

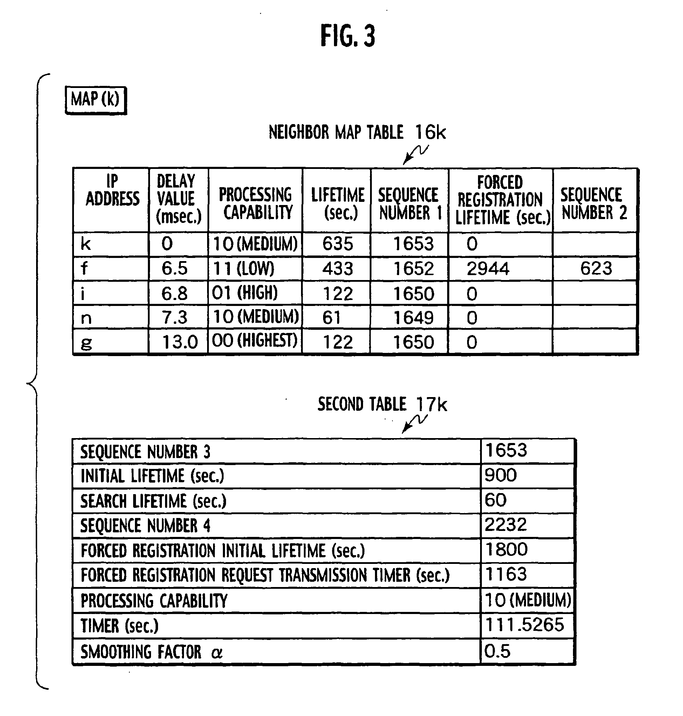

By taking a neighbor MAP table 16k of a MAP(k) 1k shown in Fig. 1 as an example, the neighbor MAP table 16 will now be described. As shown in Fig. 3, the neighbor MAP table 16k holds information concerning a predetermined fixed number of neighbor MAPs (hereafter referred to as maximum number of node entries). In the neighbor MAP table 16, the maximum number of node entries is set to " 5. " By thus setting the maximum number of node entries, pressure on the storage capacity in the MAP 1 can be prevented. In the neighbor MAP table 16k, theMAP(k) 1k itself is also included as a neighbor MAP. As a result, it is not necessary to conduct exception processing for removing the MAP(k) 1k itself, which has the neighbor MAP table 16k, from the neighbor MAP table 16k, resulting in convenience. In order to prevent pressure on the storage capacity in the MAP 1, however, it is also possible to conduct setting so as not to register the MAP(k) 1k itself, which has the neighbor MAP table 16k, in the neighbor MAP table 16k.

With respect to each neighbor MAP, the neighbor MAP table 16k stores an IP address, a delay value (in msec.), processing capability, a lifetime (in sec.), a sequence number 1, forced registration lifetime (in sec.), and a sequence number 2. In Fig. 3, a MAP symbol is used as the IP address in order to simplify the description. Hereafter, the IP address is represented by using a MAP symbol and a MN symbol.

As the delay value, a one-way transmission delay value between the MAP(k) 1k itself having the neighbor MAP table 16k and each neighbor MAP is used. In this way, the neighbor MAP table 16k stores the delay value, which is inter-node information and which can be used as remoteness/nearness decision information. As a general rule, the neighbor MAP table 16k stores information concerning neighbor MAPs according to a criterion "five neighbor MAPs having shortest delay values are stored in the order of increasing delay value." Thus, owing to the neighbor MAP table 16k, which stores IP addresses and node information of MAPs according to the predetermined criterion, the MAP can easily conduct the work of controlling, updating and using the stored information.

The processing capability is the processing capability of each neighbor MAP as a MAP. In this way, the neighbor MAP table 16k stores the processing capability, which is own-node information representing the characteristic of the MAP itself. The processing capability is represented by the height of processing capability divided into four steps, highest (represented by "00"), high (represented by "01"), medium (represented by "10"), and low (represented by "11"). The height of the processing capability of the MAP is judged on the basis of the processing speed in the MAP, the number of MNs using the MAP, and hardware specifications such as the storage capacity and the CPU speed of the MAP.

The lifetime is the lifetime of information concerning each neighbor MAP in the neighbor MAP table 16k. The lifetime is decremented by the NMDP unit 15 every second. If the lifetime arrives at 0 (sec.), then as a general rule the information concerning the neighbor MAP is erased from the neighbor MAP table 16k by the NMDP unit 15.

The forced registration lifetime is the lifetime for which information concerning each neighbor MAP can be forcibly registered in the neighbor MAP table 16k. Therefore, the neighbor MAP table 16k continues to store information concerning neighbor MAPS that are not 0 (sec.) in forced registration lifetime irrespective of the delay value and the lifetime. In other words, information concerning neighbor MAPs that are not 0 (sec.) in forced registration lifetime is not erased exceptionally by the NMDP unit 15 even if the lifetime becomes 0 (sec.) or the delay value becomes large. Incidentally, the forced registration lifetime is also decremented by the NMDP unit 15 every second. After the forced registration lifetime has arrived at 0 (sec.), the information concerning the neighbor MAP is not handled exceptionally. The forced registration lifetime is set to 0 (sec.) in initialization.

The sequence number 1 is a sequence number of a MAP notice packet that serves as a reference for updating the delay value, processing capability, and lifetime concerning each neighbor MAP. The sequence number 2 is a sequence number of a neighbor MAP registration request packet that serves as a reference for updating the forced registration lifetime concerning each neighbor MAP.

The second table 17 is a storage unit configured to store own-node information. Specifically, the second table 17 stores the own-node information concerning the MAP 1 itself, and information required for the MAP 1 to effect a search for a MAP or update the neighbor MAP table 16. The second table 17 is connected to the NMDP unit 15.

By taking the second table 17k of the MAP(k) 1k shown in Fig. 1 as an example, the second table 17 will now be described. As shown in Fig. 3, the second table 17k stores a sequence number 3, an initial lifetime (in sec.), a search lifetime (in sec.), a sequence number 4, a forced registration initial lifetime (in sec.), time of a forced registration request transmission timer (in sec.), processing capability, time in a timer (in sec.), and a smoothing factor $\alpha$.

The sequence number 3 is a sequence number of a MAP search packet last transmitted by the MAP(k) 1k. The sequence number 3 is incremented by the NMDP unit 15 when creating a MAP search packet. The initial lifetime is a lifetime that is set when updating the lifetime in the neighbor MAP table 16k. The search lifetime is time that becomes a reference for starting the search for a MAP. If the lifetime of the neighbor MAP table 16k arrives at the search lifetime in the second table 17k, then a search for a neighbor MAP is started by the NMDP unit 15.

The sequence number 4 is a sequence number of a neighbor MAP registration request packet last transmitted by the MAP(k) 1k. The sequence number 4 is incremented by the NMDP unit 15 when creating a neighbor MAP registration request packet. The forced registration initial lifetime is an initial value of the forced registration lifetime forcibly registered in neighbor MAP tables 16 in another MAP. The time of the forced registration request transmission timer is time that serves as a reference for starting a request for registration in another MAP. The time of the forced registration request transmission timer is decremented by the NMDP unit 15 every second. If the time of the forced registration request transmission timer has arrived at 0, then a request for registration in another MAP is started by the NMDP unit 15.

The processing capability is the processing capability of the MAP(k) 1k itself serving as a MAP. In the same way as the neighbor MAP table 16k, the processing capability is indicated by the height of the processing capability divided into four steps. The time of the timer is time of a timer used by the MAP(k) 1k to measure a delay value. In order to improve the precision of delay value measurement, it is desirable that the time of the timer is updated by the NMDP unit 15 by taking a msec. as the unit. The smoothing factor $\alpha$ is used to smooth a measured delay value and previous delay value when determining a delay value. As for the smoothing factor a, an arbitrary value in the range of 0 to 1 can be set. The smoothing factor $\alpha$ for the MAP(a) 1a to MAP(n) 1n is set to 0.5.

Referring back to Fig. 2, the link layer unit 18 conducts control of the data link level. The link layer unit 18 is connected to the IP layer unit 13 and the interface 19. The link layer unit 18 adds a header of data link level to data having an IP header acquired from the IP layer unit 13, and supplies resultant data to the interface 19. The link layer unit 18 removes a header of data link level from data acquired from the interface 19, and supplies resultant data to the IP layer unit 13.

The interface 19 is a communication unit configured to communicate with another node. The interface 19 communicates with another MAP, a MN or the HA. Specifically, the interface 19 transmits a packet concerning mobility management acquired from the link layer unit 18, a packet directed to a MN, and a packet concerning a search for a MAP, to another MAP or the MN. Furthermore, the interface 19 receives a packet concerning mobility management, a packet directed to a MN, and a packet concerning a search for a MAP, from another MAP, a MN or the HA. The interface 19 supplies the received packet to the link layer unit 18.

(Configuration of MN)

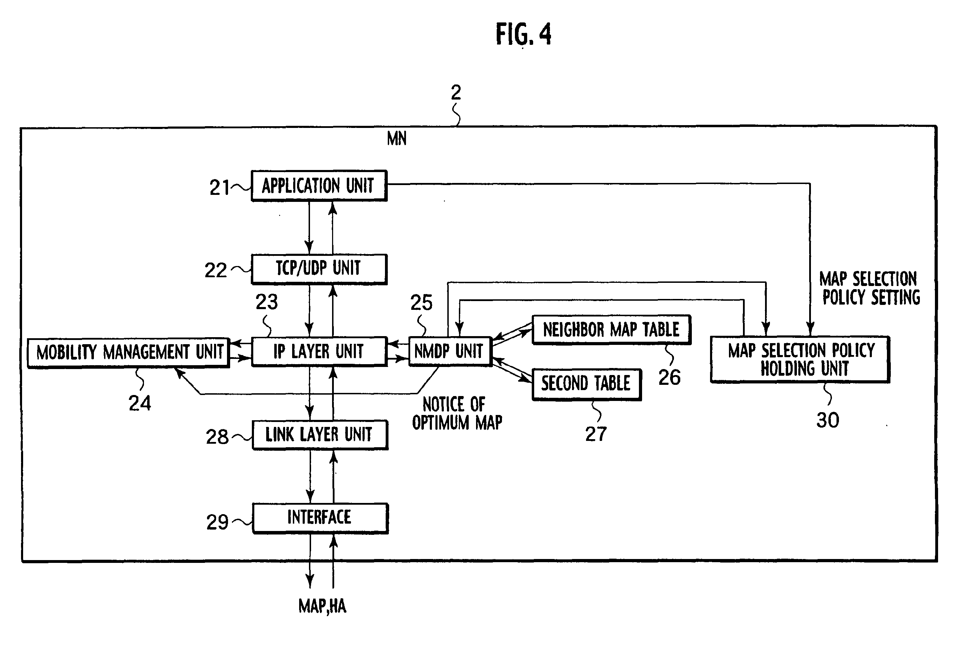

MN(a) 2a and MN(b) 2b each have a configuration similar to that of MN 2 shown in Fig. 4. As shown in Fig. 4, the MN 2 comprises an application unit 21, a TCP/UDP unit 22, an IP layer unit 23, a mobility management unit 24 , an NMDP unit 25 , a neighbor MAP table 26, a second table 27, a link layer unit 28, an interface 29, and a MAP selection policy holding unit 30.

The application unit 21 is connected to the MAP selection policy holding unit 30. The application unit 21 conducts the setting of a MAP selection policy. The MAP selection policy is a selection criterion for selecting a MAP to be used by the MN 2. The application unit 21 sets the MAP selection policy so that a MAP that can be most suitably used by the MN 2 may be selected. The MAP selection policy can be set freely according to the application and situation.

For example, the MAP selection policy can be determined with respect to parameters of the MAP, such as the reliability, processing capability, traffic volume, the number of nodes using the node, transmission power value, a degree of the remoteness/nearness (where the decision criterion for the degree of the remote/nearness differs depending upon the remoteness/nearness decision criterion), a delay value in packet transmission between the MAP and the MN 2, the number of hops between the MAP and the MN 2, the cost in packet transmission between the MAP and the MN 2, a link capacity between the MAP and the MN 2, and propagation path information between the MAP and the MN 2. The MAP selection policy can also be determined with respect to a single parameter. The MAP selection policy can also be determined by combining a plurality of parameters. The degrees of these parameters can be determined freely.

The application unit 21 stores the determined MAP selection policy in the MAP selection policy holding unit 30 and sets it. If the application unit 21 has newly determined a MAP selection policy, then the application unit 21 updates the MAP selection policy stored in the MAP selection policy holding unit 30, and re-sets it. The MAP selection policy may be set by the user or the system designer. Except for setting the MAP selection policy, the application unit 21 is substantially the same as the application unit 11 in the MAP 2 shown in Fig. 2.

The MAP selection policy holding unit 30 is a selection criterion holding unit configured to hold a selection criterion for selecting a service node to be used by a MN. The MAP selection policy holding unit 30 holds a MAP selection policy that serves as a selection criterion for selecting a MAP to be used by the MN 2. The MAP selection policy holding unit 30 is connected to the application unit 21 and the NMDP unit 25. The MAP selection policy holding unit 30 holds a MAP selection policy set by the application unit 21. Incidentally, the MAP selection policy holding unit 30 may previously hold a MAP selection policy set by the user or the system designer.

The MAP selection policy holding unit 30 of MN(a) 2a and MN(b) 2b each hold a MAP selection policy represented as "a MAP located nearest and included in MAPS having high processing capability of at least "01". " In the present embodiment, a decision criterion represented as "a smaller delay value in packet transmission between nodes indicates a shorter distance." Therefore, "a node located nearest" means "a node having a minimum delay value in packet transmission between nodes."

The TCP/UDP unit 22 is substantially the same as the TCP/UDP unit 12. The IP layer unit 23 acquires a packet for mobility management, such as a binding update ACK packet from MAP to MN, and a response to a registration request for the home address and an address of a neighbor MAP to be used, which is called binding update ACK packet, from HA to MN, or a packet directed to a care of address of the MN, from the link layer unit 28, and supplies the packet to the mobility management unit 24. The IP layer unit 23 acquires a packet for mobility management, such as a binding update packet from MN to MAP, and a packet for requesting registration of a home address and an address of a neighbor MAP to be used, which is called binding update packet, from MN to HA, or a packet directed to the MN, from the mobility management unit 24, and supplies the packet to the link layer unit 28.

The IP layer unit 23 acquires a packet concerning a search for a MAP, such as a MAP notice packet, from the link layer unit 28, and supplies the packet to the MNDP unit 25. The IP layer unit 23 acquires a packet concerning a search for a MAP, such as a MAP search packet, from the NMDP unit 25, and supplies the packet to the link layer unit 28. Except for these points, the IP layer unit 23 is substantially the same as the IP layer unit 13 in the MAP 2 shown in Fig. 2.

The mobility management unit 24 conducts mobility management. In other words, the mobility management unit 24 conducts processing concerning mobility management conducted by the MN 2 in the HMIP scheme. The mobility management unit 24 is connected to the IP layer unit 23 and the NMDP unit 25. Specifically, the mobility management unit 24 conducts processing and creation of packets required for the mobility management. For example, the mobility management unit 24 recognizes completion of registration of the home address and care of address in a MAP on the basis of a binding update ACK packet sent from a MAP or the HA and acquired from the IP layer unit 23.

The mobility management unit 24 creates a binding update packet to be supplied to a MAP or the HA, and supplies it to the IP layer unit 23. First, the mobility management unit 24 receives a notice of an address of a neighbor MAP that is the most suitable for use from the NMDP unit 25. And the mobility management unit 24 creates a binding update packet for registering the home address and care of address in the neighbor MAP notified by the NMDP unit 25. The mobility management unit 24 creates a binding update packet for registering the home address and an address of a neighbor MAP notified by the NMDP unit 25 in the HA. In addition, the mobility management unit 24 conducts decapsulation or encapsulation on a packet directed to a MN. For example, the mobility management unit 24 decapsulates a packet directed to the care of address of the MN 2 and acquired from the IP layer unit 23, and supplies the decapsulated packet to the IP layer unit 23.

The NMDP unit 25 conducts control on the search for a MAP. In other words, the NMDP unit 25 conducts processing concerning the search for a MAP performed by the MN 2. The NMDP unit 25 is connected to the IP layer unit 23, the mobility management unit 24, the neighbor MAP table 26, the second table 27, and the MAP selection policy holding unit 30.

Specifically, the NMDP unit 25 conducts processing and creation of a packet concerning the search for a MAP. For example, from the MAP notice packet acquired from the IP layer unit 23, the NMDP unit 25 acquires information included in the packet. The NMDP unit 25 creates a MAP search packet by accessing the neighbor MAP table 26 and the second table 27. Further, the NMDP unit 25 supplies the created MAP search packet to the IP layer unit 23. In other words, the NMDP unit 25 functions as a search packet creation unit.

The NMDP unit 25 conducts MAP detection, determination of inter-node information between the MN 2 and the MAP, and update of the neighbor MAP table 26 and the second table 27 on the basis of information acquired from a packet concerning a search for a MAP, or information stored in the neighbor MAP table 26 and the second table 27. In other words, the NMDP unit 25 functions as a detection unit configured to detect the service node, a determination unit configured to determine inter-node information between the MAP and the MN 2, and an update unit configured to update the neighbor MAP table 26 and the second table 27.

In addition, the NMDP unit 25 also functions as a selection unit configured to select a service node to be used. The NMDP unit 25 selects a MAP that is the optimum for the use of the NM 2. The NMDP unit 25 accesses the neighbor MAP table 26 and selects an optimum neighbor MAP on the basis of the MAP selection policy held in the MAP selection policy holding unit 30. In other words, the NMDP unit 25 selects an optimum neighbor MAP by collating the MAP selection policy held in the MAP selection policy holding unit 30 with the information stored in the neighbor MAP table 26. The NMDP unit 25 notifies the mobility management unit 24 of an address of the selected neighbor MAP.

The neighbor MAP table 26 is a node storage unit configured to store node addresses of service nodes. The neighbor MAP table 26 stores information concerning a plurality of neighbor MAPs. The neighbor MAP table 26 stores the lifetime of information concerning the neighbor MAPs as well. The neighbor MAP table 26 is connected to the NMDP unit 25.

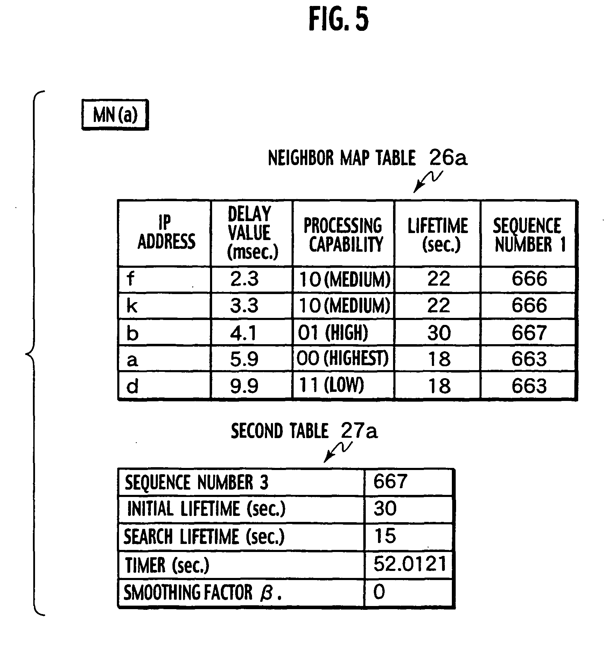

By taking a neighbor MAP table 26a of the MN(a) 2a shown in Fig. 1 as an example, the neighbor MAP table 26 will now be described. As shown in Fig. 5, the neighbor MAP table 26a stores information concerning neighbor MAPs corresponding to the maximum number of node entries. In the neighbor MAP table 26, the maximum number of node entries is set to "5." By thus setting the maximum number of node entries, pressure on the storage capacity in the MN 2 can be prevented.

With respect to each neighbor MAP, the neighbor MAP table 26a stores an IP address, a delay value (in msec.), processing capability, a lifetime (in sec.), and a sequence number 1. As the delay value, a one-way transmission delay value between the MN(a) 2a and each neighbor MAP is used. In this way, the neighbor MAP table 26a stores the delay value, which is inter-node information and which can be used as remoteness/nearness decision information. As a general rule, the neighbor MAP table 26a stores information concerning neighbor MAPs according to a criterion "five neighbor MAPs having shortest delay values are stored in the order of increasing delay value. " Thus, owing to the neighbor MAP table 26a, which stores IP addresses and node information of MAPs according to the predetermined criterion, the MN can easily conduct the work of controlling, updating and using the stored information.

The processing capability, lifetime, and the sequence number 1 are substantially the same as those in the neighbor MAP table 16k of the MAP(k) 1k shown in Fig. 3. If the lifetime in the neighbor MAP table 26a of the MN arrives at 0 (sec.), however, then information concerning the neighbor MAP is erased from the neighbor MAP table 26a without exception by the NMDP unit 25.

The second table 27 is a storage unit configured to store information required for the MN 2 to effect a search for a MAP and update the neighbor MAP table 26. The second table 27 is connected to the NMDP unit 25. By taking a second table 27a of the MN(a) 2a shown in Fig. 1 as an example, the second table 27 will now be described. As shown in Fig. 5, the second table 27a stores a sequence number 3, an initial lifetime (in sec.), a search lifetime (in sec.), time in a timer (in sec.), and a smoothing factor $\beta$. These are substantially the same as those in the second table 17k of the MAP(k) 1k shown in Fig. 3.

In the second table 27a in the MN, however, the initial lifetime is set so as to become shorter as compared with the second table 17k in the MAP. It is desirable to also set the search lifetime to a shorter value accordingly. As a result, the MN 2 can effect a search for a MAP with high frequencies. Therefore, the MN 2 can update the information concerning the neighbor MAPs, which changes according to the movement, with high frequencies. As a result, the MN 2 can suitably grasp information concerning the MAPs according to the movement. In addition, it is desirable to set the smoothing factor $\beta$ of the second table 27a in the MN so as to become smaller than the smoothing factor $\alpha$ of the second table 17k in the MAP. As a result, the MN2 can suitably grasp the delay value between the MN2 and a neighbor MAP, which changes according to the movement. The smoothing factor of the MN(a) 2a and MN(b) 2b is set to 0.

The MN 2 is not requested to conduct registration by a MAP. Therefore, the neighbor MAP table 27a does not have the fields of the forced registration lifetime and the sequence number 2 of the neighbor MAP table 16k shown in Fig. 3. The second table 27b does not have the fields of the sequence number 4, the forced registration initial lifetime, and the time of the forced registration request transmission timer of the second table 17k shown in Fig. 3. Since the MN 2 need not inform a MAP or another MN of the processing capability of itself, the second table 27b does not have the field of the processing capability.

Referring back to Fig. 4, the link layer unit 28 is substantially the same as the link layer unit 18 of the MAP 1 shown in Fig. 2. The interface 29 is a communication unit configured to communicate with another node. The interface 29 communicates with a MAP or the HA. Except for this point, the interface 19 is substantially the same as the interface 19 of the MAP 1.

[Method for searching for node]

A method for searching for a service node (MAP) in the mobile communication system will now be described.

(Search for MAP effected by MAP)

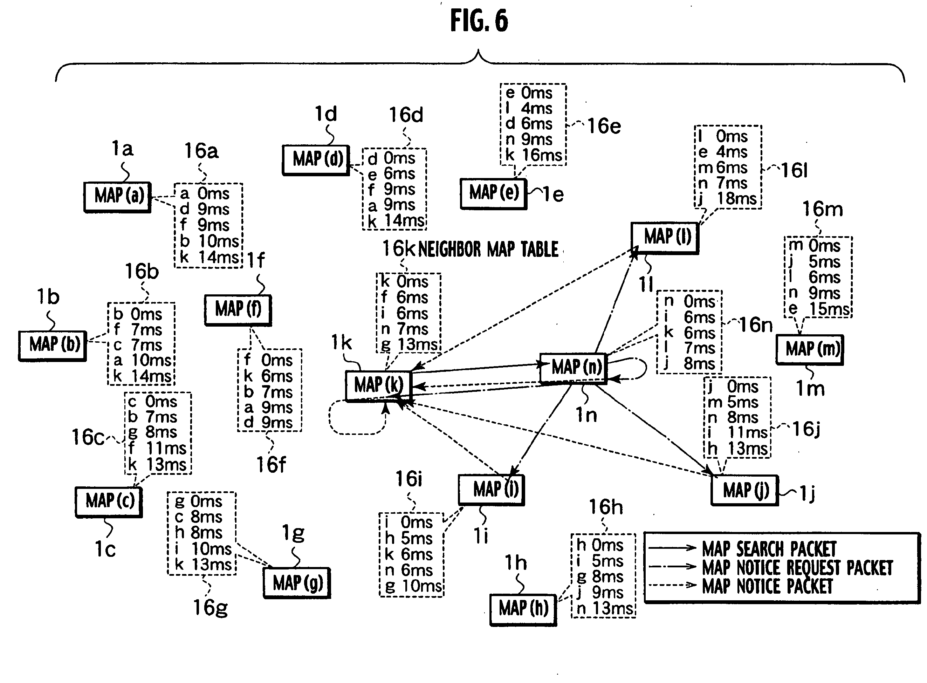

A search for a MAP effected by a MAP will now be described with reference to Figs. 6 to 11 and Fig. 3. In Fig. 6, the MN(a) 2a and MN(b) 2b included in the mobile communication system shown in Fig. 1 are omitted in the illustration. In Fig. 6, neighbor MAP tables 16a to 16n respectively of the MAP(a) 1a to MAP(n) In are shown together with the MAP (a) 1a to MAP(n) 1n. For brevity of description, however, only IP addresses stored in the neighbor MAP tables 16a to 16n, and delay values between the MAP(a) 1a to MAP(n) 1n themselves respectively having the neighbor MAP tables 16a to 16n and neighbor MAPS are shown. As for the delay values, decimals are omitted. As shown in Fig. 6, the neighbor MAP tables 16a to 16n are formed in the MAP(a) 1a to MAP(n) 1n, respectively.

A search for a MAP will now be described by taking the case where the neighbor MAP table 16k of the MAP (k) 1k is in a state shown in Fig. 3, as an example. The search lifetime in the second table 17k is set to 60 (sec.). The current lifetime for the MAP(n) In registered in the neighbor MAP table 16k as a neighbor MAP is 61 (sec.) as shown in Fig. 3. The lifetime is decremented every second. One second later, therefore, the lifetime for the MAP(n) 1n in the neighbor MAP table 16k arrives at 60 (sec.), which is the search lifetime, and the lifetime coincides with the search lifetime. Thereupon, the MAP(k) 1k starts a search for a MAP with respect to the MAP(n) 1n.

1. Transmission and reception of MAP search packet, MAP notice request packet, and MAP notice packet

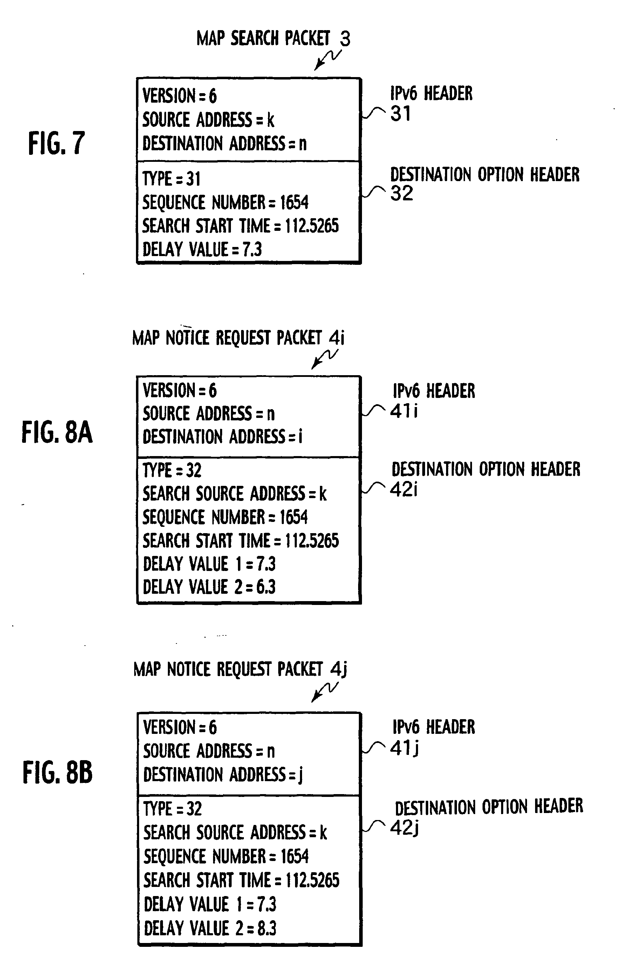

First, as shown in Fig. 6, the MAP(k) 1k transmits a MAP search packet to the MAP(n) 1n, and the MAP(n) 1n receives it as represented by a solid line arrow in Fig. 6. In this case, therefore, the MAP(k) 1k becomes a search node, and the MAP(n) In becomes a search packet reception node. Specifically, the NMDP unit 15 in the MAP(k) 1k creates a MAP search packet 3 shown in Fig. 7, and the interface 19 transmits it.

As shown in Fig. 7, the MAP search packet 3 includes an IPv6 header 31 and a destination option header 32. A version for indicating the version of IP, a source address for indicating the transmission source of the MAP search packet 3, and a destination address for indicating the destination of the MAP search packet 3 are stored in the IPv6 header 31. Although only information relating to the present invention will now be described, various other kinds of information are also stored in the IPv6 header.

The destination option header 32 is one of the extended headers in the option of the IPv6. A type for indicating the kind of the packet, a sequence number for controlling the MAP search packet 3, search start time for indicating the time at which a search for a MAP is started, and a delay value in packet transmission between the search node and the search packet reception node are stored in the destination option header 32.

As described above, the type indicates the packet kind. By using the type, it is possible to indicate and determine whether a packet is a MAP search packet, a MAP notice request packet, a MAP notice packet, a neighbor MAP registration request packet, or a neighbor MAP registration acknowledgement packet. In the present embodiment, a type "31" indicates the MAP search packet 3. As the search start time, the time at which the MAP search packet 3 is transmitted is used.

The NMDP unit 15 in the MAP(k) 1k sets the source address in the IPv6 header 31 to the IP address "k" of the MAP(k) 1k, and sets the destination address in the IPv6 header 31 to the IP address "n" of the MAP(n) 1n. The NMDP unit 15 in the MAP(k) 1k sets the type in the destination option header 32 to "31". The NMDP unit 15 in the MAP(k) 1k sets the sequence number in the destination header 32 to "1654", which is obtained by adding 1 to the value "1653" of the sequence number 3 in the second table 17k shown in Fig. 3. At this time, the NMDP unit 15 in the MAP(k) 1k also updates the value of the sequence number 3 in the second table 17k to set it to "1654."

The NMDP unit 15 in the MAP (k) 1k copies the time of creation of the MAP search packet 3, 112.5265 (sec.) in the timer of the second table 17k, and sets the search start time in the destination option header 32 to the copied time. The reason why the time of creation becomes 112.5265 (sec.) is that the search for a MAP is started one second after the state 111.5265 (sec.) as shown in Fig. 3. In addition, the NMDP unit 15 in the MAP (k) 1k sets the delay value in the destination option header 32 to a delay value between the MAP(k) 1k serving as the search node and the MAP (n) 1n serving as the search packet reception node. Specifically, the NMDP unit 15 in the MAP (k) 1k copies a delay value 7.3 (msec.) between it and the MAP(n) 1n in the neighbor MAP table 16k, and sets the delay value in the destination option header 32 to the copied delay value. In this way, the NMDP unit 15 in the MAP (k) 1k creates the MAP search packet 3, and functions as the search packet creation unit.

Upon receiving the MAP search packet 3, the MAP(n) 1n transmits a MAP notice request packet to each of the neighbor MAPS stored in the neighbor MAP table 16n in the MAP(n) 1n, i.e., the MAP(n) 1n, MAP(i) 1i, MAP(k) 1k, MAP(l) 1l and MAP(j) 1j as represented by a dot-dash line in Fig. 6. In this way, the MAP(n) 1n, which has become the search packet reception node, transmits the MAP notice request packet to the MAP(i) 1i to MAP(1) 1l other than the MAP(n) 1n itself. Therefore, the MAP(i) 1i to MAP(l) 1l become peripheral nodes.

As described above, the MAP(n) 1n transmits a MAP notice request packet uniformly to all neighbor MAPS stored in the neighbor MAP table 16n. As a result, operation of the MAP(n) 1n serving as the search packet reception node can be simplified. In this case, however, the MAP(n) 1n also transmits the MAP notice request packet to the MAP (n) 1n itself and the MAP(k) 1k, which is the transmission source of the MAP search packet 3. Therefore, the MAP(n) 1n may exceptionally remove the MAP(k) 1k serving as the search node, and the MAP(n) 1n serving as the search packet reception node, from destinations of the MAP notice request packet. As a result, it is possible to prevent extra packet transmission.

Specifically, the NMDP unit 15 in the MAP(n) 1n creates a MAP notice request packet, and the interface 19 transmits the MAP notice request packet. Hereafter, this operation will be described by taking the transmission of a MAP notice request packet to each of MAP(i) 1i and MAP(j) 1j as an example. Fig. 8A shows a MAP notice request packet 4i to be transmitted to the MAP(i) 1i, and Fig. 8B shows a MAP notice request packet 4j to be transmitted to the MAP(j) 1j.

As shown in Figs. 8A and 8B, the MAP notice request packets 4i and 4j include IPv6 headers 41i and 41j , and destination option headers 42i and 42j, respectively. Versions for indicating the IP version, source addresses for indicating sources of the MAP notice request packets 4i and 4j, and destination addresses for indicating destinations of the MAP notice request packets 4i and 4j are stored in the IPv6 headers 41i and 41j, respectively. A type, a search source address for indicating the search node, a sequence number for controlling the MAP notice request packet 4i or 4j, search start time, a delay value 1 in packet transmission between the search node and the search packet reception node, and a delay value 2 in packet transmission between the search packet reception node and a peripheral node are stored in each of the destination option headers 42i and 42j.

As shown in Fig. 8A, the NMDP unit 15 in the MAP(n) 1n sets the source address in the IPv6 header 41i to the IP address "n" of the MAP(n) 1n, and sets the destination address in the IPv6 header 41i to the IP address "i" of the MAP(i) 1i. The NMDP unit 15 in the MAP(n) 1n sets the type in the destination option header 42i to "32." In the present embodiment the type "32" indicates a MAP notice request packet. The NMDP unit 15 in the MAP(n) 1n copies the IP address "k" of the MAP(k) 1k serving as the source address in the received MAP search packet 3 shown in Fig. 7, and sets the search source address in the destination option header 42i to the copied IP address "k."

The NMDP unit 15 in the MAP(n) 1n copies the value "1654" of the sequence number and the value 112.5265 (sec.) of the search start time in the received MAP search packet 3 shown in Fig. 7, and sets the sequence number and the search start time in the destination option header 42i to the copied values, respectively. In addition, the NMDP unit 15 in the MAP(n) 1n sets the delay value 1 in the destination option header 42i to the delay value between the MAP (k) 1k serving as the search node and the MAP (n) 1n serving as the search packet reception node. Specifically, the NMDP unit 15 in the MAP(n) 1n copies the delay value 7.3 (msec.) of the MAP search packet 3 shown in Fig. 7, and sets the delay value 1 in the destination option header 42i to the copied delay value.

In addition, the NMDP unit 15 in the MAP(n) 1n sets the delay value 2 in the destination option header 42i to a delay value between the MAP(n) 1n serving as the search packet reception node and the MAP(i) 1i serving as a peripheral node. The NMDP unit 15 in the MAP(n) 1n copies the delay value between the MAP(n) In and the MAP(i) 1i in the neighbor MAP table 16n shown in Fig. 6, and sets the delay value 2 in the destination option header 42i to the copied delay value. In Fig. 6, decimals are omitted. However, the delay value between the MAP(n) 1n and the MAP(i) 1i is actually 6.3 (msec.). In this way, the NMDP unit 15 in the MAP(n) 1n creates the MAP notice request packet 4i, and functions as the request packet creation unit.

In the same way, the NMDP unit 15 in the MAP(n) 1n creates the MAP notice request packet 4j to be sent to the MAP(j) 1j shown in Fig. 8B. The NMDP unit 15 in the MAP(n) 1n sets the destination address in the IPv6 header 41 j to the IP address "j" of the MAP(j) 1j. The NMDP unit 15 in the MAP(n) 1n copies the delay value between the MAP(n) 1n and the MAP(j) 1j in the neighbor MAP table 16n shown in Fig. 6, and sets the delay value 2 in the destination option header 42j to the copied delay value. In Fig. 6, decimals are omitted. However, the delay value between the MAP(n) 1n and the MAP(j) 1j is actually 8.3 (msec.).

Subsequently, upon receiving the MAP notice request packet, the MAP(i) 1i to MAP(l) 11 and the MAP(n) 1n each transmit a MAP notice packet to the MAP(k) 1k as represented by a dot line arrow in Fig. 6. In this way, the MAP (i) 1i to MAP(l) 11 serving as the peripheral nodes and the MAP(n) 1n serving as the search packet reception node each return a MAP notice packet to the MAP(k) 1k serving as the search node.

As described above, the MAP(n) 1n transmits a MAP notice request packet uniformly to all neighbor MAPS stored in the neighbor MAP table 16n. Therefore, the MAP(k) 1k serving as the search node also receives the MAP notice request packet. As a result, the MAP(k) 1k also transmits a MAP notice packet.

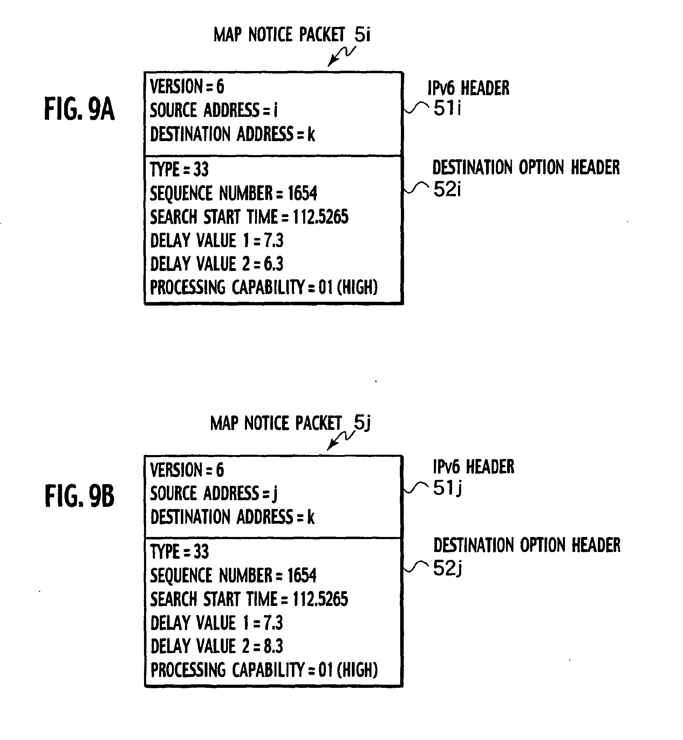

Specifically, the NMDP unit 15 in each of MAP (i) 1i to MAP (l) 11 and MAP(n) 1n creates a MAP notice packet, and the interface 19 transmits the MAP notice packet. Hereafter, this operation will be described by taking the return of a MAP notice packet from each of MAP(i) 1i and MAP (j) 1j as an example. Fig. 9A shows a MAP notice packet 5i to be returned from the MAP(i) 1i, and Fig. 9B shows a MAP notice packet 5j to be returned from the MAP(j) 1j.

As shown in Figs. 9A and 9B, the MAP notice packets 5i and 5j include IPv6 headers 51i and 51j , and destination option headers 52i and 52j, respectively. Versions for indicating the IP version, source addresses for indicating sources of the MAP notice packets 5i and 5j, and destination addresses for indicating destinations of the MAP notice packets 5i and 5j are stored in the IPv6 headers 51i and 51j, respectively. A type, a sequence number for controlling the MAP notice packet 5i or 5j, search start time, a delay value 1 in packet transmission between the search node and the search packet reception node, a delay value 2 in packet transmission between the search packet reception node and a peripheral node, and processing capability of the peripheral node are stored in each of the destination option headers 52i and 52j.

As shown in Fig. 9A, the NMDP unit 15 in the MAP(i) 1i sets the source address in the IPv6 header 51i to the IP address "i" of the MAP(i) 1i. The NMDP unit 15 in the MAP(i) 1i copies the IP address "k" of the MAP(k) 1k serving as the search source address in the received MAP notice request packet 4i shown in Fig. 8A, and sets the destination address in the IPv6 header 51i to the copied IP address "k." The NMDP unit 15 in the MAP(i) 1i sets the type in the destination option header 52i to "33." In the present embodiment the type "33" indicates a MAP notice packet.

The NMDP unit 15 in the MAP(i) 1i copies the value "1654" of the sequence number and the value 112. 5265 (sec.) of the search start time in the received MAP notice request packet 4i shown in Fig. 8A, and sets the sequence number and the search start time in the destination option header 52i to the copied values, respectively. The NMDP unit 15 in the MAP(i) 1i sets the delay value 1 in the destination option header 52i to the delay value between the MAP (k) 1k serving as the search node and the MAP (n) 1n serving as the search packet reception node. Specifically, the NMDP unit 15 in the MAP(n) 1n copies the delay value 7.3 (msec.) of the MAP notice request packet 4i shown in Fig. 8A, and sets the delay value 1 in the destination option header 52i to the copied delay value. The NMDP unit 15 in the MAP(i) 1i sets the delay value 2 in the destination option header 52i to a delay value between the MAP(n) 1n serving as the search packet reception node and the MAP(i) 1i serving as a peripheral node. The NMDP unit 15 in the MAP(i) 1i copies the delay value 2, "6.3 (msec.) in the MAP notice request packet 4i shown in Fig. 8A, and sets the delay value 2 in the destination option header 52i to the copied delay value.

In addition, the NMDP unit 15 in the MAP(i) 1i sets the processing capability in the destination option header 52i to the processing capability of the MAP(i) 1i itself serving as a peripheral node. The NMDP unit 15 in the MAP(i) 1i copies the processing capability in the second table of the MAP(i) 1i, and sets the processing capability in the destination option header 52i to the copied processing capability. The processing capability of the MAP(i) 1i is "01" (high). In this way, the NMDP unit 15 in the MAP(i) 1i creates the MAP notice packet 5i, and functions as the notice packet creation unit.

In the same way, the NMDP unit 15 in the MAP(j) 1j creates the MAP notice packet 5j to be returned from the MAP(j) 1j shown in Fig. 9B. The NMDP unit 15 in the MAP(j) 1j sets the destination address in the IPv6 header 51 j to the IP address "j" of the MAP(j) 1j. The NMDP unit 15 in the MAP(j) 1j copies the delay value 2, "8.3 (msec.)" in the MAP notice request packet 4j shown in Fig. 8B, and sets the delay value 2 in the destination option header 52j to the copied delay value. The NMDP unit 15 in the MAP(j) 1j copies the processing capability in the second table of the MAP(j) 1j, and sets the processing capability in the destination option header 52j to the copied processing capability. The processing capability of the MAP(j) 1j is "01" (high).

2. Inter-node information determination, MAP detection, and neighbor MAP table update

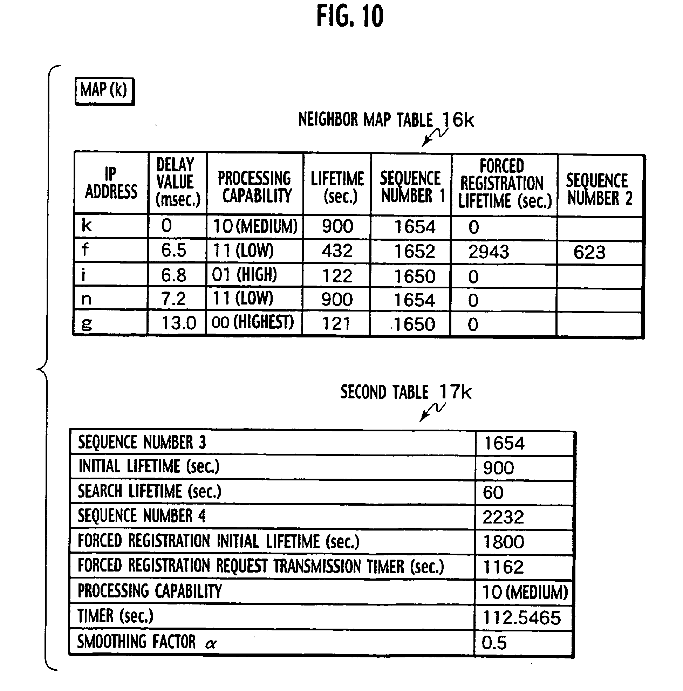

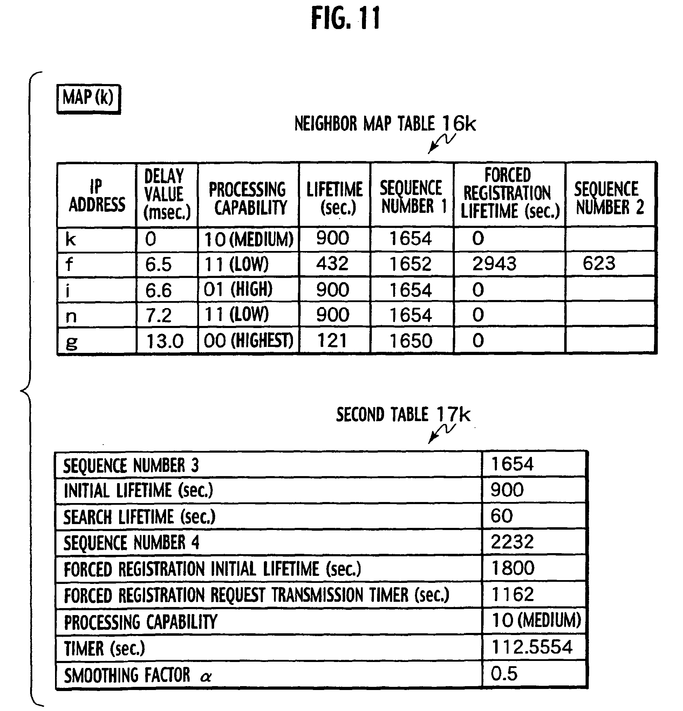

Upon receiving the MAP notice packet, the MAP(k) 1k serving as the search node conducts inter-node information determination, MAP detection, and neighbor MAP table update on the basis of the returned MAP notice packet. Hereafter, this operation will be described by taking MAP notice packets returned from the MAP(i) 1i and MAP(j) 1j as an example. Fig. 10 shows states of the neighbor MAP table 16k and the second table 17k at the time when the MAP (k) 1k has received the MAP notice packet 5i returned from the MAP(i) 1i. Fig. 11 shows states of the neighbor MAP table 16k and the second table 17k at the time when the MAP(k) 1k has received the MAP notice packet 5j returned from the MAP(j) 1j. In the neighbor MAP table 16k and the second table 17k shown in Figs. 10 and 11, some items have already been updated, as compared with the state immediately preceding the start of the search for a MAP shown in Fig. 3.

First, the case where the interface 19 in the MAP(k) 1k has received the MAP notice packet 5i returned from the MAP(i) 1i will now be described. Upon receiving the MAP notice packet 5i, the MAP(k) 1k serving as the search node first measures a delay value between the MAP(k) 1k serving as the search node and the MAP(i) 1i serving as a peripheral node. Specifically, the NMDP unit 15 in the MAP(k) 1k refers to the time of the timer in the second table 17k (Fig. 10) at the time when the MAP notice packet 5i has been received, and thereby acquires the arrival time 112.5465 (sec.) of the MAP notice packet 5i. Subsequently, the NMDP unit 15 in the MAP(k) 1k acquires the search start time 112.5265 (sec.), the delay value 1 between the search node and the search packet reception node, "7.3 (msec.)", and the delay value 2 between the search packet reception node and the peripheral node, "6.3 (msec.)" from the received MAP notice packet 5i (Fig. 9A).

Further, the NMDP unit 15 in the MAP(k) 1k conducts a calculation of subtracting the search start time, the delay value 1 and the delay value 2 from the arrival time, and thereby obtains the delay value between the MAP(k) 1k and the MAP(i) 1i The calculation result becomes 112.5465- (112.5265 + 0 . 0073 + 0.0063) = 0.0064. In this way, the delay value between the MAP(k) 1k and the MAP(i) 1i newly measured in the MAP(k) 1k becomes 0.0064 (sec.), i.e., 6.4 (msec.).

Subsequently, the NMDP unit 15 in the MAP(k) 1k conducts a retrieval to determine whether the source address "i" in the MAP notice packet 5i (Fig. 9A) is included in the IP addresses in the neighbor MAP table 16k (Fig. 10). If the source address "i" in the newly received MAP notice packet 5i exists in the neighbor MAP table 16k, then the NMDP unit 15 in the MAP(k) 1k judges the MAP(i) 1i serving as the transmission source of the MAP notice packet 5i to be an already detected MAP. In this case, therefore, the NMDP unit 15 in the MAP(k) 1k judges that the MAP notice packet 5i should be used to update the information concerning the MAP(i) 1i already registered as a neighbor MAP. In the case of Fig. 10, the source address "i" is included in the IP addresses in the neighbor MAP table 16k. Therefore, the NMDP unit 15 in the MAP(k) 1k judges that the MAP notice packet 5i should be used to update the information concerning the MAP(i) 1i.

Subsequently, the NMDP unit 15 in the MAP(k) 1k determines whether update of existing information concerning the MAP(i) 1i in the neighbor MAP table 16k based on the received MAP notice packet 5i should be executed. Specifically, the NMDP unit 15 in the MAP(k) 1k first compares the sequence number "1654" in the received MAP notice packet 5i with the sequence number 1 "1650" of the MAP(i) 1i in the neighbor MAP table 16k (Fig. 10) at the time when the MAP notice packet 5i is received. If the sequence number in the MAP notice packet 5i is higher, then the NMDP unit 15 in the MAP(k) 1k judges that the information based on the MAP notice packet 5i is the latest information and update of the information should be executed. In the case of Fig. 10, the sequence number in the MAP notice packet 5i is higher. Therefore, the NMDP unit 15 in the MAP(k) 1k judges that update of the information should be executed.

On the other hand, in some cases, a MAP notice packet corresponding to a MAP search packet transmitted before a MAP notice packet corresponding to a MAP search packet used when updating the neighbor MAP table 16k the last time, arrives at the MAP(k) 1k late for some reason. If the sequence number in the MAP notice packet 5i is lower than the sequence number 1 for the MAP(i) 1i in the neighbor MAP table 16k, therefore, then there is a possibility that information included in the MAP notice packet 5i is not the latest information or suitable information. In this case, therefore, the NMDP unit 15 in the MAP(k) 1k judges that update of the information should not be executed.

Subsequently, the NMDP unit 15 in the MAP(k) 1k executes update of information concerning the MAP(i) 1i in the neighbor MAP table 16k. First, the NMDP unit 15 in the MAP(k) 1k conducts smoothing on measured delay values. Specifically, the NMDP unit 15 in the MAP(k) 1k accesses the neighbor MAP table 16k and the second table at the time of the reception of the MAP notice packet 5i (Fig. 10), and thereby acquires an existing delay value "6.8 (msec.)" and an existing smoothing factor $\alpha$ "0.5" for the MAP(i) 1i. Further, the NMDP unit 15 in the MAP(k) 1k substitutes the measured delay values, and the existing delay value and smoothing factor $\alpha$ in the following expression (1), and thereby smoothes the delay value. The result of substitution is represented by expression (2).

$$\text{Existing delay value} \times \alpha + \text{measured delay value} \times (1 - \alpha) \quad (1)$$

$$6.8 \times 0.5 + 6.4 \times (1 - 0.5) = 6.6 \quad (2)$$

In this way, the smoothed delay value becomes 6.6 (msec.) . The NMDP unit 15 in the MAP (k) 1k thus functions as the determination unit configured to determine inter-node information by measuring and smoothing the delay value between the MAP(k) 1k serving as the search node and the MAP(i) 1i serving as the peripheral node, thereby determining a delay value. Incidentally, smoothing of the delay value need not necessarily be conducted.

Subsequently, the NMDP unit 15 in the MAP(k) 1k acquires the processing capability "01" (high) and the sequence number "1654" from the MAP notice packet 5i (Fig. 9A). The NMDP unit 15 in the MAP(k) 1k acquires the initial lifetime 900 (sec.) from the second table 17k (Fig. 10). The NMDP unit 15 in the MAP(k) 1k conducts updating so as to have the latest information concerning the MAP(i) 1i in the neighbor MAP table 16k (Fig. 10) by replacing the existing delay value 6.8 (msec.) with the determined delay value 6.6 (msec.), replacing the existing processing capability "01" (high) with the acquired processing capability "01" (high), replacing the existing lifetime 122 (sec.) with the acquired initial lifetime 900 (sec.), and replacing the existing sequence number 1 "1650" with the acquired sequence number "1654."

As a result of such an updating operation, the information concerning the MAP(i) 1i in the neighbor MAP table 16k becomes the latest information concerning the MAP(i) 1i in the neighbor MAP table 16k shown in Fig. 11. In this way, the NMDP unit 15 in the MAP(k) 1k updates the neighbor MAP table 16k, and functions as the update unit.

The case where the interface 19 in the MAP(k) 1k has received the MAP notice packet 5j returned from the MAP(j) 1j will now be described. Upon receiving the MAP notice packet 5j, the MAP(k) 1k serving as the search node first measures a delay value between the MAP (k) 1k serving as the search node and the MAP(j) 1j serving as a peripheral node. Specifically, the NMDP unit 15 in the MAP(k) 1k refers to the time of the timer in the second table 17k (Fig. 11) at the time when the MAP notice packet 5j has been received, and thereby acquires the arrival time 112.5554 (sec.) of the MAP notice packet 5j. Subsequently, the NMDP unit 15 in the MAP(k) 1k acquires the search start time 112.5265 (sec.), the delay value 1 between the search node and the search packet reception node, "7.3 (msec.)", and the delay value 2 between the search packet reception node and the peripheral node, "8.3 (msec.)" from the received MAP notice packet 5j (Fig. 9B).

Further, the NMDP unit 15 in the MAP(k) 1k conducts a calculation in the same way as the MAP notice packet 5i, and thereby obtains the delay value between the MAP(k) 1k and MAP (j) 1j. The calculation result becomes 112.5554 - (112.5265 + 0.0073 + 0.0083) = 0.0133. In this way, the delay value between the MAP(k) 1k and the MAP(j) 1j newly measured in the MAP(k) 1k becomes 0.0133 (sec.), i.e., 13.3 (msec.).

Subsequently, the NMDP unit 15 in the MAP(k) 1k conducts a retrieval to determine whether the source address "j" in the MAP notice packet 5j (Fig. 9B) is included in the IP addresses in the neighbor MAP table 16k (Fig. 11). If the source address "j" in the newly received MAP notice packet 5j does not exist in the neighbor MAP table 16k (Fig. 11), then the NMDP unit 15 in the MAP(k) 1k judges the MAP(j) 1j serving as the transmission source of the MAP notice packet 5j to be a newly detected MAP. In other words, the NMDP unit 15 in the MAP(k) 1k judges that there is a possibility that the MAP(j) 1j is newly registered in the neighbor MAP table 16k as a neighbor MAP for the MAP(k) 1k. In the case of Fig. 11, the source address "j" is not included in the IP addresses in the neighbor MAP table 16k. Therefore, the NMDP unit 15 in the MAP(k) 1k judges the MAP(j) 1j to be a newly detected MAP.

Subsequently, the NMDP unit 15 in the MAP(k) 1k determines whether the detected MAP(j) 1j should be newly registered in the neighbor MAP table 16k as a neighbor MAP for the MAP(k) 1k. First, the NMDP unit 15 in the MAP (k) 1k conducts a comparison to determine whether the delay value of the MAP(j) 1j measured on the basis of the MAP notice packet 5j is shorter than any of delay values of the neighbor MAPS stored in the neighbor MAP table 16k (Fig. 11) at the time when the MAP notice packet 5j has been received. At this time, the neighbor MAP table 16k stores information concerning the neighbor MAPs in the order of increasing delay value. Therefore, the NMDP unit 15 should start a comparison with the delay value of the last neighbor MAP having the largest delay value in the neighbor MAP table 16k.

If the delay value of the MAP(j) 1j is greater than all delay values in the neighbor MAP table 16k, then the NMDP unit 15 in the MAP(k) 1k judges that the MAP(j) 1j should not be newly registered in the neighbor MAP table 16k as a neighbor MAP for the MAP(k) 1k. In the case of Fig. 11, the measured delay value 13.3 (msec.) of the MAP(j) 1j is greater than all delay values in the neighbor MAP table 16k. Therefore, the NMDP unit 15 in the MAP(k) 1k judges that the MAP (j) 1j should not be newly registered in the neighbor MAP table 16k. In this case, the MAP (k) 1k does not conduct update of the neighbor MAP table 16k based on the MAP notice packet 5j.

On the other hand, if the delay value of the MAP(j) 1j is shorter than any of delay values in the neighbor MAP table 16k at the time when the MAP notice packet 5j has been received, then the NMDP unit 15 in the MAP(k) 1k determines whether the forced registration lifetime of a neighbor MAP having a delay value greater than the delay value of the MAP(j) 1j is 0 (sec.).

If the forced registration lifetime of all neighbor MAPs having a delay value greater than the delay value of the MAP(j) 1j is not 0 (sec.), then the NMDP unit 15 in the MAP(k) 1k judges that the MAP(j) 1j should not be newly registered in the neighbor MAP table 16k as a neighbor MAP for the MAP(k) 1k. In this case, the MAP(k) 1k does not conduct update of the neighbor MAP table 16k based on the MAP notice packet 5j.

On the other hand, if there is a neighbor MAP that is greater in delay value than the MAP(j) 1j and that is 0 (sec.) in forced registration time, then the NMDP unit 15 in the MAP(k) 1k judges that the MAP(j) 1j should be newly registered in the neighbor MAP table 16k as a neighbor MAP for the MAP(k) 1k. Further, the NMDP unit 15 in the MAP (k) 1k executes registration of the MAP(j) 1j in the neighbor MAP table 16k.

In this case, the NMDP unit 15 in the MAP(k) 1k erases information concerning a neighbor MAP having the greatest delay value among neighbor MAPs that are greater in delay value than the MAP(j) 1j and that are 0 (sec.) in forced registration time. Further, the NMDP unit 15 in the MAP(k) 1k updates the neighbor MAP table 16k on the basis of the MAP notice packet 5j. As a result, the NMDP unit 15 in the MAP(k) 1k registers the MAP(j) 1j in the neighbor MAP table 16k as a new neighbor MAP.

Specifically, since the MAP(j) 1j is a newly registered MAP, the NMDP unit 15 in the MAP(k) 1k decides to store the measured delay value as it is in the neighbor MAP table 16k. The NMDP unit 15 in the MAP (k) 1k acquires the source address, the processing capability, and the sequence number from the MAP notice packet 5j, and acquires the initial lifetime from the second table 17k. The NMDP unit 15 in the MAP(k) 1k stores information concerning the MAP (j) 1j in such a location in the neighbor MAP table 16k, as to satisfy the criterion, "information concerning neighbor MAPs is stored in the order of increasing delay value." The NMDP unit 15 in the MAP(k) 1k stores the determined delay value, the acquired source address, processing capability, initial lifetime and sequence number, and the initial value 0 of the forced registration lifetime in the neighbor MAP table 16k as information concerning the MAP(j) 1j.

In this way, it is possible to register the newly detected MAP(j) 1j in the neighbor MAP table 16k as a neighbor MAP for the MAP(k) 1k. Except neighbor MAPs that are not 0 (sec.) in forced registration lifetime, a fixed number of neighbor MAPs can be stored in the neighbor MAP table 16k in the order of increasing delay time.

In this way, the NMDP unit 15 in the MAP(k) 1k detects a new MAP on the basis of the node notice packet 5j, and functions as the detection unit. The NMDP unit 15 in the MAP(k) 1k updates the neighbor MAP table 16k on the basis of the determined delay value and a newly detected MAP, and functions as the update unit.

3. Neighbor MAP erasing

In response to a MAP search packet transmitted by the MAP(k) 1k, a MAP notice packet is returned from the MAP(n) 1n serving as the search packet reception node as shown in Fig. 6. If the MAP(n) 1n malfunctions or is removed due to a failure, then the MAP notice packet is not returned from the MAP(n) 1n in response to the MAP search packet transmitted by the MAP(k) 1k.

As described above, a search for a MAP is started when the lifetime of the information concerning a neighbor MAP has become short like the lifetime for the MAP(n) 1n in the neighbor MAP table 16k shown in Fig. 3. The lifetime is decremented every second. If a MAP notice packet is not returned from the MAP(n) 1n, then the information concerning the MAP(n) 1n in the neighbor MAP table 16k is not updated, and the lifetime is not updated, either. As a result, the lifetime of the information concerning the MAP(n) 1n in the neighbor MAP table 16k arrives at 0 (sec.). In this case, the NMDP unit 15 in the MAP(k) 1k erases the information concerning the MAP(n) 1n from the neighbor MAP table 16k, as a general rule.

Additionally, as described above, in the case where the sequence number in the MAP notice packet returned from the MAP(n) In is lower than the sequence number 1 for the MAP(n) 1n in the neighbor MAP table 16k, update of the information based on the MAP notice packet is not conducted, and the lifetime is not updated, either. In this case too, therefore, the lifetime of the information concerning the MAP(n) 1n in the neighbor MAP table 16k arrives at 0 (sec.) in the same way, and the NMDP unit 15 in the MAP(k) 1k erases the information concerning the MAP(n) In from the neighbor MAP table 16k, as a general rule.

In any case, however, there is an exception. If the forced registration lifetime of the information concerning the MAP(n) In is not 0 (sec.), then the NMDP unit 15 in the MAP(k) 1k does not erase the information concerning the MAP (n) 1n even in the case where the lifetime of the information concerning the MAP(n) In has arrived at 0 (sec.).

(Registration Request)

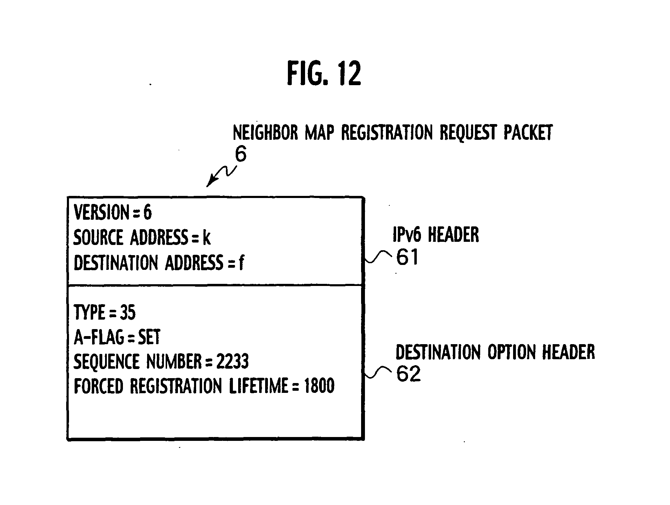

A request from a MAP for registration in a neighbor MAP table in another MAP will now be described with reference to Figs. 12 to 14 and Fig. 3. The operation will be described by taking the case where the neighbor MAP table 16k of the MAP(k) 1k is in the state shown in Fig. 3 as an example. The time of the forced registration request transmission timer in the second table 17k is decremented from 1163 (sec.) every second. When the time of the forced registration request transmission timer has arrived at 0 (sec.), the MAP(k) 1k starts a request for registration in another MAP.

First, the MAP(k) 1k transmits a neighbor MAP registration request packet to the MAP(f) 1f, which is located nearest, i.e., which has the least delay value in the neighbor MAP table 16k except the MAP(k) 1k itself. Specifically, the NMDP unit 15 in the MAP(k) 1k creates a neighbor MAP registration request packet 6 shown in Fig. 12, and the interface 19 transmits the neighbor MAP registration request packet 6. The MAP(k) 1k may transmit neighbor MAP registration request packets to the MAP(i) 1i, which is relatively small in delay value in the neighbor MAP table 16k, instead of the nearest MAP. The MAP(k) 1k may transmit neighbor MAP registration request packets to a plurality of MAPs in the neighbor MAP table 16k, and cause registration in the MAPS.

As shown in Fig. 12, the neighbor MAP registration request packet 6 includes an IPv6 header 61 and a destination option header 62. A version for indicating the version of IP, a source address for indicating the transmission source of the neighbor MAP registration request packet 6, and a destination address for indicating the destination of the neighbor MAP registration request packet 6 are stored in the IPv6 header 61. A type, an ACK request flag (hereafter represented as A-flag), a sequence number for controlling the neighbor MAP registration request packet 6, and forced registration lifetime are stored in the destination option header 62.

The NMDP unit 15 in the MAP(k) 1k sets the source address in the IPv6 header 61 to the IP address "k" of the MAP(k) 1k, and sets the destination address in the IPv6 header 61 to the IP address "f" of the MAP(f) 1f. The NMDP unit 15 in the MAP(k) 1k sets the type in the destination option header 62 to "35". In the present embodiment, the type 35 indicates a neighbor MAP registration request packet.

The NMDP unit 15 in the MAP(k) 1k sets the A-flag in the destination option header 62. The A-flag indicates whether a return of a neighbor MAP registration acknowledgement packet in response to a neighbor MAP registration request packet is requested. The neighbor MAP registration acknowledgement packet is a packet used by the MAP(k) 1k, which has transmitted the neighbor MAP registration request packet 6, to acknowledge whether registration in the neighbor MAP table 16f caused by the neighbor MAP registration request packet 6 is completed. The state having the A-flag set indicates that return of the neighbor MAP registration acknowledgement packet is requested.

The NMDP unit 15 in the MAP(k) 1k sets the sequence number in the destination header 62 to "2233" , which is obtained by adding 1 to the value "2232" of the sequence number 4 in the second table 17k shown in Fig. 3. At this time, the NMDP unit 15 in the MAP(k) 1k also updates the value of the sequence number 4 in the second table 17k to become "2233." The NMDP unit 15 in the MAP (k) 1k copies the forced registration initial lifetime 1800 (sec.) in the second table 17k, and sets the forced registration lifetime in the destination option header 62 to the copied lifetime. In this way, the NMDP unit 15 in the MAP (k) 1k creates the neighbor MAP registration request packet 6 for requesting registration in a neighbor MAP table of another MAP, and functions as the request packet creation unit.

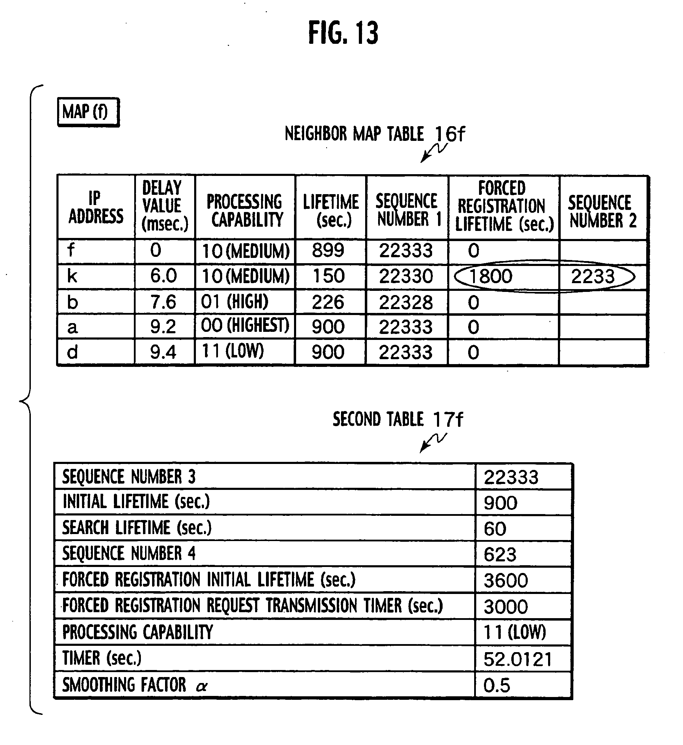

Upon receiving the neighbor MAP registration request packet 6 from the MAP (k) 1k, the NMDP unit 15 in the MAP (f) 1f conducts a retrieval to determine whether the source address "k" in the neighbor MAP registration request packet 6 is included in the IP addresses in a neighbor MAP table 16f shown in Fig. 13. Fig. 13 shows the neighbor MAP table 16f and a second table 17f in the MAP (f) 1f. If the source address "k" in the received neighbor MAP registration request packet 6 exists in the neighbor MAP table 16f, then the NMDP unit 15 in the MAP(f) 1f judges that the neighbor MAP registration request packet 6 should be used to update the information concerning the MAP(k) 1k already registered as a neighbor MAP for the MAP (f) 1f. In the case of Fig. 13, the source address "k" is included in the IP addresses in the neighbor MAP table 16f. Therefore, the NMDP unit 15 in the MAP(f) 1f judges that the neighbor MAP registration request packet 6 should be used to update the information concerning the MAP(k) 1k.

Subsequently, the NMDP unit 15 in the MAP(f) 1f determines whether update of existing information concerning the MAP(k) 1k in the neighbor MAP table 16f based on the received neighbor MAP registration request packet 6 should be executed. Specifically, the NMDP unit 15 in the MAP(f) 1f compares the sequence number "2233" in the received neighbor MAP registration request packet 6 with the sequence number 2 for the MAP(k) 1k in the neighbor MAP table 16f at the time when the neighbor MAP registration request packet 6 has been received.

If the sequence number in the neighbor MAP registration request packet 6 is higher, then the NMDP unit 15 in the MAP(f) 1f judges that update of the information based on the neighbor MAP registration request packet 6 should be executed. On the other hand, if the sequence number in the neighbor MAP registration request packet 6 is lower than sequence number 2 for the MAP(k) 1k in the neighbor MAP table 16f, then the NMDP unit 15 in the MAP(f) 1f judges that update of the information based on the neighbor MAP registration request packet 6 should not be executed.

If the sequence number in the neighbor MAP registration request packet 6 is high and the NMDP unit 15 in the MAP(f) 1f judges that update of the information should be executed, then the NMDP unit 15 in the MAP(f) 1f executes update of information concerning the MAP(k) 1k in the neighbor MAP table 16f. The NMDP unit 15 in the MAP(f) 1f acquires the forced registration lifetime 1,800 (sec.) and the sequence number "2233" from the neighbor MAP registration request packet 6. The NMDP unit 15 in the MAP(f) 1f updates the existing forced registration lifetime concerning the MAP(k) 1k in the neighbor MAP table 16f and the existing sequence number 2 to set them to the acquired 1,800 (sec.) and the acquired sequence number "2233," respectively. As a result of such an updating operation, the information concerning the MAP(k) 1k in the neighbor MAP table 16f becomes a portion enclosed with a circle in Fig. 13. When the interface 19 has received the neighbor MAP registration request packet 6, the NMDP unit 15 thus updates the neighbor MAP table 16f on the basis of the neighbor MAP registration request packet 6, and functions as the update unit.

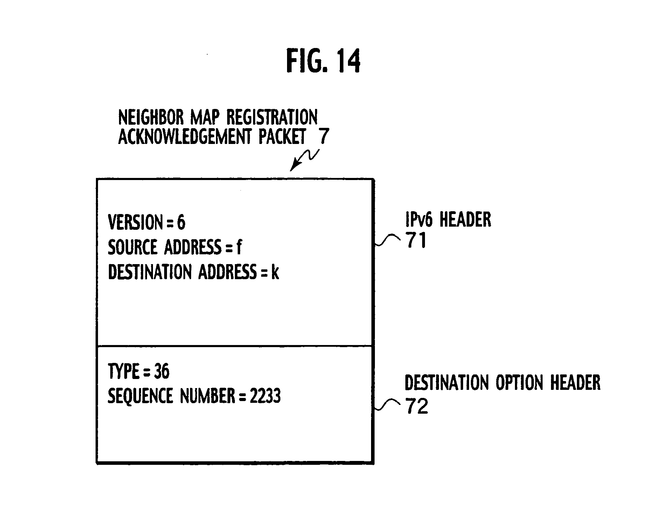

If the neighbor MAP registration request packet 6 received by the MAP(f) 1f has the A-flag in the set state, and update of the information based on the neighbor MAP registration request packet 6 has been executed, then the MAP (f) 1f transmits a neighbor MAP registration acknowledgement packet to the MAP(k) 1k, which is the registration request source. Specifically, the NMDP unit 15 in the MAP(f) 1f creates a neighbor MAP registration acknowledgement packet 7 shown in Fig. 14, and the interface 19 transmits the neighbor MAP registration acknowledgement packet 7.

As shown in Fig. 14, the neighbor MAP registration acknowledgement packet 7 includes an IPv6 header 71 and a destination option header 72. A version for indicating the version of IP, a source address for indicating the transmission source of the neighbor MAP registration acknowledgement packet 7, and a destination address for indicating the destination of the neighbor MAP registration acknowledgement packet 7 are stored in the IPv6 header 71. A type, and a sequence number for controlling the neighbor MAP registration acknowledgement packet 7 are stored in the destination option header 72.

As shown in Fig. 14, the NMDP unit 15 in the MAP(f) 1f sets the source address in the IPv6 header 71 to the IP address "f" of the MAP(f) 1f. The NMDP unit 15 in the MAP(f) 1f copies the IP address "k" of the MAP(k) 1k, which is the source address in the received neighbor MAP registration request packet 6 (Fig. 12), and sets the destination address in the IPv6 header 71 to the copied IP address "k."

The NMDP unit 15 in the MAP(f) 1f sets the type in the destination option header 72 to "36". In the present embodiment, the type 36 indicates a neighbor MAP registration acknowledgement packet. The NMDP unit 15 in the MAP(f) 1f copies the value "2233" of the sequence number in the received neighbor MAP registration request packet 6 (Fig. 12), and sets the sequence number in the destination option header 72 to the copied value "2233." In this way, the NMDP unit 15 in the MAP (f) 1f creates the neighbor MAP registration acknowledgement packet 7, and functions as the acknowledgement packet creation unit.

If the MAP (k) 1k has received the neighbor MAP registration acknowledgement packet 7 from the MAP (f) 1f, then the MAP (k) 1k acknowledges that registration in the neighbor MAP table 16f caused by the neighbor MAP registration request packet 6 transmitted by itself has been completed. Specifically, the NMDP unit 15 in the MAP (k) 1k determines whether the sequence number "2233" in the received neighbor MAP registration acknowledgement packet 7 coincides with the sequence number 4 in the neighbor MAP table 16k at the time of reception of the neighbor MAP registration acknowledgement packet 7. If they coincide with each other, then the NMDP unit 15 in the MAP (k) 1k can acknowledge that the neighbor MAP registration acknowledgement packet 7 in response to the neighbor MAP registration request packet 6 transmitted by itself has arrived. Therefore, the NMDP unit 15 in the MAP (k) 1k can acknowledge that registration in the neighbor MAP table 16f has been completed. After the NMDP unit 15 in the MAP (k) 1k has acknowledged the completion of the registration in the neighbor MAP table 16f, the NMDP unit 15 in the MAP (k) 1k restores the forced registration request transmission timer to its initial value.

On the other hand, if the neighbor MAP registration acknowledgement packet 7 cannot be received from the MAP (f) 1f within a predetermined time after transmission of the neighbor MAP registration request packet 6, or if the neighbor MAP registration acknowledgement packet 7 has been received, but its sequence number does not coincide with the sequence number 4 in the neighbor MAP table 16k, the MAP (k) 1k cannot acknowledge that registration in the neighbor MAP table 16f has been completed. Therefore, the MAP (k) 1k retransmits the neighbor MAP registration request packet 6. It can be determined whether the reception is within the predetermined time by referring to, for example, the time of the forced registration request transmission timer.

By thus transmitting the neighbor MAP registration request packet 6, the MAP (k) 1k can register itself in the neighbor MAP table 16f of the MAP (f) 1f as a neighbor MAP as shown in Fig. 13. Unless the forced registration lifetime becomes 0 (sec.), the information of the MAP (k) 1k continues to be maintained exceptionally in the neighbor MAP table 16k irrespective of the delay value and the lifetime. As a result, the MAP (k) 1k can always make itself detectable by another MAP and thus prevent itself from becoming undetected by another MAP. In the same way, by transmitting the neighbor MAP registration request packet 6 to each other, each MAP is registered in the neighbor MAP table of some MAP, and the MAPs can be detected by each other.

For example, in some cases, there is a MAP that is distant from other MAPs and which cannot be detected by other MAPs due to the relation of the network topology. Even such a map can be detected by transmitting the neighbor MAP registration request packet. Even a MAP having another MAP in the neighborhood is not detected by other MAPs if the MAP is not stored in the neighbor MAP table When searching for the MAP and updating the neighbor MAP table. By transmitting the neighbor MAP registration request packet, such a situation can be prevented.

In addition, as described above, the MAP(k) 1k periodically transmits the neighbor MAP registration request packet 6 to the MAP(f) 1f every time the forced registration request transmission timer in the second table 17k becomes 0 (sec.). Therefore, the MAP(f) 1f periodically receives the neighbor MAP registration request packet 6 from the MAP (k) 1k, and updates the forced registration lifetime. As a result, the forced registration lifetime of the MAP(k) 1k does not become 0 (sec.), and the information concerning the MAP(k) 1k continues to be maintained exceptionally in the neighbor MAP table 16f.

If the MAP(k) 1k malfunctions due to a failure or is removed, then the MAP(f) 1f does not receive the neighbor MAP registration request packet 6 from the MAP(k) 1k. Therefore, the forced registration lifetime for the MAP(k) 1k in the neighbor MAP table 16f is not updated. In addition, the forced registration lifetime is not decremented every second. As a result, the forced registration lifetime for the MAP(k) 1k in the neighbor MAP table 16f arrives at 0 (sec.), and thereafter the information concerning the MAP(k) 1k is not handled exceptionally. Therefore, it is possible to prevent the MAP(f) 1f from continuing to maintain the information concerning the MAP(k) 1k that malfunctions due to a failure or is removed.

In the same way, as described above, in the case where the sequence number in the neighbor MAP registration request packet 6 transmitted from the MAP(k) 1k is lower than the sequence number 2 for the MAP(k) 1k in the neighbor MAP table 16f, update of the forced registration lifetime based on the neighbor MAP registration request packet 6 is not conducted. In the same way in this case as well, the forced registration lifetime for the MAP(k) 1k in the neighbor MAP table 16f arrives at 0 (sec.), and thereafter the information concerning the MAP (k) 1k is not handled exceptionally.

If a MAP that has already received a registration request from another MAP has newly received the neighbor MAP registration request packet 6 from still another MAP, then the MAP may not register this MAP that has newly requested registration in the neighbor MAP table, but transmits the neighbor MAP registration acknowledgement packet 7. As a result, it is possible to prevent the neighbor MAP table from storing only MAPs that are not 0 (sec.) in forced registration lifetime and to prevent the number of registered original neighbor MAPs that have a short delay value from decreasing. However, if a MAP is high in processing capability and storage capacity and the maximum number of registered neighbor MAPs in the neighbor MAP table can be made large for the MAP, then the MAP may receive registration requests from a large number of MAPs.

If the MAP (k) 1k cannot receive the neighbor MAP registration acknowledgement packet 7 even though the MAP(k) 1k retransmits the neighbor MAP registration request packet 6 a predetermined number of times, there is a high possibility that there is some problem, such as a failure, removal, or previous reception of a registration request from another MAP, in the MAP(f) 1f. Therefore, the MAP(k) 1k may transmit the neighbor MAP registration request packet 6 to a MAP other than the MAP(f) 1f.

In addition, in order to prevent information concerning a MAP that is distant from other MAPs and that cannot be detected by other MAPs, due to the relation of the network topology, from being erased from the neighbor MAP table, it is also possible, in the neighbor MAP table of registration destination, to make the forced registration lifetime concerning the MAP very long, or set a field for indicating that it is prohibited to erase the information concerning the MAP. This can be implemented by making the forced registration lifetime included in the neighbor MAP registration request packet 6 very long, or setting a flag for requesting erasing prohibition of the information concerning the MAP in the neighbor MAP registration request packet 6. Or it can be implemented by previously registering the MAP in the neighbor MAP table with a lengthened forced registration lifetime or a field set to indicate the erasing prohibition,

(Arrangement of new MAP)

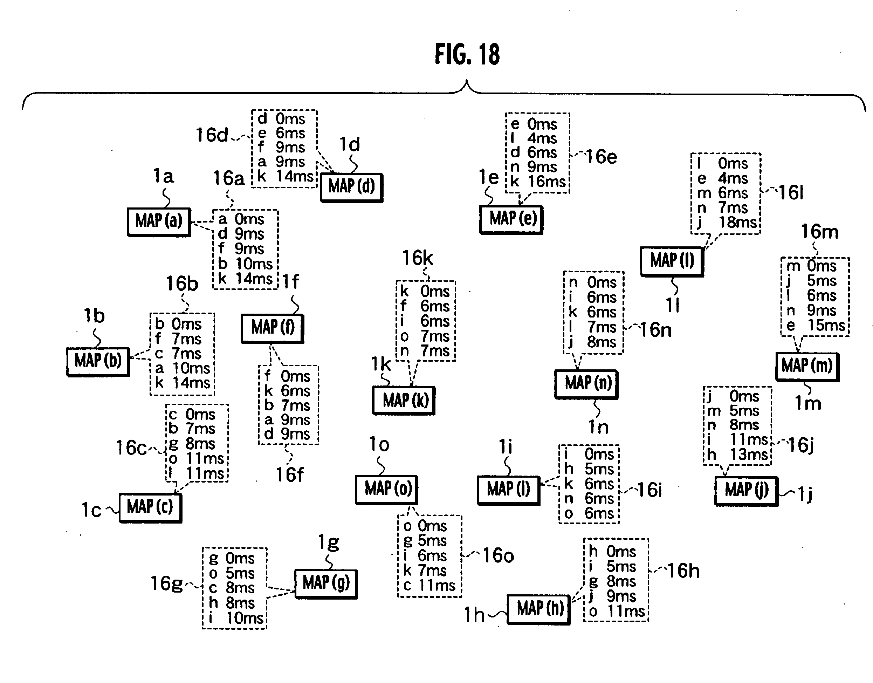

Arrangement of a new MAP will now be described with reference to Figs. 6, and 15 to 18. The case where a MAP(o) is newly arranged in the mobile communication system having the state shown in Fig. 6 will now be described. At this time, in a neighbor MAP table 16o of the newly arranged MAP(o) 1o, IP addresses and delay values of the MAP (o) 1o and a MAP(e) 1e other than the MAP(o) 1o are previously set.

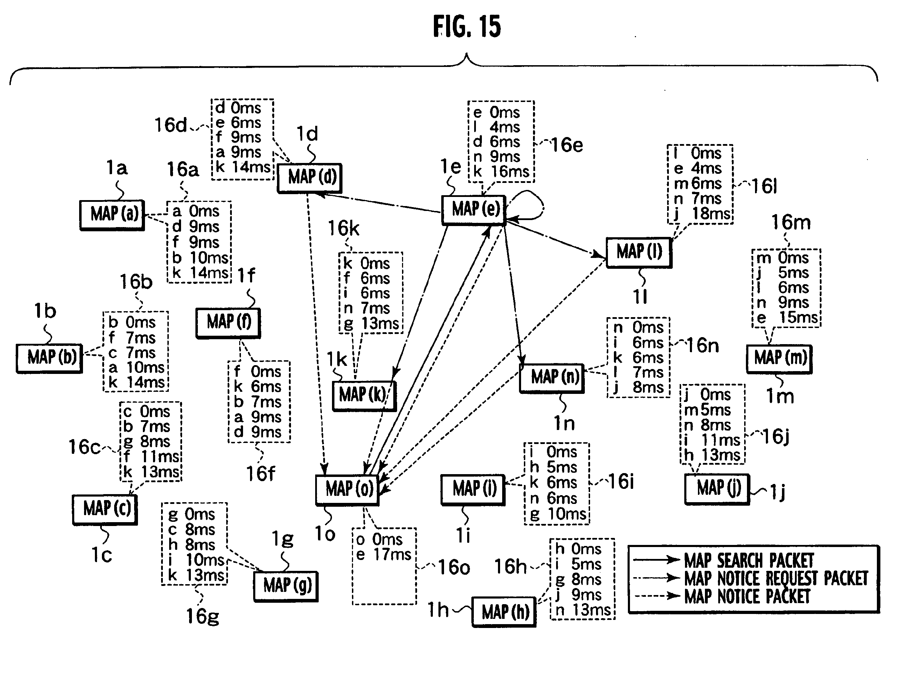

If the lifetime for the MAP(e) 1e in the neighbor MAP table 16o has arrived at the search lifetime, then the MAP (o) 1o transmits a MAP search packet to the MAP(e) 1e as represented by a solid line arrow in Fig. 15. Upon receiving the MAP search packet, the MAP(e) 1e then transmits a MAP notice request packet to each of the neighbor MAPs stored in a neighbor MAP table 16e of the MAP(e) 1e, i.e., the MAP(e) 1e, MAP(l) 1l, MAP(d) 1d, MAP(n) 1n and MAP(k) 1k as represented by a dot-dash line arrow in Fig. 15. Upon receiving the MAP notice request packet, each of MAP(e) 1e, MAP(l) 1l, MAP(d) 1d, MAP(n) 1n and MAP(k) 1k returns a MAP notice packet to the MAP(o) 1o as represented by a dot line arrow in Fig. 15.

As a result, the MAP(o) 1o detects a new MAP other than the previously set MAP(e) 1e on the basis of the received MAP notice packet, and updates the neighbor MAP table 16o. The MAP(o) 1o registers information concerning five neighbor MAPs having the shortest delay values in the neighbor MAP table 16o. As a result, information concerning the MAP(o) 1o, MAP(k) 1k, MAP(n) 1n, MAP(l) 1l and MAP(e) 1e is registered in the neighbor MAP table 16o.

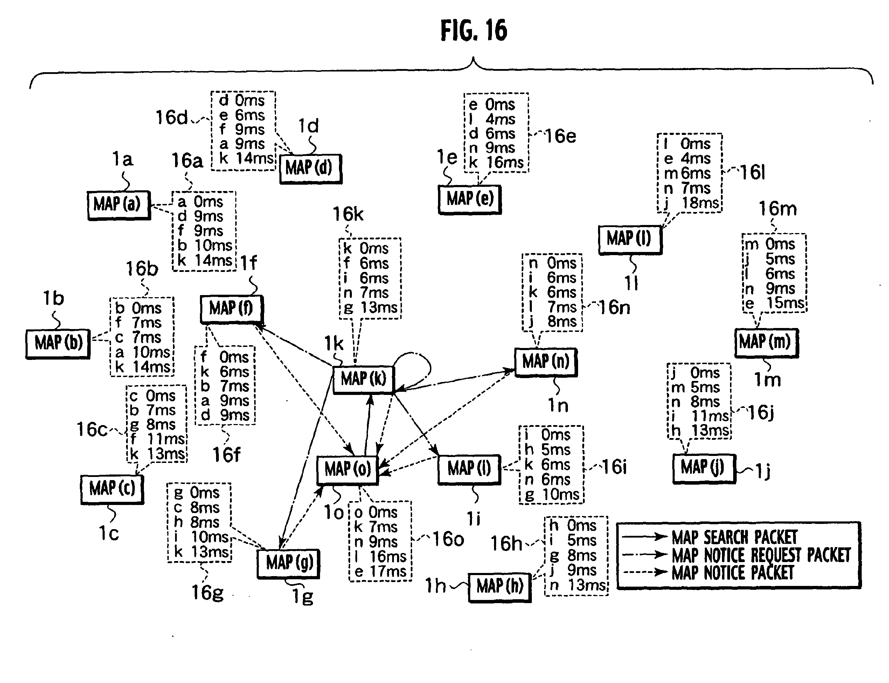

If the time elapses thereafter and the lifetime for the MAP(k) 1k in the neighbor MAP table 16o arrives at the search lifetime, then the MAP(o) 1o transmits a MAP search packet to the MAP(k) 1k as represented by a solid line arrow in Fig. 16. Upon receiving the MAP search packet, the MAP(k) 1k transmits a MAP notice request packet to each of the neighbor MAPs stored in the neighbor MAP table 16k of MAP(k) 1k, i.e., the MAP(k) 1k, MAP(f) 1f, MAP(i) 1i, MAP(n) 1n and MAP(g) 1g as represented by a dot-dash line arrow in Fig. 16. Upon receiving the MAP notice request packet, each of the MAP(k) 1k, MAP (f) 1f, MAP(i) 1i, MAP (n) In and MAP(g) 1g returns a MAP notice packet to the MAP(o) 1o as represented by a dot line arrow in Fig. 16.

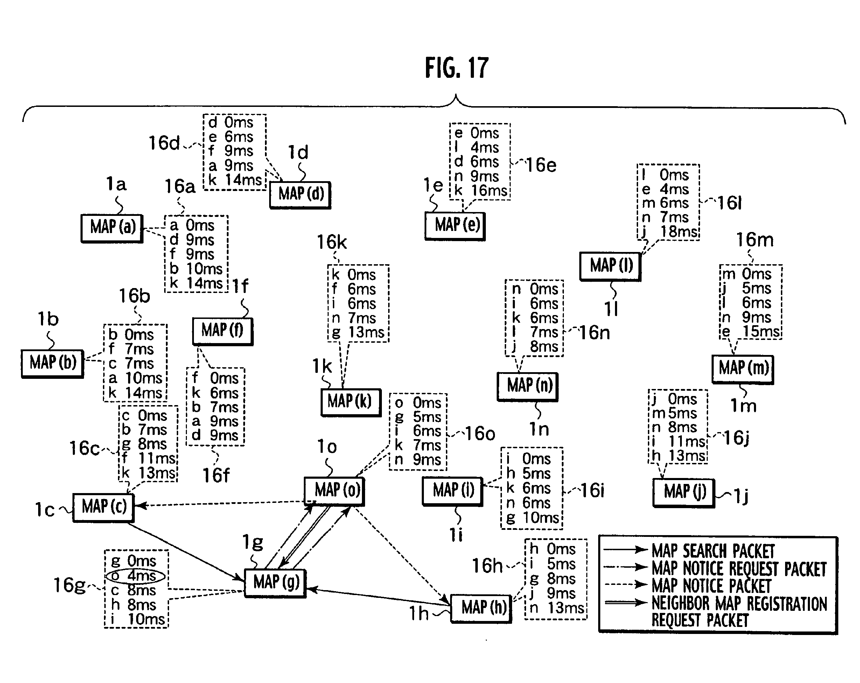

As a result, the MAP(o) 1o detects a new MAP, acquires the latest information concerning existing neighbor MAPs, and updates the neighbor MAP table 16o, on the basis of the received MAP notice packet. At this time, the MAP (o) 1o erases the information concerning the MAP(l) 11 and MAP(e) 1e each having a long delay value and newly registers information concerning the MAP(g) 1g and MAP(i) 1i each having a short delay value so as to register information concerning five neighbor MAPs in the order of increasing delay value. As a result, information concerning the MAP(o) 1o, MAP(g) 1g, MAP(i) 1i, MAP(k) 1k and MAP(n) 1n, each of which has a shorter delay value and is located in the neighborhood, is registered in the neighbor MAP table 16o as shown in Fig. 17.

In addition, if the time of the forced registration request transmission timer in the second table arrives at 0 (sec.), then the MAP(o) 1o transmits a neighbor MAP registration request packet to the MAP(g) 1g, which is located nearest, i.e., which has the shortest delay value in the neighbor MAP table 16o except the MAP(o) 1o itself as represented by a double line arrow in Fig. 17. Further, the MAP(g) 1g updates the neighbor MAP table 16g on the basis of the received neighbor MAP registration request packet.

Specifically, the NMDP unit in the MAP(g) 1g conducts a retrieval to determine whether the source address "o" in the neighbor MAP registration request packet is included in IP addresses in the neighbor MAP table 16g (Fig. 16) at the time of reception of the neighbor MAP registration request packet. Since "o" is not found in the IP addresses in the neighbor MAP table 16g (Fig. 16), the NMDP unit in the MAP(g) 1g judges the MAP(o) 1o to be a MAP that has newly issued a registration request. Subsequently, the NMDP unit in the MAP(g) 1g erases information concerning the MAP(k) 1k, which has the longest delay value, in the neighbor MAP table 16g (Fig. 16). It is supposed that the forced registration lifetime for the MAP(k) 1k is 0 (sec.). The NMDP unit in the MAP(g) 1g newly registers the information concerning the MAP(o) 1o in the neighbor MAP table 16g as represented by a portion enclosed with a circle in Fig. 17.

In this way, information concerning the MAP(o) 1o is registered in the neighbor MAP table 16g of the MAP(g) 1g. Therefore, each of MAP(h) 1h and MAP(c) 1c transmits a MAP search packet to the MAP(g) 1g as represented by a solid line arrow in Fig. 17. Upon receiving the MAP search packet, the MAP(g) 1g transmits a MAP notice request packet to the MAP(o) 1o stored in the neighbor MAP table 16g of the MAP(g) 1g as represented by a dot-dash line arrow in Fig. 17. Upon receiving the MAP notice request packet, the MAP(o) 1o returns a MAP notice packet to both of MAP(h) 1h and MAP(c) 1c as represented by a dot line arrow in Fig. 17. As a result, the existence of the MAP(o) 1o is known to MAPs, such as the MAP(h) 1h and the MAP(c) 1c, located in the neighborhood of the MAP(o) 1o other than the MAP(g) 1g, which has issued the registration request.

Thereafter, the MAP search between MAPs is repeated. Finally, the group of the MAP(a) 1a to the MAP(o) 1o including the newly arranged MAP(o) 1o settles down in a stable state including stationary neighbor MAP tables 16a to 16o.

In this way, by merely previously setting at least one address of another MAP(e) 1e in the neighbor MAP table of the MAP(o) 1o newly arranged in the mobile communication system, the MAP(o) 1o can transmit a MAP search packet to at least MAP(e) 1e and start a MAP search. As a result, the newly arranged MAP(o) 1o can detect a new MAP other than the first set MAP(e) 1e. By repeating the MAP search, the MAP(o) 1o can hold information concerning neighbor MAPs having shorter delay values in the neighbor MAP table 16o.

In addition, by transmitting a neighbor MAP registration request packet to the MAP(g) 1g, which is a neighbor MAP of the MAP(o) 1o, the newly arranged MAP(o) 1o can make its own existence known to the MAP(g) 1g. Further the MAP(o) 1o can make itself registered in the neighbor MAP table 16o of the MAP(g) 1g. As a result, the MAP(o) 1o can make itself detectable by the MAP(h) 1h and the MAP(c) 1c, which are other neighbor MAPs. Therefore, a new MAP can be easily arranged in the mobile communication system.

(Search for MAP effected by MN)

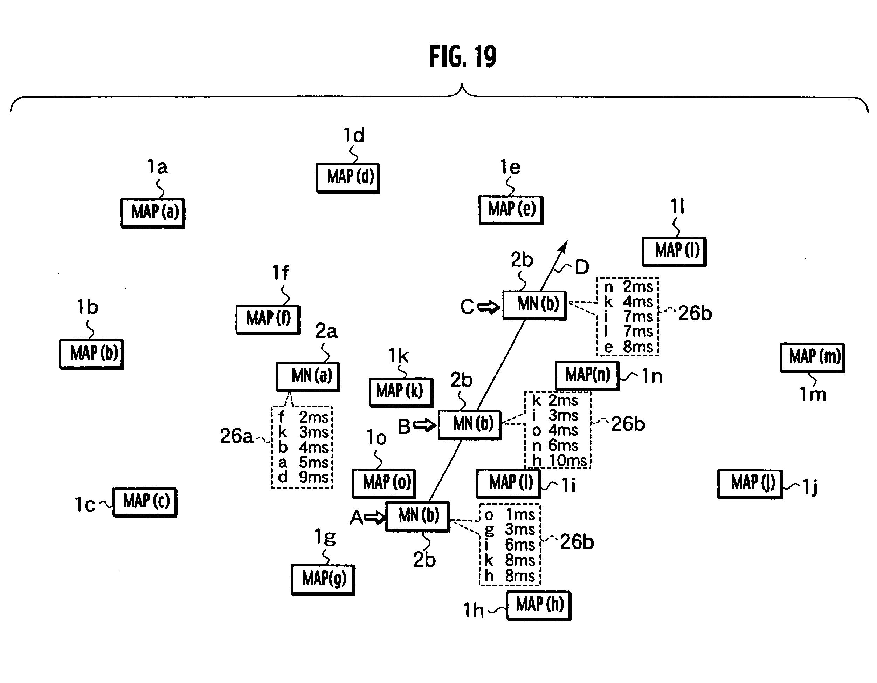

A search for a MAP effected by a MN will now be described with reference to Figs. 19 and 5. Fig. 19 shows a mobile communication system obtained by newly arranging the MAP(o) 1o in the mobile communication system shown in Fig. 1 as described above. In Fig. 19, neighbor MAP tables 26a and 26b respectively of the MN(a) 2a and MN(b) 2b are shown together with the MN(a) 2a and MN(b) 2b. For brevity of description, however, only IP addresses stored in the neighbor MAP tables 26a and 26b, and delay values between the MN(a) 2a and MN(b) 2b and neighbor MAPs are shown. As for the delay values, decimals are omitted.

1. Search for MAP

First, as to how the MN(b) 2b searches for a MAP while moving on a travel route indicated by an arrow D in Fig. 19 will now be described. In the same way as the search for a MAP effected by a MAP, the MN(b) 2b searches for a MAP. In other words, the NMDP unit 25 in the MN(b) 2b functions as the search packet creation unit configured to create a MAP search packet, the detection unit configured to detect a MAP on the basis of a MAP notice packet, the determination unit configured to determine a delay value, which is inter-node information, on the basis of a MAP notice packet, and the update unit configured to update the neighbor MAP table 26b, and searches for a MAP.

If the lifetime of the information concerning any of MAPs registered in the neighbor MAP table 26b in the MN(b) 2b arrives at the search lifetime when the MN(b) 2b is in a position indicated by an arrow A in Fig. 19, then the MN(b) 2b starts a search for a MAP. First, the NMDP unit 25 in the MN(b) 2b transmits a MAP search packet to the MAP. Subsequently, the NMDP unit 25 in the MN(b) 2b receives a MAP notice packet in response to the MAP search packet returned from a MAP that has become a peripheral node. The NMDP unit 25 in the MN(b) 2b detects a new MAP acquires latest information concerning existing neighbor MAPs, and updates the neighbor MAP table 26b, on the basis of the received MAP notice packet.

As a result, as shown in Fig. 19, information concerning the MAP(o) 1o, MAP(g) 1g, MAP(i) 1i, MAP(k) 1k and MAP(h) 1h, which are neighbor MAPs having short delay values with respect to the MN(b) 2b located in the position indicated by the arrow A in Fig. 19, is registered in the neighbor MAP table 26b.

As shown in Fig. 5, the initial lifetime and search lifetime of the MN are set to short time values in the second table of the MN. While the MN(b) 2b moves on the travel route indicated by the arrow D from the position indicated by the arrow A to a position indicated by an arrow C via a position indicated by an arrow B, the lifetime values for information concerning MAPS registered in the neighbor MAP table 26b arrives at the search lifetime one after another, and the MN (b) 2b effects a search for a MAP repetitively.

In the position indicated by the arrow B in Fig. 19, therefore, information concerning the MAP (k) 1k, MAP(i) 1i , MAP(o) 1o , MAP (n) In and MAP(h) 1h, which are neighbor MAPs having short delay values with respect to the MN (b) 2b located in the position indicated by the arrow B, is registered in the neighbor MAP table 26b. In the position indicated by the arrow C in Fig. 19, information concerning the MAP(n) 1n, MAP(k) 1k, MAP(i) 1i, MAP(l) 11 and MAP (e) 1e, which are neighbor MAPs having short delay values with respect to the MN(b) 2b located in the position indicated by the arrow C, is registered in the neighbor MAP table 26b.

Incidentally, it is desirable to previously set an address and a delay value of at least one MAP included in the mobile communication system in the neighbor MAP table of the MN(b) 2b as initialization. As a result, the MN(b) 2b can transmit a MAP search packet to at least one MAP, and start a search for a MAP. As for the address of the set MAP, it is desirable to set the address of a MAP that exists in an area where the user of the MN uses the mobile communication system. Of course, the MAP address to be set may be an address of an arbitrary MAP.

2. Selection of MAP

Selection of a MAP effected by a MN will now be described by taking the case where the MN(a) 2a selects a MAP that is the most suitable for use, as an example. As described above, the MN(a) 2a has the neighbor MAP table 26a shown in Fig. 5. The MAP selection policy holding unit 30 of the MN(a) 2a holds a MAP selection policy represented as "a MAP located nearest, i.e., a MAP having a minimum delay value in packet transmission between nodes, and included in MAPs having high processing capability of at least "01"."

Therefore, the NMDP unit 25 in the MN(a) 2a collates information concerning neighbor MAPs stored in the neighbor MAP table 26a shown in Fig. 5 with the MAP selection policy held in the MAP selection policy holding unit 30, and selects an optimum neighbor MAP. As a result, the NMDP unit 25 in the MN(a) 2a selects the MAP(b) 1b as the neighbor MAP to be used. In this way, the NMDP unit 25 in the MN(a) 2a functions as the selection unit configured to access the neighbor MAP table 26a and select a MAP to be used, on the basis of the MAP selection policy. The NMDP unit 25 in the MN(a) 2a notifies the mobility management unit 24 of the address of the MAP(b) 1b, which is the selected neighbor MAP.

The MN(a) 2a registers the home address and a care of address now in use in the MAP(b) 1b. The MN(a) 2a registers the home address and an address of the MAP(b) 1b to be used, in the HA. Specifically, the mobility management unit 24 in the MN(a) 2a creates a binding update packet for registering the home address and the care of address in the MAP (b) 1b. The mobility management unit 24 in the MN(a) 2a creates a binding update packet for registering the home address and the address of the MAP(b) 1b in the HA. The interface 29 in the MAP(a) 2a transmits those binding update packets to the MAP(b) 1b and the HA. In this way, the MN(a) 2a can be provided for the transfer service for a packet transmitted to the home address of the MN(a) 2a, which is conducted by the HA and the MAP(b) 1b.

[Computer program product]

The MAP 1 can be implemented by making a computer execute a computer program product for causing a computer to function as a service node. The computer program product comprises a computer program code for causing the computer to store addresses and node information of service nodes, a computer program code for causing the computer to create a node search packet, a computer program code for causing the computer to create a node notice request packet, a computer program code for causing the computer to create a node notice packet, a computer program code for causing the computer to create a node registration request packet, a computer program code for causing the computer to create a registration acknowledgement packet, a computer program code for causing the computer to communicate, a computer program code for causing the computer to detect the service node, a computer program code for causing the computer to determine inter-node information, and a computer program code for causing the computer to update the stored addresses and stored node information.

The MN 2 can be implemented by making a computer execute a computer program product for causing a computer to function as a mobile node. The computer program product comprises a computer program code for causing the computer to store addresses and node information of service nodes, a computer program code for causing the computer to create a node search packet, a computer program code for causing the computer to communicate, a computer program code for causing the computer to detect the service node, a computer program code for causing the computer to determine inter-node information, a computer program code for causing the computer to update the stored addresses and stored node information, a computer program code for causing the computer to hold a selection criterion for selecting a service node to be used, and a computer program code for causing the computer to select the service node to be used.

The computer program products can be recorded in a recording medium that is a computer readable medium, such as a removable medium like a CD-ROM, a CD-R, a MO or a floppy disk, a memory like a ROM or a RAM, or a hard disk. The MAP 1 or the MN 2 can be implemented by a computer that reads a computer program product from the recording medium and executes the computer program product.

According to the mobile communication system, the MAPs, the MNs, the node search method, and the computer program product, a node itself that is included in the MAP(k) 1k to MAP(o) 1o, the MN(a) 2a and MN(b) 2b, and that wants to search for a MAP becomes a search node and transmits a MAP search packet 3, and it can search for a MAP autonomously. By transmitting only the MAP search packet 3, the search node in the MAP(a) 1a to MAP(o) 1o, the MN (a) 2a and MN(b) 2b can receive a MAP notice packet in response to the MAP search packet 3 from a search packet reception node or a peripheral node in the MAP(a) 1a to MAP(o) 1o. The search node in the MAP(a) 1a to MAP(o) 1o, the MN(a) 2a and MN(b) 2b can detect a MAP on the basis of the MAP notice packet. By receiving information from another node (MAP), therefore, the MAP(a) 1a to MAP(o) 1o, the MN(a) 2a and MN(b) 2b can detect a MAP easily.

Own-node information and inter-node information, such as the processing capability and delay value, are included in the MAP notice packet. Therefore, the search node in the MAP(a) 1a to MAP(o) 1o, the MN(a) 2a and MN (b) 2b can grasp various kinds of node information concerning MAPs that are nodes other than the search node itself, from the MAP notice packet. Therefore, the MAP(a) 1a to MAP(o) 1o, the MN(a) 2a and MN(b) 2b can use various kinds of node information concerning MAPs as judgment materials at the time of updating the neighbor MAP table and as judgment materials at the time of selecting a MAP to be used.

In addition, the MAP(a) 1a to MAP(o) 1o, the MN(a) 2a and MN(b) 2b can receive a MAP notice packet depending upon the situation at the time of transmission of the MAP search packet 3. Therefore, the MAP(a) 1a to MAP(o) 1o, the MN(a) 2a and MN(b) 2b can detect a MAP depending upon the situation at that time, and grasp inter-node information such as the delay value and own-node information such as processing capability, depending upon the situation at that time.

The MAP(a) 1a to MAP(o) 1o, the MN(a) 2a and MN(b) 2b update the neighbor MAP tables 16a to 16o, 26a and 26b on the basis of the returned MAP notice packet. For example, the MAP(a) 1a to MAP(o) 1o, the MN(a) 2a and MN(b) 2bnewlyregisteranewlydetected MAP, and update the delay value and processing capability of the already registered MAPs. Therefore, the MAP(a) 1a to MAP(o) 1o, the MN(a) 2a and MN(b) 2b can hold the latest information depending upon the situation at that time, dynamically and autonomously.

By autonomously grasping information depending upon the situation change, such as arrangement of a new MAP or removal or failure of an existing MAP, therefore, the MAP(a) 1a to MAP(o) 1o, the MN(a) 2a and MN(b) 2b can detect a MAP and hold the latest information. By autonomously grasping information depending upon the movement without relying on a notice from an access router, the MN(a) 2a and MN(b) 2b can detect a neighbor MAP for the positions of the MN(a) 2a and MN(b) 2b at that time, and hold the latest information of the neighbor MAP. Therefore, this method of searching for a MAP can be utilized in the mobility management of the MN. In addition, setting the access router located between the MN and the MAP is not required at all. Of course, the MN(a) 2a and MN(b) 2b can grasp information depending upon a change of the situation concerning the MAP, such as not only the movement but also arrangement of a new MAP, removal of an existing MAP, or a failure, and detect a MAP.

In this way, each of MAP(a) 1a to MAP(o) 1o, MN(a) 2a and MN(b) 2b can thus conduct autonomous distributed control for autonomously detecting a MAP. As a result, the failure resistance can be enhanced, and arrangement of a new MAP, removal of a MAP, and alteration of the MAP arrangement can also be conducted easily.

The search node in the MAP(a) 1a to MAP(o) 1o, the MN(a) 2a and MN(b) 2b determines a delay value (inter-node information) between the MAP serving as the search node and a MAP serving as a peripheral node, according to a delay value (inter-node information) between the search node itself and a MAP serving as a search packet reception node, and a delay value (inter-node information) between the MAP serving as the search packet reception node and the MAP serving as the peripheral node, on the basis of the MAP notice packet. The search node in the MAP(a) 1a to MAP(o) 1o, the MN(a) 2a and MN(b) 2b updates the neighbor MAP table, on the basis of determined inter-node information between the MAP or MN serving as the search node and the MAP serving as the peripheral node.

Therefore, the search node in the MAP(a) 1a to MAP(o) 1o the MN(a) 2a and MN(b) 2b can easily grasp the inter-node information between itself and the MAP serving as the peripheral node. In addition, it becomes unnecessary to attain synchronization between the MAPs in the MAP(a) 1a to MAP(o) 1o, or between the MN(a) 2a and MN(b) 2b and the MAP(a) 1a to MAP(o) 1o.

The neighbor MAP table stores the own-node information such as the processing capability, and the inter-node information such as the delay value. Therefore, the MAP(a) 1a to MAP(o) 1o, the MN(a) 2a and MN(b) 2b can hold the node information, and grasp node information concerning the neighbor MAPs by accessing the neighbor MAP table. Therefore, the MAP(a) 1a to MAP(o) 1o, the MN(a) 2a and MN(b) 2b can use various kinds of node information concerning MAPs as judgment materials at the time of updating the neighbor MAP table, and as judgment materials at the time of selecting a MAP to be used.

In addition, the neighbor MAP table stores five neighbor MAPs having shortest delay values in the order of increasing delay value. The search node in the MAP(a) 1a to MAP(o) 1o, the MN(a) 2a and MN(b) 2b transmits a node search packet to a neighbor MAP having an address stored in the neighbor MAP table in the search node. Upon receiving the node search packet, a MAP serving as the search packet reception node also transmits a node notice request packet to a neighbor MAP having an address stored in the neighbor MAP table in the search packet reception node. Upon receiving the node notice request packet, a MAP serving as a peripheral node returns a node notice packet to the search node.

As a result, the search node in the MAP(a) 1a to MAP(o) 1o, the MN(a) 2a and MN(b) 2b can receive MAP notice packets returned from a large number of MAPs serving as peripheral nodes. Therefore, the search node in the MAP(a) 1a to MAP(o) 1o, the MN(a) 2a and MN(b) 2b can obtain information concerning MAPS located relatively in the neighborhood, and efficiently detect neighbor MAPs having short delay values.

The MAP(a) 1a to MAP(o) 1o include the NDMP unit 15, the neighbor MAP tables 16a to 16o, and the interface 19, respectively. Therefore, the MAP(a) 1a to MAP(o) 1o can access the neighbor MAP tables 16a to 16o, create a MAP notice packet on the basis of the stored information, and transmit the MAP notice packet to another MAPs. Therefore, the MAP(a) 1a to MAP(o) 1o can become a search packet reception node or a peripheral node, and supply information grasped by itself to another MAPs. In addition, the MAP(a) 1a to MAP(o) 1o can create a MAP notice request packet to be transmitted to neighbor MAPs having addresses stored in the neighbor MAP tables 16a to 16o, and transmit the MAP notice request packet. Therefore, the MAP (a) 1a to MAP (o) 1o can request the neighbor MAPs stored in the neighbor MAP tables 16a to 16o to return a MAP notice packet.

Each of MN(a) 2a and MN(b) 2b includes the NDMP unit 25 and the MAP selection policy holding unit 30. Therefore, the MN(a) 2a and MN(b) 2b can access the neighbor MAP tables 26a and 26b and select a neighbor MAP to be used, on the basis of the MAP selection policy. Therefore, the MN(a) 2a and MN(b) 2b can autonomously select an optimum neighbor MAP meeting the MAP selection policy from the neighbor MAP tables 26a and 26b, respectively.

In addition, the MN(a) 2a and MN(b) 2b use the delay value as one of the parameters for the MAP selection policy. The delay value is determined under the influence of various parameters, such as the link capacity between MAPs, the number of hops, the processing capability of the MAP itself, and the traffic volume. Therefore, the MN(a) 2a and MN(b) 2b can select the optimum MAP by using the delay value as one of the parameters of the MAP selection policy. The MN(a) 2a and MN(b) 2b use the processing capability, which is information other than the remoteness/ nearness decision information , as one of the parameters of the MAP selection policy. Therefore, the MN(a) 2a and MN (b) 2b can select the optimum MAP by considering not only the remoteness/nearness condition but also the state of the MAP itself.

Five neighbor MAPs having shortest delay values are registered in the neighbor MAP table in the order of increasing delay value. Therefore, the MN(a) 2a and MN(b) 2b can easily select a neighbor MAP meeting the MAP selection policy without using the anycast address.

[Second Embodiment]

[Mobile Communication System]

(General Configuration of Mobile Communication System)

The mobile communication system uses the HMIP, and includes a plurality of MAPs and a plurality of MNs. In the present embodiment, a decision criterion "a smaller number of hops between nodes indicates a shorter distance" is used as the decision criterion for determining whether the distance between nodes is short. As for the remoteness/ nearness decision information, the number of hops between nodes is used.

(Configuration of MAP)

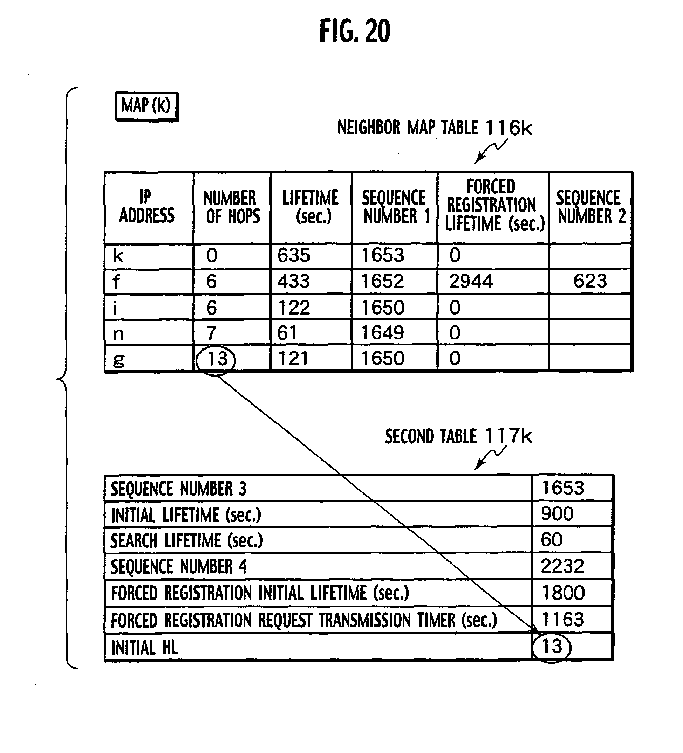

Except that the processing concerning the search for a MAP conducted by the NMDP unit 15, and the neighbor MAP table and the second table of the MAP are different, the MAP is substantially the same as the MAP 1 shown in Fig. 2. The neighbor MAP table and the second table of the MAP of the present embodiment will now be described by taking a neighbor MAP table 116k and a second table 117k of the MAP of the present embodiment and shown in Fig. 20 as an example. As shown in Fig. 20, the neighbor MAP table 116k stores an IP address, the number of hops, lifetime (in sec.), a sequence number 1, forced registration lifetime (in sec.), and a sequence number 2 for each neighbor MAP. The maximum number of node entries in the neighbor MAP table 116k is set to "5."

The number of hops is the number of hops between the MAP(k) itself having the neighbor MAP table 116k and each neighbor MAP. As a general rule, the neighbor MAP table 116k stores information concerning the neighbor MAPs according to the criterion, "five neighbor MAPs having smallest number of hops are stored in the order of increasing number of hops." The lifetime, the sequence number 1, the forced registration lifetime and the sequence number 2 are similar to those in the neighbor MAP table 16k shown in Fig. 3.

The second table 117k stores a sequence number 3, initial lifetime (in sec.), search lifetime (in sec.), sequence number 4, forced registration initial lifetime (in sec.), time of forced registration request transmission timer (in sec.), and an initial HL (Hop Limit). The sequence number 3, initial lifetime, search lifetime, sequence number 4, forced registration initial lifetime, time of forced registration request transmission timer are similar to those in the second table 17k shown in Fig. 3.

The value of the initial HL is the number of hops that becomes a reference value for determining the number of hops between the MAP(k) 1k itself and another MAP. The initial HL is set to the initial value of HL in the MAP notice packet. The initial HL of the MAP is set to the maximum value in the number of hops for each neighbor MAP stored in the neighbor MAP table 116k. If the neighbor MAP table 116k is in the state shown in Fig. 20, therefore, the second table 117k stores the number of hops "13" between the MAP(k) 1k and the MAP(g) 1g as the initial HL. The initial HL may not be set to the maximum value in the number of hops for each neighbor MAP stored in the neighbor MAP table 116k, but the initial HL may be previously set to a constant value in the second table 117k. Or, the initial HL may be set to a value obtained by adding a preset constant value to the maximum value in the number of hops for each neighbor MAP stored in the neighbor MAP table 116k.

(Configuration of MN)

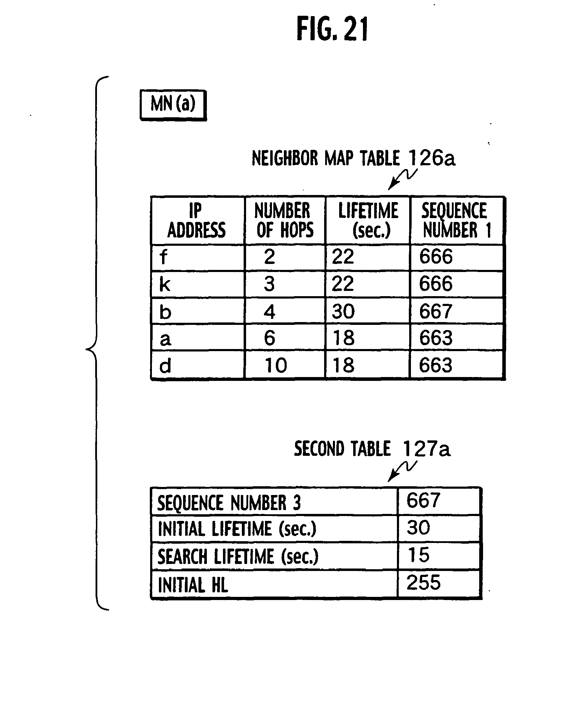

Except that the processing concerning the MAP search conducted by the NMDP unit 25, and the neighbor MAP table, the second table and the MAP selection policy included in the MN are different, the MN is substantially the same as the MN 2 shown in Fig. 4. The neighbor MAP table and the second table of the MN of the present embodiment will now be described by taking a neighbor MAP table 126a and a second table 127a of the MN(a) shown in Fig. 21. As shown in Fig. 21, the neighbor MAP table 126a stores an IP address, the number of hops, lifetime (in sec.), and a sequence number 1. The maximum number of node entries in the neighbor MAP table 126a is set to "5."

The number of hops is the number of hops between the MN and each neighbor MAP. The neighbor MAP table 126a stores information concerning neighbor MAPs according to the criterion, "five neighbor MAPs having smallest number of hops are stored in the order of increasing number of hops." The lifetime and the sequence number 1 are similar to those shown in the neighbor MAP table 26a shown in Fig. 5.

As shown in Fig. 21, the second table 127a stores a sequence number 3, an initial lifetime (in sec.), a search lifetime (in sec.), and an initial HL. The sequence number 3, the initial lifetime and the search lifetime are substantially the same as those in the second table 27a shown in Fig. 5. The initial lifetime is set to a short value. It is desirable to also set the search lifetime to a shorter value accordingly. As a result, the MN can effect a search for a MAP with high frequencies. Therefore, the MN can update the information concerning the neighbor MAPs, which changes according to the movement, with high frequencies. As a result, the MN can suitably grasp information concerning the neighbor MAPs according to the movement.

The initial HL is the number of hops that becomes a reference value for determining the number of hops between the MN(a) and a MAP. The initial HL is set to the initial value of HL in the MAP notice packet. The initial HL of the MN is a sufficiently large value. In the case where the number of hops between the MN and a neighbor MAP has varied largely according to a movement, therefore, the situation that MAP notice packets do not arrive at the MN at all can be prevented. The initial HL of the MN can be set to a previously determined constant value.

The MAP selection policy holding unit 30 in the MN according to the present embodiment holds a MAP selection policy, "a MAP located nearest." In the present embodiment, a decision criterion "a smaller number of hops between nodes indicates a shorter distance" is used as the decision criterion for determining whether the distance between nodes is short. Therefore, "a node located nearest" means "a node having a minimum number of hops between nodes."

[Method for searching for node]

A method for searching for a node (MAP) in the mobile communication system will now be described.

(Search for MAP effected by MAP)

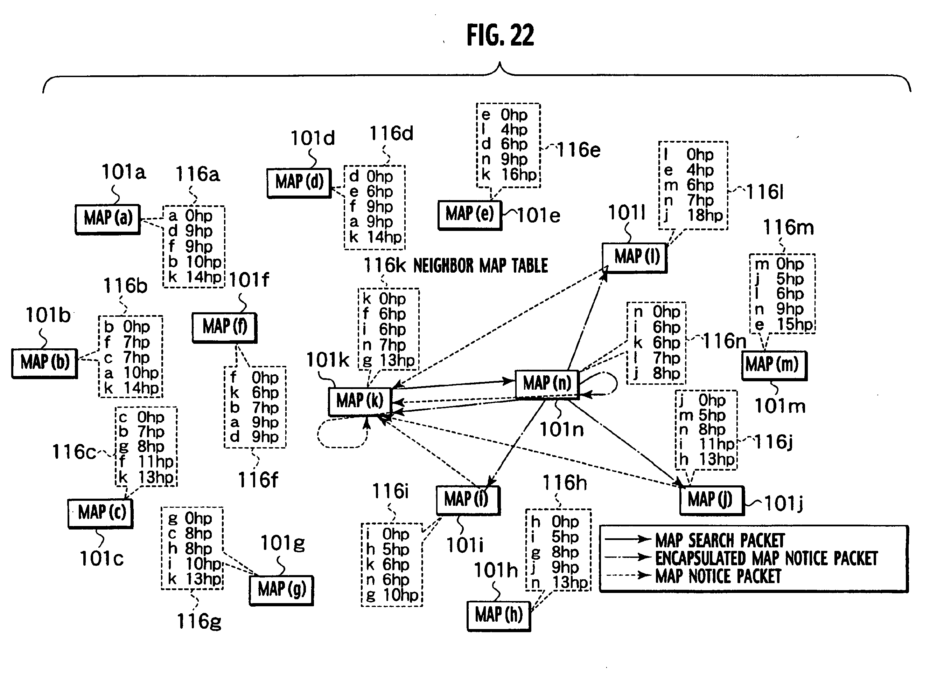

A search for a MAP effected by a MAP will now be described with reference to Figs. 22 and 20. Fig. 22 shows how a plurality of MAPs, MAP(a) 101a to MAP(n) 101n included in the mobile communication system form a group. In Fig. 22, the MNs are omitted in the illustration. In Fig. 22, neighbor MAP tables 116a to 116n respectively of the MAP(a) 101a to MAP(n) 101n are shown together with the MAP(a) 101a to MAP(n) 101n. For brevity of description, however, only IP addresses stored in the neighbor MAP tables 116a to 116n, and the number of hops between each of MAP(a) 101a to MAP(n) 101n respectively including the neighbor MAP tables 116a to 116n and each neighbor MAP are shown.

As shown in Fig. 22, the neighbor MAP tables 116a to 116n are formed in MAP(a) 101a to MAP(n) 101n, respectively.

A search for a MAP will now be described by taking the case where the neighbor MAP table 116k of the MAP (k) 101k is in a state shown in Fig. 20 as an example. The search lifetime in the second table 117k is set to 60 (sec.). The current lifetime for the MAP(n) 116n registered in the neighbor MAP table 116k as a neighbor MAP is 61 (sec.). The lifetime is decremented every second. One second later, therefore, the lifetime for the MAP(n) 116n in the neighbor MAP table 116k arrives at 60 (sec.), which is the search lifetime, and the lifetime coincides with the search lifetime. Thereupon, the MAP(k) 101k starts a search for a MAP with respect to the MAP(n) 101n.

1. Transmission and reception of MAP search packet and MAP notice packet

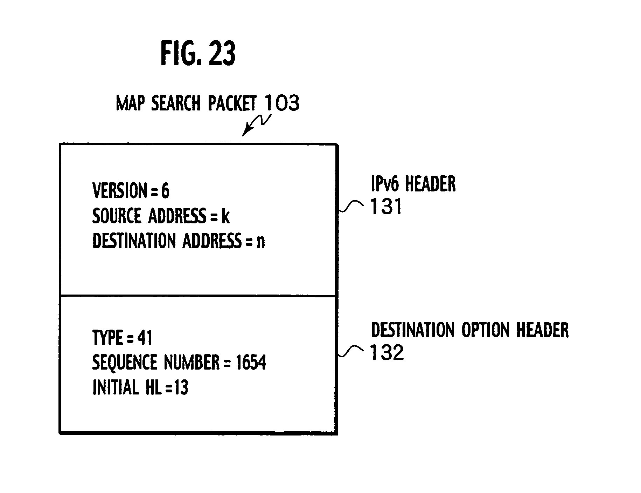

First, the MAP(k) 101k transmits a MAP search packet to the MAP(n) 101n, and the MAP(n) 101n receives it as represented by a solid line arrow in Fig. 22. In this case, therefore, the MAP(k) 101k becomes a search node, and the MAP(n) 101n becomes a search packet reception node. Specifically, the NMDP unit 15 in the MAP(k) 101k creates a MAP search packet 103 shown in Fig. 23, and the interface 19 transmits it.

As shown in Fig. 23, the MAP search packet 103 includes an IPv6 header 131 and a destination option header 132. A version for indicating the version of IP, a source address for indicating the transmission source of the MAP search packet 103, and a destination address for indicating the destination of the MAP search packet 103 are stored in the IPv6 header 131. A type, a sequence number for controlling the MAP search packet 103, and an initial HL are stored in the destination option header 132.

The NMDP unit 15 in the MAP(k) 101k sets the source address in the IPv6 header 131 to the IP address "k" of the MAP(k) 101k, and sets the destination address in the IPv6 header 131 to the IP address "n" of the MAP(n) 106n. The NMDP unit 15 in the MAP(k) 101k sets the type in the destination option header 132 to "41". In the present embodiment, the type "41" indicates the MAP search packet 103. The NMDP unit 15 in the MAP(k) 101k sets the sequence number in the destination header 132 to "1654", which is obtained by adding 1 to the value "1653" of the sequence number 3 in the second table 117k shown in Fig. 20. At this time, the NMDP unit 15 in the MAP(k) 101k also updates the value of the sequence number 3 in the second table 117k to set it to "1654." The NMDP unit 15 in the MAP (k) 101k copies the initial HL "13" in the second table 117k, and sets the initial HL in the destination option header 132 to the copied initial HL "13."

Upon receiving the MAP search packet 103, the MAP(n) 101n transmits an encapsulated MAP notice packet to each of the neighbor MAPs stored in the neighbor MAP table 116n in the MAP(n) 101n, i.e., the MAP(n) 101n, MAP (i) 101i, MAP(k) 101k, MAP(l) 1011 and MAP(j) 101j as represented by a dot-dash line in Fig. 22. The encapsulated MAP notice packet means a packet obtained by encapsulating a MAP notice packet returned from the MAP(n) 101n serving as a search packet reception node to the MAP(k) 101k serving as a search node. In other words, the MAP(n) 101n serving as the search packet reception node encapsulates the MAP notice packet with a header directed to the MAP(i) 101i to MAP(l) 1011 neighboring the MAP(n) 101n itself, and transmits a resultant encapsulated MAP notice packet. Therefore, the MAP(i) 101i to MAP(l) 1011 become peripheral nodes.

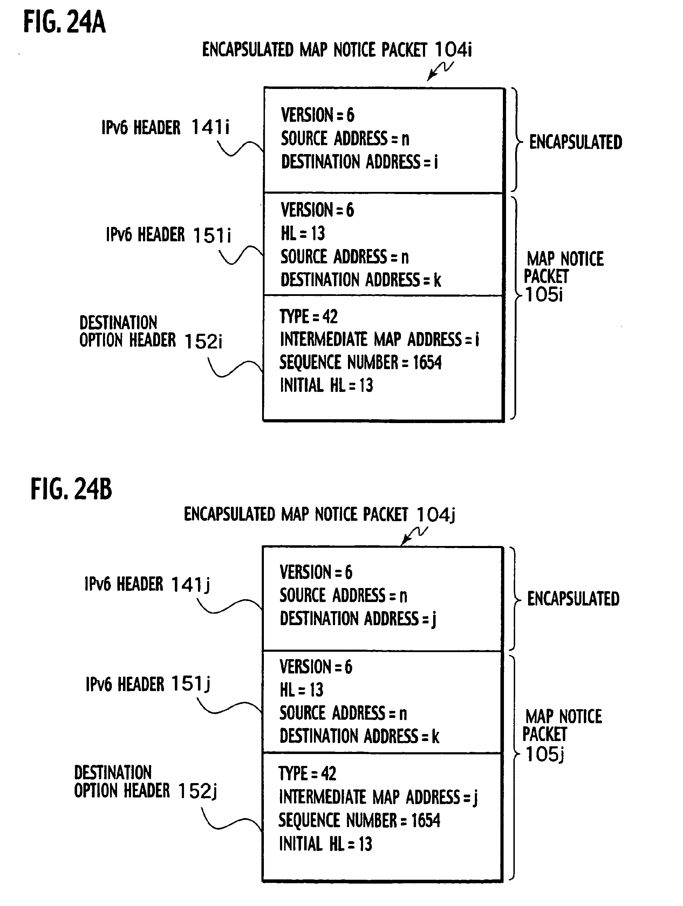

Specifically, the NMDP unit 15 in the MAP(n) 101n creates an encapsulated MAP notice packet, and the interface 19 transmits the encapsulated MAP notice request packet. Hereafter, this operation will be described by taking the transmission of an encapsulated MAP notice packet to each of the MAP(i) 101i and the MAP(j) 101j as an example. Fig. 24A shows an encapsulated MAP notice packet 104i to be transmitted to the MAP(i) 101i, and Fig. 24B shows a MAP notice packet 104j to be transmitted to the MAP(j) 101j.

As shown in Figs. 24A and 24B, the encapsulated MAP notice packets 104i and 104j include IPv6 headers 141i and 141j, and MAP notice packets 105i and 105j, respectively. The IPv6 headers 141i and 141j are headers respectively for encapsulating the MAP notice packets 105i and 105j to be returned from the MAP(n) 101n serving as the search packet reception node to the MAP(k) 101k serving as the search node. Versions for indicating the IP version, source addresses for indicating sources of the encapsulated MAP notice packets 104i and 104j, and destination addresses for indicating destinations of the encapsulated MAP notice packets 104i and 104j are stored in the IPv6 headers 141i and 141j, respectively.

The MAP notice packets 105i and 105j includes IPv6 headers 151i and 151j and destination option headers 152i and 152j, respectively. A version for indicating the IP version, an HL, a source address for indicating the source of the MAP notice packet, and a destination address for indicating a destination of the MAP notice packet are stored in each of the IPv6 headers 151i and 151j. A type, an intermediate MAP address, a sequence number for controlling the MAP notice packet 105i or 105 j , and an initial HL are stored in each of the destination option headers 152i and 152j. The intermediate MAP address is an address of a peripheral node through which the MAP notice packet 105i or 105j is passed.

As shown in Fig. 24A, the NMDP unit 15 in the MAP(n) 101n sets the source address in the IPv6 header 141i to the IP address "n" of the MAP(n) 101n, and sets the destination address in the IPv6 header 141i to the IP address "i" of the MAP(i) 101i. The NMDP unit 15 in the MAP(n) 101n copies the initial HL "13" in the received MAP search packet 103 shown in Fig. 23, and sets the HL in the IPv6 header 151i to the copied initial HL "13." The NMDP unit 15 in the MAP(n) 101n sets the source address in the IPv6 header 151i to the IP address "n" of the MAP(n) 101n, and sets the destination address in the IPv6 header 151i to the IP address "k" of the MAP(k) 101k.

The NMDP unit 15 in the MAP(n) 101n sets the type in the destination option header 152i to "42." In the present embodiment, the type "42" indicates a MAP notice packet. The NMDP unit 15 in the MAP(n) 101n copies the destination address "i" in the IPv6 header 141i, which is the transmission destination of the packet obtained by encapsulating the MAP notice packet 105i, and sets the intermediate MAP address in the destination option header 152i to the copied destination address "i." The NMDP unit 15 in the MAP(n) 101n copies the value "1654" of the sequence number and the value "13" of the initial HL in the received MAP search packet 103 shown in Fig. 23, and sets the sequence number and the initial HL in the destination option header 152i to the copied values, respectively.

In the same way, the NMDP unit 15 in the MAP(n) 101n creates the encapsulated MAP notice packet 104j to be sent to the MAP(j) 101j shown in Fig. 24B. The NMDP unit 15 in the MAP(n) 101n sets the destination address in the IPv6 header 141j to the IP address "j" of the MAP(j) 101j. The NMDP unit 15 in the MAP(n) 101n copies the destination address "j" in the IPv6 header 141j, which is the transmission destination of the packet obtained by encapsulating the MAP notice packet 105j, and sets the intermediate MAP address in the destination option header 152j to the copied destination address "j."

Upon receiving the encapsulated MAP notice packet, each of MAP(i) 101i to MAP(l) 101l and MAP(n) 101n conducts decapsulation for removing the outermost IPv6 header, and takes out a MAP notice packet to be returned from the MAP(n) 101n serving as the search packet reception node to the MAP(k) 101k serving as the search node. Each of MAP(i) 101i to MAP(l) 101l and MAP(n) 101n transmits the MAP notice packet to the MAP(k) 101k as represented by a dot line arrow in Fig. 22. Specifically the IP layer unit 13 in each of MAP(i) 101i to MAP(l) 101l and MAP(n) 101n decapsulates the encapsulated MAP notice packet, and the interface 19 transmits the MAP notice packet taken out. Thus, MAP(n) 101n serving as the search packet reception node returns the MAP notice packet to the MAP(k) 101k serving as the search node via the MAP(i) 101i to MAP(l) 101l serving as peripheral nodes.

Thus, the MAP(n) 101n serving as the search packet reception node encapsulates the MAP notice packet with the IPv6 header having an address of a neighbor MAP stored in the neighbor MAP table 116n as its destination, and conducts tunnel transfer of the encapsulated MAP notice packet. As a result, the MAP(n) 101n serving as the search packet reception node can return the MAP notice packet to the MAP(k) 101k serving as the search node via the MAP(i) 101i to MAP(l) 101l serving as peripheral nodes. Besides such tunnel transfer, the MAP serving as the search packet reception node can return the MAP notice packet to the MAP serving as the search node via MAPs serving as peripheral nodes, by using a route control header, which is an extension header of an option of IPv6.

2. Inter-node information determination, MAP detection, and neighbor MAP table update

Upon receiving the MAP notice packet, the MAP(k) 1k serving as the search node conducts inter-node information determination, MAP detection, and neighbor MAP table update on the basis of the returned MAP notice packet. Hereafter, this operation will be described by taking MAP notice packets transmitted by the MAP(i) 101i and MAP(j) 101j as an example.

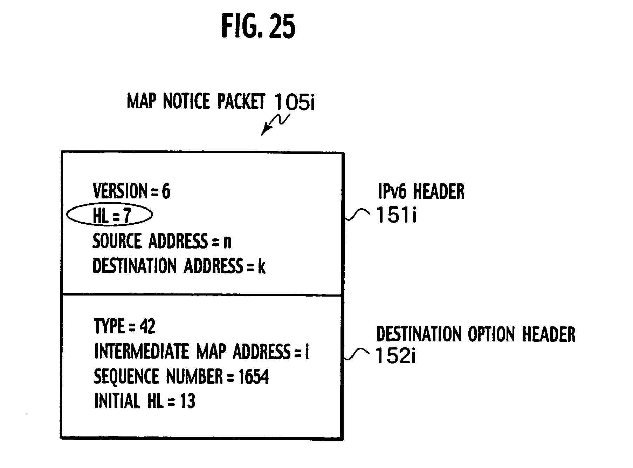

First, the case where the interface 19 in the MAP(i) 101i has transmitted the MAP notice packet 105i will now be described. The MAP(k) 101k serving as the search node receives the MAP notice packet 105i shown in Fig. 25. The MAP(k) 101k determines the number of hops between the MAP(k) 101k itself serving as the search node and the MAP(i) 101i serving as a peripheral node through which the MAP notice packet 105i is passed. A MAP having the intermediate MAP address included in the MAP notice packet 105i as its address is the peripheral node through which the MAP notice packet 105i is passed.

Specifically, the NMDP unit 15 in the MAP(k) 101k acquires a value "7" of the HL included in the IPv6 header 151i and a value "13" of the initial HL included in the destination header 152i from the received MAP notice packet 105i. The value of HL in the MAP notice packet 105i, which is taken out by decapsulation to remove the IPv6 header 141i from the encapsulated MAP notice packet 105i received by the MAP(i) 101i, is "13" as shown in Fig. 24A. On the other hand, the value of HL in the MAP notice packet 105i received by the MAP(k) 101k is "7" as encircled in Fig. 25, because the value of HL in the MAP notice packet 105i is decreased by "1" every transfer while the MAP notice packet 105i is transmitted from the MAP(i) 101i to the MAP(k) 101k.

The NMDP unit 15 in the MAP(k) 101k conducts a calculation for subtracting the value "7" of HL from the value "13" of the acquired initial HL, and thereby obtains the number of hops between the MAP (k) 101k and the MAP (i) 101i . The result of the calculation becomes 13 - 7 = 6. In this way, the number of hops between the MAP(k) 101k and the MAP (i) 101i having the intermediate MAP address included in the MAP notice packet 105i as its address, which is newly determined in the MAP(k) 101k, becomes "6."

Subsequently, the NMDP unit 15 in the MAP(k) 101k conducts retrieval to determine whether the intermediate address "i" in the MAP notice packet 105i is included in the IP addresses in the neighbor MAP table 116k shown in Fig.

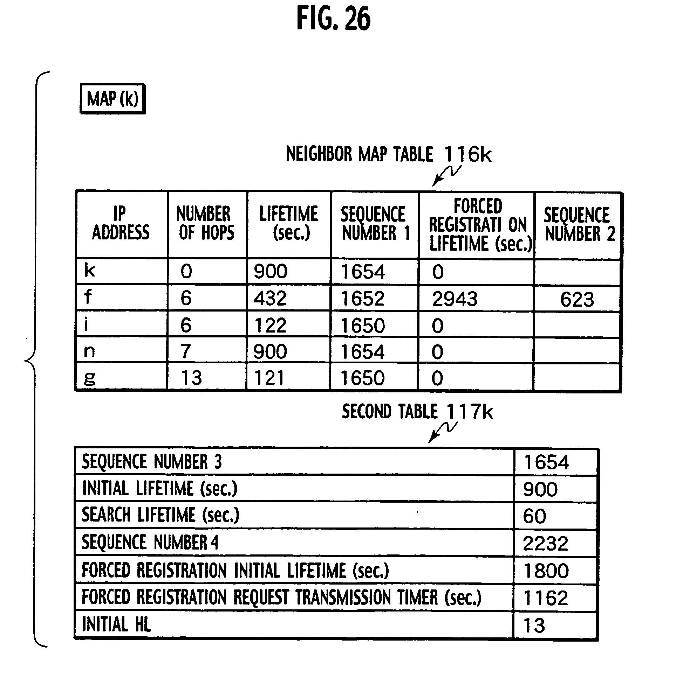

26. Fig. 26 shows states of the neighbor MAP table 116k and the second table 117k in the MAP(k) 101k at the time when the MAP notice packet 105i shown in Fig. 25 has been received. In the neighbor MAP table 116k and the second table 117k shown in Fig. 26, there are places already updated from the state immediately before the MAP search is started shown in Fig. 20.

If the intermediate address "i" in the newly received MAP notice packet 105i exists in the neighbor MAP table 116k, then the NMDP unit 15 in the MAP(k) 101k judges the MAP(i) 101i through which the MAP notice packet 105i has been passed to be an already detected MAP. In this case, therefore, the NMDP unit 15 in the MAP(k) 101k judges that the MAP notice packet 105i should be used to update the information concerning the MAP(i) 101i already registered as a neighbor MAP. In the case of Fig. 26, the intermediate MAP address "i" is included in the IP addresses in the neighbor MAP table 116k. Therefore, the NMDP unit 15 in the MAP(k) 101k judges that the MAP notice packet 105i should be used to update the information concerning the MAP(i) 101i.

Subsequently, the NMDP unit 15 in the MAP(k) 1k determines whether update of existing information concerning the MAP(i) 101i in the neighbor MAP table 116k based on the received MAP notice packet 105i should be executed. Specifically, the NMDP unit 15 in the MAP(k) 101k first compares the sequence number "1654" in the received MAP notice packet 105i with the sequence number 1 "1650" for the MAP(i) 101i in the neighbor MAP table 116k (Fig. 26) at the time when the MAP notice packet 105i is received. If the sequence number in the MAP notice packet 105i is higher, then the NMDP unit 15 in the MAP(k) 101k judges that the information based on the MAP notice packet 105i is the latest information and update of the information should be executed. In the case of Fig. 26, the sequence number in the MAP notice packet 105i is higher. Therefore, the NMDP unit 15 in the MAP(k) 101k judges that the update of the information should be executed.

On the other hand, if the sequence number in the MAP notice packet 105i is lower than the sequence number 1 for the MAP(i) 101i in the neighbor MAP table 116k, then the NMDP unit 15 in the MAP(k) 101k judges that update of the information should not be executed.

Subsequently, the NMDP unit 15 in the MAP(k) 101k executes update of information concerning the MAP(i) 101i in the neighbor MAP table 116k. The NMDP unit 15 in the MAP(k) 101k acquires the sequence number "1654" from the MAP notice packet 105i (Fig. 25). The NMDP unit 15 in the MAP(k) 101k acquires the initial lifetime 900 (sec.) from the second table 17k (Fig. 26). The NMDP unit 15 in the MAP(k) 101k conducts updating so as to have the latest information by replacing the existing number of hops "6" concerning the MAP(i) 101i in the neighbor MAP table 116k (Fig. 26) with the determined number of hops "6", replacing the existing lifetime 122 (sec.) with the acquired initial lifetime 900 (sec.), and replacing the existing sequence number 1 "1650" with the acquired sequence number "1654."

On the other hand, if the intermediate address "i" in the newly received MAP notice packet 105i does not exist in the neighbor MAP table 116k in the MAP(k) 101k serving as the search node, then the NMDP unit 15 in the MAP(k) 101k judges the MAP(i) 101i through which the MAP notice packet 105i has been passed to be a newly detected MAP. In other words, the NMDP unit 15 in the MAP(k) 101k judges that there is a possibility that the MAP(i) 101i is newly registered in the neighbor MAP table 116k in the MAP(k) 101k as a neighbor MAP for the MAP(k) 101k.

In this case, the NMDP unit 15 in the MAP(k) 101k conducts a comparison to determine whether the number of hops between the MAP(k) 101k and the MAP(i) 101i determined on the basis of the MAP notice packet 105i is smaller than the maximum value in the number of hops for the neighbor MAPs stored in the neighbor MAP table 116k in the MAP(k) 101k at the time when the MAP notice packet 105i is received. If the number of hops between the MAP(k) 101k and the MAP(i) 101i is equal to the maximum value in the number of hops stored in the neighbor MAP table 116k in the MAP(k) 101k, then the NMDP unit 15 in the MAP(k) 101k judges that the MAP(i) 101i should not be newly registered in the neighbor MAP table 116k as a neighbor MAP for the MAP(k) 101k.

On the other hand, if the number of hops between the MAP(k) 101k and the MAP(i) 101i is less than the maximum value in the number of hops stored in the neighbor MAP table 116k in the MAP(k) 101k at the time when the MAP notice packet 105i is received, then the NMDP unit 15 in the MAP(k) 101k determines whether the forced registration lifetime for a neighbor MAP that is larger in number of hops than the MAP(i) 101i in the neighbor MAP table 116k in the MAP(k) 101k is 0 (sec.).

If the forced registration time for all neighbor MAPs that are larger in number of hops than the MAP(i) 101i is not 0 (sec.), then the NMDP unit 15 in the MAP(k) 101k judges that the MAP(i) 101i should not be newly registered in the neighbor MAP table 116k in the MAP(k) 101k as a neighbor MAP for the MAP(k) 101k.

On the other hand, if there is a neighbor MAP that is larger in number of hops than the MAP(i) 101i and that is 0 (sec.) in forced registration time, then the NMDP unit 15 in the MAP(k) 101k judges that the MAP(i) 101i should be newly registered in the neighbor MAP table 116k in the MAP(k) 101k as a neighbor MAP for the MAP(k) 101k. First, the NMDP unit 15 in the MAP(k) 101k erases information concerning a neighbor MAP having the largest number of hops among neighbor MAPs that are greater in number of hops than the MAP(j) 101j and that are 0 (sec.) in forced registration time. And the NMDP unit 15 in the MAP(k) 101k updates the neighbor MAP table 116k on the basis of the MAP notice packet 105j.

Specifically, the NMDP unit 15 in the MAP(k) 101k acquires the intermediate MAP address and the sequence number from the MAP notice packet 105i. and acquires the initial lifetime from the second table 117k. The NMDP unit 15 in the MAP(k) 101k stores the determined number of hops, the acquired intermediate MAP address, initial lifetime and sequence number, and the initial value 0 (sec.) of the forced registration lifetime in the neighbor MAP table 116k in the MAP(k) 101k, as information concerning the MAP(i) 101i. In this way, the MAP(i) 101i, which is a newly detected neighbor MAP for the MAP(k) 101k, is registered in the neighbor MAP table 116k.

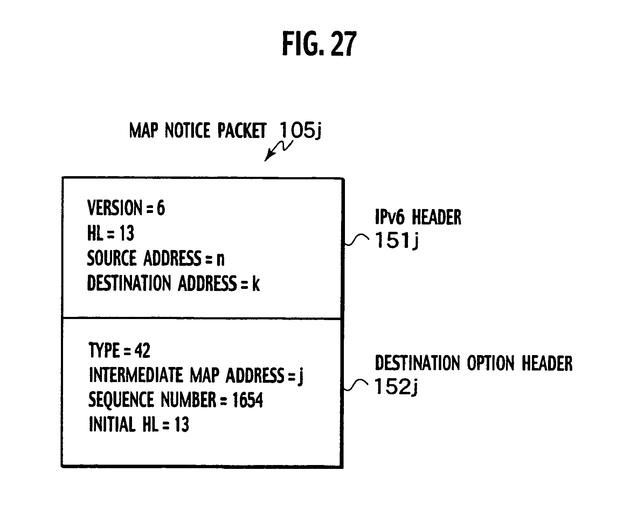

The case where the MAP(j) 101j has transmitted the MAP notice packet 105j will now be described. The MAP (j) 101j conducts decapsulation to remove the IPv6 header 141j from the received encapsulated MAP notice packet 104j, and transmits the MAP notice packet 105j shown in Fig. 27 toward the MAP(k) 101k.

It is now supposed that the number of hops between the MAP(j) 101j and the MAP(k) 101k is 15 at this time. In the MAP notice packet 105j shown in Fig. 27, the value of HL in the IPv6 header 151j is "13." Before the MAP notice packet 105j transmitted from the MAP(j) 101j arrives at the MAP(k) 101k, the value of HL in the MAP notice packet 105j is decreased by 1 every transfer and becomes 0. In other words, the value of HL in the MAP notice packet 105j is too small. On the route between the MAP(j)101j and the MAP(k) 101k, the value of HL becomes 0 and the MAP notice packet 105j disappears. Therefore, the MAP notice packet 105j does not arrive at the MAP(k) 101k. In the MAP (k) 101k, therefore, update of the neighbor MAP table 116k based on the MAP notice packet 105j is not conducted.

Thus, it is desirable to set the initial value of HL in the IPv6 header 151j in the MAP notice packet 105j to the maximum value in the number of hops for neighbor MAPS stored in the neighbor MAP table 116k. In other words, it is desirable to set the initial HL in the second table 117k, which becomes the initial value of HL set in the IPv6 header 151j, to the maximum value in the number of hops for neighbor MAPs stored in the neighbor MAP table 116k as shown in Fig. 20. As a result, the MAP notice packet 105j transmitted from the MAP(j) 101j, which is a peripheral node that is located so far away that it may not be registered in the neighbor MAP table 116k, can be extinguished on the route between the MAP(j) 101j and the MAP(k) 101k serving as the search node. In other words, the MAP(j) 101j that is greater in number of hops than the neighbor MAPs in the current neighbor MAP table 116k is not registered in the neighbor MAP table 116k. It is possible to extinguish the MAP notice packet transmitted from the MAP(j) 101j without being received by the MAP (k) 101k. Therefore, the control load of the MAP(k) 101k serving as the search node can be reduced, and transfer of extra packets can be prevented.

Similarly in the node searchmethod of the present embodiment, erasing of a neighbor MAP in the case where a MAP notice packet is not returned, request for registration of a MAP in the registration MAP table issued by another MAP, and arrangement of a new MAP can be conducted in the same way as the first embodiment.

(Search for MAP effected by MN)

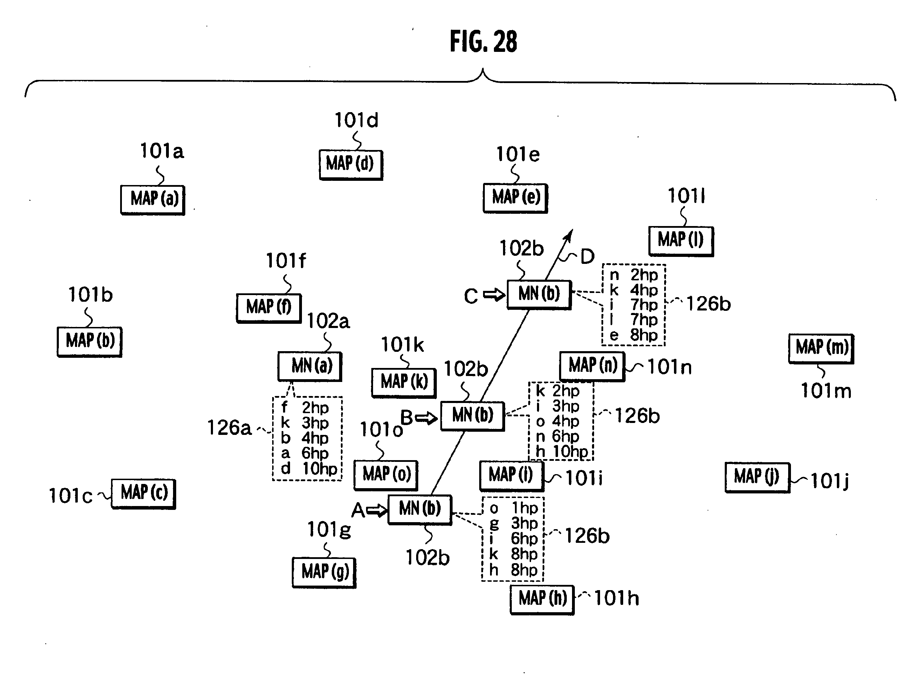

A search for a MAP effected by a MN will now be described with reference to Figs. 28 and 21. Fig. 28 shows a plurality of MAPs, MAP(a) 101a to MAP(o) 101o, MN(a) 102a and MN(b) 102b included in the mobile communication system. In Fig. 28, neighbor MAP tables 126a and 126b respectively included in the MN(a) 102a and MN(b) 102b are shown together with the MN(a) 102a and MN(b) 102b. For brevity of description, however, only IP addresses stored in the neighbor MAP tables 126a and 126b, and the number of hops between the MN(a) 102a and MN(b) 102b and neighbor MAPs are shown.

1. Search for MAP

First, as to how the MN(b) 102b searches for a MAP while moving on a travel route indicated by an arrow D in Fig. 28 will now be described. In the same way as the search for a MAP effected by a MAP, the MN(b) 102b searches for a MAP. If the lifetime of the information concerning any of MAPs registered in the neighbor MAP table 126b in the MN(b) 102b arrives at the search lifetime when the MN(b) 102b is in a position indicated by an arrow A in Fig. 28, then the MN(b) 102b starts a search for a MAP. Specifically, the NMDP unit 25 in the MN(b) 102b transmits a MAP search packet to the MAP. Subsequently, the NMDP unit 25 in the MN(b) 102b receives a MAP notice packet for the MAP search packet returned from a MAP that has become a search packet reception node via a MAP that has become a peripheral node. Subsequently, the NMDP unit 25 in the MN(b) 102b detects a new MAP on the basis of the received MAP notice packet, acquires the latest information concerning existing neighbor MAPs, and updates the neighbor MAP table 126b.

As a result, information concerning the MAP(o) 101o, MAP(g) 101g, MAP(i) 101i, MAP(k) 101k and MAP(h) 101h, which are neighbor MAPs each having a smaller number of hops with respect to the MN(b) 102b located in the position indicated by the arrow A in Fig. 28, is registered in the neighbor MAP table 126b.

While the MN(b) 102b moves on the travel route indicated by the arrow D from the position indicated by the arrow A to a position indicated by an arrow C via a position indicated by an arrow B, the lifetime values for information concerning MAPs registered in the neighbor MAP table 126b arrives at the search lifetime one after another, and the MN(b) 102b effects a search for a MAP repetitively.

In the position indicated by the arrow B in Fig. 28, therefore, information concerning the MAP (k) 101k, MAP (i) 101i , MAP(o) 101o , MAP(n) 101n and MAP(h) 101h, which are neighbor MAPs each having a smaller number of hops with respect to the MN(b) 102b located in the position indicated by the arrow B, is registered in the neighbor MAP table 126b. In the position indicated by the arrow C in Fig. 28, information concerning the MAP (n) 101n, MAP(k) 101k, MAP(i) 101i, MAP(l) 1011 and MAP(e) 101e, which are neighbor MAPs each having a smaller number of hops with respect to the MN(b) 102b located in the position indicated by the arrow C, is registered in the neighbor MAP table 126b.

2. Selection of MAP

Selection of a MAP will now be described by taking the case where the MN(a) 102a selects a MAP that is the most suitable for use, as an example. As described above, the MN(a) 102a has the neighbor MAP table 126a shown in Fig. 21. The MAP selection policy holding unit 30 of the MN(a) 102a holds a MAP selection policy represented as "a MAP located nearest, i.e., a MAP having a minimum number of hops between nodes."

Therefore, the NMDP unit 25 in the MN(a) 102a collates information concerning neighbor MAPs stored in the neighbor MAP table 126a shown in Fig. 21 with the MAP selection policy held in the MAP selection policy holding unit 30, and selects an optimum neighbor MAP. As a result, the NMDP unit 25 in the MN(a) 102a selects the MAP(f) 101f as the neighbor MAP to be used. The NMDP unit 25 in the MN(a) 102a notifies the mobility management unit 24 of an address of the MAP(f) 1f, which is the selected neighbor MAP.

The MN(a) 102a registers the home address and a care of address now in use in the MAP(f) 1f. The MN(a) 102a registers the home address and an address of the MAP(f) 1f in the HA. In this way, the MN(a) 102a can be provided for the transfer service for a packet transmitted to the home address of the MN(a) 102a, which is conducted by the MAP (b) 101b.

According to the mobile communication system, the MAPs, the MNs, and the node search method, the following effects can be obtained in addition to the effects obtained by the mobile communication system, the MAPS, the MNs, and the node search method in the first embodiment.

The neighbor MAP table stores five neighbor MAPs that are smallest in number of hops in the order of increasing number of hops. The search node in the MAP(a) 101a to MAP(o) 101o, the MN(a) 102a and MN(b) 102b transmits a node search packet to a neighbor MAP having an address stored in the neighbor MAP table of the search node. A MAP that has received the node search packet and has become the search packet reception node returns a MAP notice packet, which is passed through peripheral nodes. Specifically, the MAP that has become the search packet reception node returns a MAP notice packet to the MAP serving as the search node, via neighbor MAPs having addresses stored in the neighbor MAP table of the MAP serving as the search packet reception node. Therefore, the MAP notice packet includes information, such as the number of hops and addresses, concerning MAPs that are peripheral nodes through which the MAP notice packet is passed.

Therefore, the MAP serving as the search packet reception node can supply information concerning neighbor MAPs stored in the neighbor MAP table of itself to the MAP serving as the search node. Therefore, the search node in the MAP(a) 101a to MAP(o) 101o, the MN(a) 102a and MN(b) 102b can grasp information, such as the number of hops and addresses, concerning a larger number of MAPs. In addition, the search node in the MAP(a) 101a to MAP(o) 101o, the MN(a) 102a and MN(b) 102b can obtain information concerning MAPs that are located comparatively near to the search node, and detect neighbor MAPs that are small in number of hops efficiently.

The MAP(a) 101a to MAP(o) 101o include the NDMP unit 15, the neighbor MAP tables 116a to 116o, and the interface 19, respectively. Therefore, the MAP(a) 101a to MAP(o) 101o can access the neighbor MAP tables 116a to 116o, create a MAP notice packet that is to be passed through peripheral nodes, on the basis of the stored information, and return the MAP notice packet to other MAPs. Therefore, the MAP(a) 101a to MAP(o) 101o can supply information concerning neighbor MAPs stored in their own neighbor MAP tables to other MAPs.

[Variations]

The present invention is not limited to the first and second embodiments, and various variations are possible.

(First Variation)

Service Nodes according to the present invention include not only nodes like mobility management nodes, which conduct packet processing, but also stationary nodes, such as printer servers, FTP (File Transfer Protocol) servers and electric appliances and mobile nodes, such as mobile terminals, PDAs (Personal Digital Assistants) and automobiles. In the case of a mobile node, it serves as a node for relaying a packet to a mobile node of transmission destination. As a result, the ad hoc technique or multi-hop connection technique can be applied thereto.

Furthermore, in the case where as a plurality of nodes a plurality of FTP servers form a group and a client node downloads a file from any FTP server, or in the case where a client node uploads a file to any FTP server, the nodes and the node search method according to the present invention can be applied. As a result, the client node can select an optimum server from among detected FTP servers, and use the optimum server. Specifically, if own-node information, such as the processing capability or the traffic volume of the FTP server, and inter-node information, such as the delay value or the number of hops in packet transmission between the client node and the FTP server, are prescribed as a selection criterion for selecting a node to be used, then a suitable FTP server can be selected by taking them into consideration.

For example, if an FTP server is selected on the basis of a selection criterion that an FTP server having the shortest delay value should be selected, then the client node can shorten the time required for downloading and uploading, and use the transmission line efficiently. In this way, the nodes and the node search method according to the present invention can be applied to various techniques that necessitate the detection of another node or the grasping of the state of another node.

In the first and second embodiments, only MAPs form a group. The mobile communication system may include a plurality of groups. In other words, the mobile communication system can be formed by gathering a plurality of groups each formed by gathering nodes having the same function, such as a groups of FTP servers, a group of printer servers, and a group of mobile nodes. In this case, a criterion suitable for each group can be adopted as a decision criterion for judging remoteness/nearness. One node may belong to a plurality of groups.

[Second Variation]

In the first and second embodiments, a MAP notice packet including node information, such as the delay value, the number of hops and the processing capability, is used. A MAP that has become a search packet reception node or a peripheral node may create a MAP notice packet including an IP address of a neighbor MAP stored in its own neighbor MAP table, and return the MAP notice packet to a MAP or MN serving as the search node. In this case too, the MAP or MN serving as the search node can grasp an IP address of another MAP, detect a MAP, and register the detected MAP in the neighbor MAP table. In addition, it is possible to reduce the information included in the MAP notice packet, and make the packet transmission and packet processing more efficient.

In this case, the MAP or MN serving as the search node transmits data for investigating node information to a MAP detected on the basis of the MAP notice packet. The detected MAP returns response data in response to the received data. The MAP or MN serving as the search node updates the neighbor MAP table. As the data for investigating the node information, for example, a ping (Packet Internet Groper) request can be used. As the response data, for example, a pin response can be used.

Specifically, the MAP or MN serving as the search node transmits a ping request for investigating the delay value and the number of hops in packet transmission between the MAP serving as the search node and a MAP detected on the basis of the MAP notice packet, to an IP address of the detected MAP. Upon receiving the ping request, the detected MAP returns a ping response in response to the ping request. Upon receiving the ping response, the MAP or MN serving as the search node updates the neighbor MAP table on the basis of the received ping response.

In this case, the NMDP unit 15 in the MAP or the NMDP unit 25 in the MN functions as a data creation unit, which creates data for investigating node information to be transmitted to the detected node, such as a ping request. The interface 19 in the MAP or the interface 29 in the MN functions as the communication unit, which transmits created data, and receives response data corresponding to the data returned from the detected node. In addition, the NMDP unit 15 in the MAP or the NMDP unit 25 in the MN functions as the update unit, which updates the neighbor MAP table on the basis of the returned response data.

In this case, by using the data for investigating the node information and its response data, such as the ping request and ping response, the MAP or MN serving as the search node can also grasp the node information, such as various kinds of own-node information and inter-node information concerning the detected MAP. Furthermore, by receiving response data (ping response) depending upon the situation at the time of transmission of the data (ping request) for investigating the node information, the MAP or MN serving as the search node can grasp the node information depending upon the situation at that time, and hold the node information in the neighbor MAP table dynamically.

Furthermore, after the MAP or MN has registered a MAP in the neighbor MAP table as a neighbor MAP, the MAP or MN can investigate the node information, such as the delay value and the number of hops between the MAP or MN and an already detected neighbor MAP, as occasion demands by using the data for investigating the node information and its response data, such as the ping request and ping response. Further, the MAP or MN can update the neighbor MAP table on the basis of the node information, and hold the latest information.

(Third Variation)

In the first and second embodiments, IPv6 is used. However, IPv4 can also be used. In the case where IPv4 is used, a packet obtained by storing information stored in the destination option header of a MAP search packet, a MAP notice request packet, a MAP notice packet, a neighbor MAP registration request packet, or a neighbor MAP registration acknowledgement packet, in a data part of an IPv4 packet is used. The kind of the packet indicated by the type in the destination option header is indicated by using the port number in the UDP header.

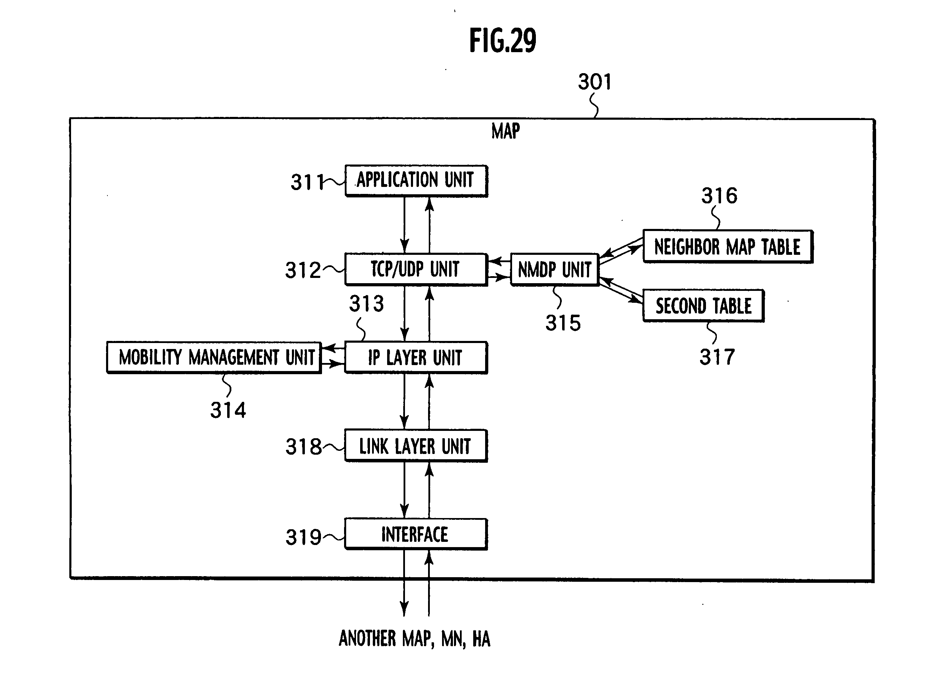

Fig. 29 shows a configuration of a MAP 301 in the case where IPv4 is used. The MAP 301 comprises an application unit 311, a TCP/CDP unit 312, an IP layer unit 313, a mobility management unit 314, an NMDP unit 315, a neighbor MAP table 316, a second table 317, a link layer unit 318 and an interface 319. The application unit 311, the mobility management unit 314, the link layer unit 318 and the interface 319 are substantially the same as the application unit 11, the mobility management unit 14, the link layer unit 18 and the interface 19 of the MAP 1 shown in Fig. 2.

The TCP/UDP unit 312 is connected to the NDMP unit 315. If the TCP/UDP unit 312 has acquired a packet concerning a search for a neighbor MAP from the IP layer unit 313, then the TCP/UDP unit 312 supplies the packet to the NDMP unit 315. The TCP/UDP unit 312 acquires a packet concerning a search for a neighbor MAP from the NDMP unit 315, and supplies the packet to the IP layer unit 313. The TCP/UDP unit 312 judges the kind of the packet concerning the search for a MAP on the basis of a port number in a TCP header of the packet. Except for these points, the TCP/UDP unit 312 is substantially the same as the TCP/UDP unit 12 of the MAP 1 shown in Fig. 2.

The NDMP unit 315 is connected to the TCP/UDP unit 312. The NDMP unit 315 conducts processing on a packet concerning a search for a MAP acquired from the TCP/UDP unit 312. Furthermore, the NDMP unit 315 access the neighbor MAP table 316 and the second table 317, creates a packet concerning a search for a MAP, and supplies the packet to the TCP/UDP unit 312. Thus, the NDMP unit 315, the neighbor MAP table 316 and the second table 317 are substantially the same as the NDMP unit 15, the neighbor MAP table 16 and the second table 17 in the MAP 1 shown in Fig. 2 except that the processing is conducted at the TCP/UDP level. Except that the IP layer unit 313 is not connected to the NDMP unit 315 and the IP layer unit 313 does not conduct processing on a packet concerning a search for a MAP, the IP layer unit 313 is substantially the same as the IP layer unit 13 shown in Fig. 2.

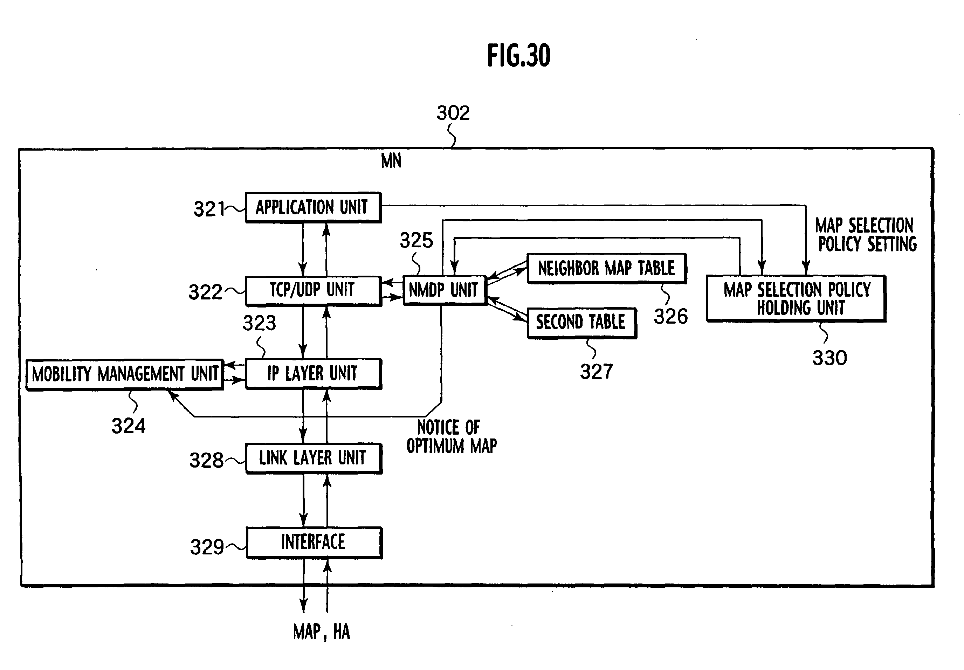

Fig. 30 shows a configuration of a MN 302 in the case where IPv4 is used. The MN 302 comprises an application unit 321, a TCP/CDP unit 322, an IP layer unit 323, a mobility management unit 324, an NMDP unit 325, a neighbor MAP table 326, a second table 327, a link layer unit 328, an interface 329 and a MAP selection policy holding unit 330.

The application unit 321, the mobility management unit 324, the link layer unit 328 and the interface 329 are substantially the same as the application unit 21, the mobility management unit 24, the link layer unit 28 and the interface 29 of the MN 2 shown in Fig. 4.

The TCP/UDP unit 322 is connected to the NDMP unit 325. If the TCP/UDP unit 322 has acquired a packet concerning a search for a neighbor MAP from the IP layer unit 323, then the TCP/UDP unit 322 supplies the packet to the NDMP unit 325. The TCP/UDP unit 322 acquires a packet concerning a search for a MAP from the NDMP unit 325, and supplies the packet to the IP layer unit 323. The TCP/UDP unit 322 judges the kind of the packet concerning the search for a MAP on the basis of a port number in a TCP header of the packet. Except for these points, the TCP/UDP unit 322 is substantially the same as the TCP/UDP unit 12 of the MN 2 shown in Fig. 4.

The NDMP unit 325 is connected to the TCP/UDP unit 322. The NDMP unit 325 conducts processing on a packet concerning a search for a MAP acquired from the TCP/UDP unit 322. Furthermore, the NDMP unit 325 accesses the neighbor MAP table 326 and the second table 327, creates a packet concerning a search for a MAP, and supplies the packet to the TCP/UDP unit 322. Thus, the NDMP unit 325, the neighbor MAP table 326, the second table 327 and the MAP selection policy holding unit 330 are substantially the same as the NDMP unit 25, the neighbor MAP table 26, the second table 27 and the MAP selection policy holding unit 30 in the MN 2 shown in Fig. 4 except that the processing is conducted at the TCP/UDP level. Except that the IP layer unit 323 is not connected to the NDMP unit 325 and the IP layer unit 323 does not conduct processing on a packet concerning a search for a MAP, the IP layer unit 323 is substantially the same as the IP layer unit 23 shown in Fig. 4.

(Fourth Variation)

In peripheral nodes, there is a MAP that directly neighbors a MAP serving as the search packet reception node, and a MAP that indirectly neighbors the MAP serving as the search packet reception node. For example, denoting a MAP that directly neighbors a MAP serving as the search packet reception node by first neighbor MAP, a second neighbor MAP that directly neighbors the first neighbor MAP and a third neighbor MAP that directly neighbors the second neighbor MAP become MAPs that indirectly neighbor the MAP serving as the search packet reception node.

In the first embodiment, a MAP notice request packet is transmitted to a MAP serving as a peripheral node that directly neighbors a MAP serving as the search packet reception node, and the peripheral node that has received the MAP notice request packet transmits a MAP notice packet. However, a MAP serving as a peripheral node that directly neighbors a MAP serving as the search packet reception node may further transmit a MAP notice request packet to a MAP having an address stored in the neighbor MAP table in the MAP serving as the peripheral node.

As a result, a MAP serving as the search node can also receive a MAP notice packet from a MAP serving as a peripheral node that indirectly neighbors a search packet reception node. In the same way, upon receiving a MAP notice request packet, a MAP serving as a peripheral node may create a MAP notice request packet and transmit the MAP notice request packet to a MAP having an address stored in the neighbor MAP table in the MAP serving as the peripheral node. This operation may be repeated one after another. When the interface 19 has received at least one of a MAP search packet, a MAP notice packet and a MAP notice request packet, the NMDP unit 15 in a MAP can create a MAP notice request packet.

Furthermore, upon receiving a MAP notice packet, a MAP existing on a route through which a MAP notice packet is passed may create a MAP notice packet that includes information concerning a MAP registered in the neighbor MAP table in the MAP that has received the MAP notice packet, and transmit the MAP notice packet to a MAP serving as the search node. Or upon receiving a MAP notice packet, a MAP existing on a route through which a MAP notice packet is passed may store information concerning a MAP registered in the neighbor MAP table in the MAP that has received the MAP notice packet, in the received MAP notice packet. A MAP serving as a peripheral node may further return a MAP notice packet that passes through another peripheral node. At this time, the MAP serving as the peripheral node creates a MAP notice packet that passes through a MAP having an address stored in the neighbor MAP table in the MAP serving as the peripheral node, and returns the MAP notice packet. When the interface 19 has received at least one of a MAP search packet, a MAP notice packet and a MAP notice request packet, the NMDP unit 15 in a MAP can create a MAP notice request packet.

A MAP that has received a neighbor MAP registration request packet may further transmit a neighbor MAP registration request packet to another MAP. As heretofore described, each MAP may transmit a packet concerning a search for a MAP to a MAP neighboring itself, and propagation to the surrounding MAPs may be conducted by repeating this operation. As a result, each MAP can grasp information concerning a larger number of MAPs.

(Fifth Variation)

The method for determining a delay value and the number of hops between MAPs is not limited to that in the first and second embodiments. In the first and second embodiments, a MAP or MN serving as a search node determines inter-node information between the MAP or MN itself serving as the search node and a MAP serving as a peripheral node, on the basis of a delay value between the MAP or MN itself and a MAP serving as a search packet reception node and a delay value between the MAP serving as a search packet reception node and the MAP serving as the peripheral node. If the MAPs are in synchronism with each other and a MAP is in synchronism with the MN, however, the delay value itself between the MAP or MN itself serving as the search node and the MAP serving as the peripheral node can be measured directly. For example, when transmitting a MAP notice packet, the MAP serving as the peripheral node needs only to store its transmission time in the MAP notice packet. It is not necessary to store the search start time in a MAP search packet, a MAP notice request packet, or a MAP notice packet.

In the case where the MAPs are in synchronism with each other and a MAP is in synchronism with the MN, each MAP that exists on the route of a MAP notice packet may store an IP address of itself and transmission time of the MAP notice packet when it has received the MAP notice packet. In other words, each MAP may press a time stamp of transmission time on a MAP notice packet. As a result, the MAP serving as the search node can grasp information concerning a larger number of MAPs at a time.

In the case where the MAPs are in synchronism with each other and a MAP is in synchronism with the MN, the MAP or MN serving as the search node may hold a table in which sequence numbers of MAP search packets are associated with the search start time of the MAP search packets. By accessing the table on the basis of the sequence number in the returned MAP notice packet, the search start time can be grasped. As a result, it is not necessary to store the search start time in the MAP search packet, MAP notice request packet and MAP notice packet.

Also, as for the number of hops, the number of hops between the MAP or MN itself serving as the search node and the MAP serving as the peripheral node may be directly measured. Or the number of hops between the MAP or MN itself serving as the search node and the MAP serving as the peripheral node may be calculated from the numbers of hops between MAPs.

[Sixth Variation]

Information included in the MAP notice packet and information stored in the neighbor MAP table are not limited to those in the first and second embodiments. The information included in the MAP notice packet and the information stored in the neighbor MAP table vary according to the remoteness/nearness decision criterion used by the mobile communication system and the nodes, and the MAP selection policy. If, besides the delay value and the number of hops, for example, inter-node information, such as the cost, link capacity and propagation path information in packet transmission between nodes, and own-node information, such as the processing capability of the node, traffic volume in the node, the number of nodes using the node, transmission power of the node and reliability of the node, such as whether a mirror configuration is adopted, are used as parameters for the remoteness/nearness decision criterion, then the MAP notice packet includes the inter-node information and the own-node information, and the neighbor MAP table stores the inter-node information and the own-node information.

If besides the processing capability, inter-node information, such as the cost, link capacity and propagation path information in packet transmission between nodes, and own-node information, such as the traffic volume in the node, the number of nodes using the node, transmission power and reliability, are used as parameters for the MAP selection policy, then the MAP notice packet includes the inter-node information and the own-node information, and the neighbor MAP table stores the inter-node information and the own-node information.

It is also possible that the neighbor MAP table stores a plurality of kinds of own-node information and inter-node information and the NMDP unit alters the remoteness/nearness decision criterion to be adopted or the MAP selection policy to be used, according to the situation. A criterion used to store information by the neighbor MAP table is not limited to that in the first and second embodiments, either. For example, information concerning MAPs that are less than a predetermined value in the delay value or the number of hops may be stored without setting the maximum number of node entries. It is desirable that the criterion according to which the neighbor MAP table stores information is set on the basis of the MAP selection policy. By previously registering MAPs satisfying the MAP selection policy in the neighbor MAP table, a node to be used can be selected efficiently.

**Claims**

1. A method of searching for a service node providing a mobility management service for a mobile node(2), in a mobile communication system including a plurality of service nodes and the mobile node, each of the service nodes and the mobile node having a node storage unit (16,26) configured to store addresses of service nodes, the method **characterized by**:

   transmitting a node search packet for searching for the service node from the mobile node (2) to an address stored in the node storage unit of the mobile node,
   returning a node notice packet from at least one of a search packet reception node, which has received the node search packet, and a peripheral node other than the search packet reception node, to the mobile node in response to the node search packet,
   detecting the service node on a basis of a returned node notice packet by the mobile node, and
   updating the node storage unit of the mobile node on a basis of a detected service node by the mobile node.

2. A mobile node (2) comprising:

   a node storage unit (26) configured to store addresses of service nodes (1) providing a mobility management service for the mobile node (2); the mobile node **characterized by:**

   a search packet creation unit (25) configured to create a node search packet to be transmitted to an address stored in the node storage unit, in order to search for the service node;
   a communication unit (29) configured to transmit the node search packet created by the search packet creation unit, and receive a node notice packet returned from at least one of a search packet reception node, which has received the node search packet, and a peripheral node other than the search packet reception node in response to a transmitted node search packet;
   a detection unit (25) configured to detect the service node on a basis of the node notice packet received by the communication unit; and
   an update unit (25) configured to update the node storage unit on a basis of the service node detected by the detection unit.

3. The mobile node (2) of claim 2, further comprising:

   a data creation unit (25) configured to create data for investigating node information concerning the service node detected by the detection unit, the data being transmitted to a detected service node, wherein
   the data storage unit (26) stores the node information,
   the communication unit (29) transmits the data created by the data creation unit, and receives response data returned in response to the data by the detected service node, and
   the update unit (25) updates the node storage unit on a basis of a returned response data.

**4.** The mobile node (2) of claim 2, wherein
node information concerning the service node is included in the node notice packet,
the node storage unit (26) stores the node information, and
the update unit (25) updates the node storage unit on a basis of a returned node notice packet.

**5.** The mobile node (2) of claim 3 or 4, wherein the node storage unit (26) stores the addresses of the service nodes and the node information according to a predetermined criterion.

**6.** The mobile node (2) of claim 4. further comprising:

a determination unit (25) configured to determine inter-node information between the mobile node and the peripheral node according to inter-node information between the mobile node and the search packet reception node and inter-node information between the search packet reception node and the peripheral node on a basis of the node notice packet, wherein
the update unit (25) update the node storage unit on a basis of the inter-node information between the mobile node and the peripheral node determined by the determination unit.

**7.** The mobile node (2) of claim 2, further comprising:

a selection criterion holding unit (30) configured to hold a selection criterion for selecting a service node to be used; and
a selection unit (25) configured to access the node storage unit and select the service node to be used, on a basis of the selection criterion held in the selection criterion holding unit.

**8.** A mobile communication system comprising:

a mobile node (2) configured to search for a service node (1) providing a mobility management service for the mobile node (2) by transmitting a node search packet in order to search for the service node;
a search packet reception node configured to receive the node search packet transmitted from the mobile node; and
a peripheral node other than the search packet reception node,

wherein the mobile communication system is **characterized by:**
the mobile node (2) comprising:

a node storage unit (26) configured to store addresses of service nodes;
a search packet creation unit (25) configured to create a node search packet to be transmitted to an address stored in the node storage unit;
a communication unit (29) configured to transmit the node search packet created by the search packet creation unit, and receive a node notice packet returned from at least one of the search packet reception node and the peripheral node in response to a transmitted node search packet;
a detection unit (25) configured to detect the service node on a basis of the node notice packet received by the communication unit; and
an update unit (25) configured to update the node storage unit on a basis of the service node detected by the detection unit.

**9.** A computer program product for causing a computer to function as a mobile node (2), the computer program product comprising:

a first computer program code for causing the computer to store addresses of service nodes(1) providing a mobility management service for the mobile node (2) ; the computer program product **characterized by:**
a second computer program code for causing the computer to create a node search packet to be transmitted to a stored address, in order to search for the service node;
a third computer program code for causing the computer to transmit the node search packet created, and receive a node notice packet returned from at least one of a search packet reception node, which has received the node search packet, and a peripheral node other than the search packet reception node in response to a transmitted node search packet;
a fourth computer program code for causing the computer to detect the service node on a basis of the node notice packet received; and

a fifth computer program code for causing the computer to update the addresses on a basis of a detected service node.

**Patentansprüche**

1. Ein Verfahren zum Suchen nach einem Dienstknoten, der einen Mobilitätsmanagementdienst für einen mobilen Knoten (2) vorsieht, in einem Mobilkommunikationssystem, das eine Vielzahl von Dienstknoten und den mobilen Knoten enthält, jeder von den Dienstknoten und dem mobilen Knoten mit einer Knotenspeichereinheit (16, 26), die konfiguriert ist, Adressen von Dienstknoten zu speichern, das Verfahren **gekennzeichnet durch**:

   Übertragen eines Knotensuchpaketes zum Suchen nach dem Dienstknoten von dem mobilen Knoten (2) zu einer Adresse, die in der Knotenspeichereinheit des mobilen Knotens gespeichert ist,
   Rückgeben eines Knotenmitteilungspaketes von mindestens einem von einem Suchpaket-Empfangsknoten, der das Knotensuchpaket empfangen hat, und einem peripheren Knoten außer dem Suchpaket-Empfangsknoten, zu dem mobilen Knoten als Reaktion auf das Knotensuchpaket,
   Erfassen des Dienstknotens auf einer Basis eines zurückgegebenen Knotenmitteilungspaketes **durch** den mobilen Knoten, und
   Aktualisieren der Knotenspeichereinheit des mobilen Knotens auf einer Basis eines erfassten Dienstknotens **durch** den mobilen Knoten.

2. Ein mobiler Knoten (2), umfassend:

   eine Knotenspeichereinheit (26), die konfiguriert ist, Adressen von Dienstknoten (1) zu speichern, die einen Mobilitätsmanagementdienst für den mobilen Knoten (2) vorsehen;
   der mobile Knoten **gekennzeichnet durch**:

   eine Suchpaket-Erstellungseinheit (25), die konfiguriert ist, ein Knotensuchpaket zu erstellen, das zu einer Adresse zu übertragen ist, die in der Knotenspeichereinheit gespeichert ist, um nach dem Dienstknoten zu suchen;
   eine Kommunikationseinheit (29), die konfiguriert ist, das Knotensuchpaket, das **durch** die Suchpaket-Erstellungseinheit erstellt wird, zu übertragen, und ein Knotenmitteilungspaket zu empfangen, das von mindestens einem von einem Suchpaket-Empfangsknoten, der das Knotensuchpaket empfangen hat, und einem peripheren Knoten außer dem Suchpaket-Empfangsknoten als Reaktion auf ein übertragenes Knotensuchpaket zurückgegeben wird;
   eine Erfassungseinheit (25), die konfiguriert ist, den Dienstknoten auf einer Basis des Knotenmitteilungspaketes zu erfassen, das **durch** die Kommunikationseinheit empfangen wird; und
   eine Aktualisierungseinheit (25), die konfiguriert ist, die Knotenspeichereinheit auf einer Basis des Dienstknotens zu aktualisieren, der **durch** die Erfassungseinheit erfasst wird.

3. Der mobile Knoten (2) nach Anspruch 2, ferner umfassend:

   eine Datenerstellungseinheit (25), die konfiguriert ist, Daten zum Untersuchen von Knoteninformation betreffend den Dienstknoten zu erstellen, der durch die Erfassungseinheit erfasst wird, wobei die Daten zu einem erfassten Dienstknoten übertragen werden, wobei
   die Datenspeichereinheit (26) die Knoteninformation speichert,
   die Kommunikationseinheit (29) die Daten überträgt, die durch die Datenerstellungseinheit erstellt werden, und Antwortdaten empfängt, die als Reaktion auf die Daten durch den erfassten Dienstknoten zurückgegeben werden, und
   die Aktualisierungseinheit (25) die Knotenspeichereinheit auf einer Basis von zurückgegebenen Antwortdaten aktualisiert.

4. Der mobile Knoten (2) nach Anspruch 2, wobei
   Knoteninformation betreffend den Dienstknoten in dem Knotenmitteilungspaket enthalten ist,
   die Knotenspeichereinheit (26) die Knoteninformation speichert, und
   die Aktualisierungseinheit (25) die Knotenspeichereinheit auf einer Basis eines zurückgegebenen Knotenmitteilungspaketes aktualisiert.

**5.** Der mobile Knoten (2) nach Anspruch 3 oder 4, wobei die Knotenspeichereinheit (26) die Adressen der Dienstknoten und die Knoteninformation gemäß einem vorbestimmten Kriterium speichert.

**6.** Der mobile Knoten (2) nach Anspruch 4, ferner umfassend:

eine Bestimmungseinheit (25), die konfiguriert ist, Zwischen-Knoteninformation zwischen dem mobilen Knoten und dem peripheren Knoten gemäß Zwischen-Knoteninformation zwischen dem mobilen Knoten und dem Suchpaket-Empfangsknoten und Zwischen-Knoteninformation zwischen dem Suchpaket-Empfangsknoten und dem peripheren Knoten auf einer Basis des Knotenmitteilungspaketes zu bestimmen, wobei
die Aktualisierungseinheit (25) die Knotenspeichereinheit auf einer Basis der Zwischen-Knoteninformation zwischen dem mobilen Knoten und dem peripheren Knoten aktualisiert, die durch die Bestimmungseinheit bestimmt wird.

**7.** Der mobile Knoten (2) nach Anspruch 2, ferner umfassend:

eine Auswahlkriterium-Halteeinheit (30), die konfiguriert ist, ein Auswahlkriterium zum Auswählen eines zu verwendenden Dienstknotens zu halten; und
eine Auswahleinheit (25), die konfiguriert ist, auf die Knotenspeichereinheit zuzugreifen und den zu verwendenden Dienstknoten auszuwählen, auf einer Basis des Auswahlkriteriums, das in der Auswahlkriterium-Halteeinheit gehalten wird.

**8.** Ein Mobilkommunikationssystem, umfassend:

einen mobilen Knoten (2), der konfiguriert ist, nach einem Dienstknoten (1) zu suchen, der einen Mobilitätsmanagementdienst für den mobilen Knoten (2) vorsieht, durch Übertragen eines Knotensuchpaketes, um nach dem Dienstknoten zu suchen;
einen Suchpaket-Empfangsknoten, der konfiguriert ist, das Knotensuchpaket zu empfangen, das von dem mobilen Knoten übertragen wird; und
einen peripheren Knoten außer dem Suchpaket-Empfangsknoten,

wobei das Mobilkommunikationssystem **gekennzeichnet ist durch**
den mobilen Knoten (2), umfassend:

eine Knotenspeichereinheit (26), die konfiguriert ist, Adressen von Dienstknoten zu speichern;
eine Suchpaket-Erstellungseinheit (25), die konfiguriert ist, ein Knotensuchpaket zu erstellen, das zu einer Adresse zu übertragen ist, die in der Knotenspeichereinheit gespeichert ist;
eine Kommunikationseinheit (29), die konfiguriert ist, das Knotensuchpaket zu übertragen, das **durch** die Suchpaket-Erstellungseinheit erstellt wird, und ein Knotenmitteilungspaket zu empfangen, das von mindestens einem von dem Suchpaket-Empfangsknoten und dem peripheren Knoten als Reaktion auf ein übertragenes Knotensuchpaket zurückgegeben wird;
eine Erfassungseinheit (25), die konfiguriert ist, den Dienstknoten auf einer Basis des Knotenmitteilungspaketes zu erfassen, das **durch** die Kommunikationseinheit empfangen wird; und
eine Aktualisierungseinheit (25), die konfiguriert ist, die Knotenspeichereinheit auf einer Basis des Dienstknotens zu aktualisieren, der **durch** die Erfassungseinheit erfasst wird.

**9.** Ein Computerprogrammprodukt zum Veranlassen eines Computers, als ein mobiler Knoten (2) zu funktionieren, das Computerprogrammprodukt umfassend:

einen ersten Computerprogrammcode zum Veranlassen des Computers, Adressen von Dienstknoten (1) zu speichern, die einen Mobilitätsmanagementdienst für den mobilen Knoten (2) vorsehen;
wobei das Computerprogrammprodukt **gekennzeichnet ist durch**:

einen zweiten Computerprogrammcode zum Veranlassen des Computers, ein Knotensuchpaket zu erstellen, das zu einer gespeicherten Adresse zu übertragen ist, um nach dem Dienstknoten zu suchen;
einen dritten Computerprogrammcode zum Veranlassen des Computers, das erstellte Knotensuchpaket zu übertragen, und ein Knotenmitteilungspaket zu empfangen, das von mindestens einem von einem Suchpaket-Empfangsknoten, der das Knotensuchpaket empfangen hat, und einem peripheren Knoten außer dem Suchpaket-Empfangsknoten zurückgegeben wird als Reaktion auf ein übertragenes Knotensuchpaket;

einen vierten Computerprogrammcode zum Veranlassen des Computers, den Dienstknoten auf einer Basis des empfangenen Knotenmitteilungspaketes zu erfassen; und

einen fünften Computerprogrammcode zum Veranlassen des Computers, die Adressen auf einer Basis eines erfassten Dienstknotens zu aktualisieren.

**Revendications**

1. Procédé de recherche de noeud de service fournissant un service de gestion de la mobilité pour un noeud mobile (2), dans un système de communication mobile comprenant une pluralité de noeuds de service et le noeud mobile, chacun des noeuds de service et le noeud mobile ayant une unité de stockage de noeuds (16, 26) configurée pour stocker des adresses de noeuds de service, le procédé étant **caractérisé par** les étapes consistant à :

   émettre un paquet de recherche de noeud pour rechercher le noeud de service depuis le noeud mobile (2) jusqu'à une adresse stockée dans l'unité de stockage de noeuds du noeud mobile,
   retourner un paquet de notification de noeud depuis au moins l'un parmi un noeud de réception de paquet de recherche, qui a reçu le paquet de recherche de noeud, et un noeud périphérique autre que le noeud de réception de paquet de recherche, jusqu'au noeud mobile en réponse au paquet de recherche de noeud,
   détecter le noeud de service en se basant sur un paquet de notification de noeud renvoyé par le noeud mobile, et
   mettre à jour l'unité de stockage de noeuds du noeud mobile en se basant sur un noeud de service détecté par le noeud mobile.

2. Noeud mobile comprenant
   une unité de stockage de noeuds (26) configurée pour stocker les adresses de noeuds de service (1) fournissant un service de gestion de la mobilité pour le noeud mobile (2) ;
   le noeud mobile étant **caractérisé par**
   une unité de création de paquets de recherche (25) configurée pour créer un paquet de recherche de noeud devant être émis vers une adresse stockée dans l'unité de stockage de noeuds, afin de rechercher le noeud de service ;
   une unité de communication (29) configurée pour émettre le paquet de recherche de noeud créé par l'unité de création de paquets de recherche, et recevoir un paquet de notification de noeud renvoyé par au moins l'un parmi un noeud de réception de paquet de recherche, qui a reçu le paquet de recherche de noeud, et un noeud périphérique autre que le noeud de réception de paquet de recherche en réponse à un paquet de recherche de noeud émis ;
   une unité de détection (25) configurée pour détecter le noeud de service en se basant sur le paquet de notification de noeud reçu par l'unité de communication ; et
   une unité de mise à jour (25) configurée pour mettre à jour l'unité de stockage de noeud en se basant sur le noeud de service détecté par l'unité de détection.

3. Noeud mobile (2) selon la revendication 2, comprenant en outre :

   une unité de création de données (25) configurée pour créer des données pour interroger les informations de noeud concernant le noeud de service détecté par l'unité de détection, les données étant émises vers un noeud de service détecté, dans lequel
   l'unité de stockage de données (26) stocke les informations de noeud,
   l'unité de communication (29) émet les données créées par l'unité de création de données, et reçoit des données de réponse renvoyées en réponse aux données par le noeud de service détecté, et
   l'ûnité de mise à jour (25) met à jour l'unité de stockage de noeuds en se basant sur des données de réponse renvoyées.

4. Noeud mobile (2) selon la revendication 2, dans lequel
   les informations de noeud concernant le noeud de service sont incluses dans le paquet de notification de noeud,
   l'unité de stockage de noeuds (26) stocke les informations de noeud, et
   l'unité de mise à jour (25) met à jour l'unité de stockage de noeuds en se basant sur un paquet de notification de noeud renvoyé.

5. Noeud mobile (2) selon la revendication 3 ou 4, dans lequel l'unité de stockage de noeuds (26) stocke les adresses des noeuds de service et les informations de noeud en fonction d'un critère prédéterminé.

6. Noeud mobile (2) selon la revendication 4, comprenant en outre :

une unité de détermination (25) configurée pour déterminer des informations internodales entre le noeud mobile et le noeud périphérique en fonction d'informations internodales entre le noeud mobile et le noeud de réception de paquet de recherche et en fonction d'informations internodales entre le noeud de réception de paquet de recherche et le noeud périphérique en se basant sur le paquet de notification de noeud, dans lequel l'unité de mise à jour (25) met à jour l'unité de stockage de noeud en se basant sur les informations internodales entre le noeud mobile et le noeud périphérique déterminées par l'unité de détermination.

7. Noeud mobile (2) selon la revendication 2, comprenant en outre :

une unité de conservation de critère de sélection (30) configurée pour conserver un critère de sélection pour sélectionner un noeud de service devant être utilisé ; et
une unité de sélection (25) configurée pour accéder à l'unité de stockage de noeuds et sélectionner le noeud de service devant être utilisé, en se basant sur le critère de sélection conservé dans l'unité de conservation de critère de sélection.

8. Système de communication mobile comprenant
un noeud mobile (2) configuré pour rechercher un noeud de service (1) fournissant un service de gestion de la mobilité pour le noeud mobile (2) en émettant un paquet de recherche de noeud afin de rechercher le noeud de service ;
un noeud de réception de paquet de recherche configuré pour recevoir le paquet de recherche de noeud émis par le noeud mobile ; et
un noeud périphérique autre que le noeud de réception de paquet de recherche,
le système de communication mobile étant **caractérisé en ce que**
le noeud mobile (2) comprend
une unité de stockage de noeuds (26) configurée pour stocker des adresses de noeuds de service,
une unité de création de paquets de recherche (25) configurée pour créer un paquet de recherche de noeud devant être transmis vers une adresse stockée dans l'unité de stockage de noeud ;
une unité de communication (29) configurée pour émettre le paquet de recherche de noeud créé par l'unité de création de paquets de recherche, et recevoir un paquet de notification de noeud renvoyé par au moins l'un parmi le noeud de réception de paquet de recherche et le noeud périphérique en réponse au paquet de recherche de noeud émis ;
une unité de détection (25) configurée pour détecter le noeud de service en se basant sur le paquet de notification de noeud reçu par l'unité de communication ; et
une unité de mise à jour (25) configurée pour mettre à jour l'unité de stockage de noeuds en se basant sur le noeud de service détecté par l'unité de détection.

9. Programme d'ordinateur permettant d'amener un ordinateur à fonctionner comme un noeud mobile (2), le programme d'ordinateur comprenant :

un premier code de programme d'ordinateur pour amener l'ordinateur à stocker des adresses de noeuds de service (1) fournissant un service de gestion de la mobilité pour le noeud mobile (2) ;
le programme d'ordinateur étant **caractérisé par** :

un deuxième code de programme d'ordinateur pour amener l'ordinateur à créer un paquet de recherche de noeud devant être émis vers une adresse stockée, afin de rechercher le noeud de service ;
un troisième code de programme d'ordinateur pour amener l'ordinateur à émettre le paquet de recherche de noeud créé, et recevoir un paquet de notification de noeud renvoyé par au moins l'un parmi un noeud de réception de paquet de recherche, qui a reçu le paquet de recherche de noeud, et un noeud périphérique autre que le noeud de réception de paquet de recherche en réponse à un paquet de recherche de noeud émis ;
un quatrième code de programme d'ordinateur pour amener l'ordinateur à détecter le noeud de service en se basant sur le paquet de notification de noeud reçu ; et
un cinquième code de programme d'ordinateur pour amener l'ordinateur à mettre à jour les adresses en se basant sur un noeud de service détecté.

# FIG. 1

# FIG. 2

1

## MAP

11～ **APPLICATION UNIT**

12～ **TCP/UDP UNIT**

13

**MOBILITY MANAGEMENT UNIT** ← → **IP LAYER UNIT** ← → **NMDP UNIT** → **NEIGHBOR MAP TABLE** 16

14 15 **SECOND TABLE** 17

18～ **LINK LAYER UNIT**

19～ **INTERFACE**

ANOTHER MAP, MN, HA

EP 1 381 191 B1

40

# FIG. 3

MAP (k)

NEIGHBOR MAP TABLE 16k

| IP ADDRESS | DELAY VALUE (msec.) | PROCESSING CAPABILITY | LIFETIME (sec.) | SEQUENCE NUMBER 1 | FORCED REGISTRATION LIFETIME (sec.) | SEQUENCE NUMBER 2 |
|---|---|---|---|---|---|---|
| k | 0 | 10 (MEDIUM) | 635 | 1653 | 0 | |
| f | 6.5 | 11 (LOW) | 433 | 1652 | 2944 | 623 |
| i | 6.8 | 01 (HIGH) | 122 | 1650 | 0 | |
| n | 7.3 | 10 (MEDIUM) | 61 | 1649 | 0 | |
| g | 13.0 | 00 (HIGHEST) | 122 | 1650 | 0 | |

SECOND TABLE 17k

| | |
|---|---|
| SEQUENCE NUMBER 3 | 1653 |
| INITIAL LIFETIME (sec.) | 900 |
| SEARCH LIFETIME (sec.) | 60 |
| SEQUENCE NUMBER 4 | 2232 |
| FORCED REGISTRATION INITIAL LIFETIME (sec.) | 1800 |
| FORCED REGISTRATION REQUEST TRANSMISSION TIMER (sec.) | 1163 |
| PROCESSING CAPABILITY | 10 (MEDIUM) |
| TIMER (sec.) | 111.5265 |
| SMOOTHING FACTOR $\alpha$ | 0.5 |

# FIG. 4

2

MN

21 — APPLICATION UNIT

22 — TCP/UDP UNIT

23

25

MOBILITY MANAGEMENT UNIT

IP LAYER UNIT

NMDP UNIT

NEIGHBOR MAP TABLE

SECOND TABLE    26

MAP SELECTION POLICY SETTING

MAP SELECTION POLICY HOLDING UNIT

24

NOTICE OF OPTIMUM MAP

27

30

28 — LINK LAYER UNIT

29 — INTERFACE

MAP,HA

EP 1 381 191 B1

# FIG. 5

MN (a)

NEIGHBOR MAP TABLE 26a

| IP ADDRESS | DELAY VALUE (msec.) | PROCESSING CAPABILITY | LIFETIME (sec.) | SEQUENCE NUMBER 1 |
|---|---|---|---|---|
| f | 2.3 | 10 (MEDIUM) | 22 | 666 |
| k | 3.3 | 10 (MEDIUM) | 22 | 666 |
| b | 4.1 | 01 (HIGH) | 30 | 667 |
| a | 5.9 | 00 (HIGHEST) | 18 | 663 |
| d | 9.9 | 11 (LOW) | 18 | 663 |

SECOND TABLE 27a

| SEQUENCE NUMBER 3 | 667 |
|---|---|
| INITIAL LIFETIME (sec.) | 30 |
| SEARCH LIFETIME (sec.) | 15 |
| TIMER (sec.) | 52.0121 |
| SMOOTHING FACTOR $\beta$. | 0 |

# FIG. 6

MAP SEARCH PACKET 3

**FIG. 7**

| VERSION = 6 SOURCE ADDRESS = k DESTINATION ADDRESS = n | IPv6 HEADER 31 |
| TYPE = 31 SEQUENCE NUMBER = 1654 SEARCH START TIME = 112.5265 DELAY VALUE = 7.3 | DESTINATION OPTION HEADER 32 |

MAP NOTICE REQUEST PACKET 4i

**FIG. 8A**

| VERSION = 6 SOURCE ADDRESS = n DESTINATION ADDRESS = i | IPv6 HEADER 41i |
| TYPE = 32 SEARCH SOURCE ADDRESS = k SEQUENCE NUMBER = 1654 SEARCH START TIME = 112.5265 DELAY VALUE 1 = 7.3 DELAY VALUE 2 = 6.3 | DESTINATION OPTION HEADER 42i |

MAP NOTICE REQUEST PACKET 4j

**FIG. 8B**

| VERSION = 6 SOURCE ADDRESS = n DESTINATION ADDRESS = j | IPv6 HEADER 41j |
| TYPE = 32 SEARCH SOURCE ADDRESS = k SEQUENCE NUMBER = 1654 SEARCH START TIME = 112.5265 DELAY VALUE 1 = 7.3 DELAY VALUE 2 = 8.3 | DESTINATION OPTION HEADER 42j |

MAP NOTICE PACKET 5i

**FIG. 9A**

| |
|---|
| VERSION = 6 |
| SOURCE ADDRESS = i |
| DESTINATION ADDRESS = k |

IPv6 HEADER
51i

| |
|---|
| TYPE = 33 |
| SEQUENCE NUMBER = 1654 |
| SEARCH START TIME = 112.5265 |
| DELAY VALUE 1 = 7.3 |
| DELAY VALUE 2 = 6.3 |
| PROCESSING CAPABILITY = 01 (HIGH) |

DESTINATION OPTION HEADER
52i

MAP NOTICE PACKET 5j

**FIG. 9B**

| |
|---|
| VERSION = 6 |
| SOURCE ADDRESS = j |
| DESTINATION ADDRESS = k |

IPv6 HEADER
51j

| |
|---|
| TYPE = 33 |
| SEQUENCE NUMBER = 1654 |
| SEARCH START TIME = 112.5265 |
| DELAY VALUE 1 = 7.3 |
| DELAY VALUE 2 = 8.3 |
| PROCESSING CAPABILITY = 01 (HIGH) |

DESTINATION OPTION HEADER
52j

# FIG. 10

MAP (k)

NEIGHBOR MAP TABLE 16k

| IP ADDRESS | DELAY VALUE (msec.) | PROCESSING CAPABILITY | LIFETIME (sec.) | SEQUENCE NUMBER 1 | FORCED REGISTRATION LIFETIME (sec.) | SEQUENCE NUMBER 2 |
|---|---|---|---|---|---|---|
| k | 0 | 10 (MEDIUM) | 900 | 1654 | 0 | |
| f | 6.5 | 11 (LOW) | 432 | 1652 | 2943 | 623 |
| i | 6.8 | 01 (HIGH) | 122 | 1650 | 0 | |
| n | 7.2 | 11 (LOW) | 900 | 1654 | 0 | |
| g | 13.0 | 00 (HIGHEST) | 121 | 1650 | 0 | |

SECOND TABLE 17k

| | |
|---|---|
| SEQUENCE NUMBER 3 | 1654 |
| INITIAL LIFETIME (sec.) | 900 |
| SEARCH LIFETIME (sec.) | 60 |
| SEQUENCE NUMBER 4 | 2232 |
| FORCED REGISTRATION INITIAL LIFETIME (sec.) | 1800 |
| FORCED REGISTRATION REQUEST TRANSMISSION TIMER (sec.) | 1162 |
| PROCESSING CAPABILITY | 10 (MEDIUM) |
| TIMER (sec.) | 112.5465 |
| SMOOTHING FACTOR $\alpha$ | 0.5 |

# FIG. 11

MAP (k)

### NEIGHBOR MAP TABLE 16k

| IP ADDRESS | DELAY VALUE (msec.) | PROCESSING CAPABILITY | LIFETIME (sec.) | SEQUENCE NUMBER 1 | FORCED REGISTRATION LIFETIME (sec.) | SEQUENCE NUMBER 2 |
|---|---|---|---|---|---|---|
| k | 0 | 10 (MEDIUM) | 900 | 1654 | 0 | |
| f | 6.5 | 11 (LOW) | 432 | 1652 | 2943 | 623 |
| i | 6.6 | 01 (HIGH) | 900 | 1654 | 0 | |
| n | 7.2 | 11 (LOW) | 900 | 1654 | 0 | |
| g | 13.0 | 00 (HIGHEST) | 121 | 1650 | 0 | |

### SECOND TABLE 17k

| | |
|---|---|
| SEQUENCE NUMBER 3 | 1654 |
| INITIAL LIFETIME (sec.) | 900 |
| SEARCH LIFETIME (sec.) | 60 |
| SEQUENCE NUMBER 4 | 2232 |
| FORCED REGISTRATION INITIAL LIFETIME (sec.) | 1800 |
| FORCED REGISTRATION REQUEST TRANSMISSION TIMER (sec.) | 1162 |
| PROCESSING CAPABILITY | 10 (MEDIUM) |
| TIMER (sec.) | 112.5554 |
| SMOOTHING FACTOR $\alpha$ | 0.5 |

# FIG. 12

NEIGHBOR MAP REGISTRATION REQUEST PACKET

6

| | |
|---|---|
| VERSION = 6<br>SOURCE ADDRESS = k<br>DESTINATION ADDRESS = f | IPv6 HEADER<br>61 |
| TYPE = 35<br>A-FLAG = SET<br>SEQUENCE NUMBER = 2233<br>FORCED REGISTRATION LIFETIME = 1800 | DESTINATION OPTION HEADER<br>62 |

# FIG. 13

MAP (f)

NEIGHBOR MAP TABLE 16f

| IP ADDRESS | DELAY VALUE (msec.) | PROCESSING CAPABILITY | LIFETIME (sec.) | SEQUENCE NUMBER 1 | FORCED REGISTRATION LIFETIME (sec.) | SEQUENCE NUMBER 2 |
|---|---|---|---|---|---|---|
| f | 0 | 10 (MEDIUM) | 899 | 22333 | 0 | |
| k | 6.0 | 10 (MEDIUM) | 150 | 22330 | 1800 | 2233 |
| b | 7.6 | 01 (HIGH) | 226 | 22328 | 0 | |
| a | 9.2 | 00 (HIGHEST) | 900 | 22333 | 0 | |
| d | 9.4 | 11 (LOW) | 900 | 22333 | 0 | |

SECOND TABLE 17f

| | |
|---|---|
| SEQUENCE NUMBER 3 | 22333 |
| INITIAL LIFETIME (sec.) | 900 |
| SEARCH LIFETIME (sec.) | 60 |
| SEQUENCE NUMBER 4 | 623 |
| FORCED REGISTRATION INITIAL LIFETIME (sec.) | 3600 |
| FORCED REGISTRATION REQUEST TRANSMISSION TIMER (sec.) | 3000 |
| PROCESSING CAPABILITY | 11 (LOW) |
| TIMER (sec.) | 52.0121 |
| SMOOTHING FACTOR $\alpha$ | 0.5 |

# FIG. 14

NEIGHBOR MAP REGISTRATION
ACKNOWLEDGEMENT PACKET 7

VERSION = 6
SOURCE ADDRESS = f
DESTINATION ADDRESS = k

IPv6 HEADER
71

TYPE = 36
SEQUENCE NUMBER = 2233

DESTINATION OPTION HEADER
72

**FIG. 15**

## FIG. 16

Legend:
- → MAP SEARCH PACKET
- —·→ MAP NOTICE REQUEST PACKET
- --→ MAP NOTICE PACKET

16d:
| d | 0ms |
| e | 6ms |
| f | 9ms |
| a | 9ms |
| k | 14ms |

16e:
| e | 0ms |
| l | 4ms |
| d | 6ms |
| n | 9ms |
| k | 16ms |

16l:
| l | 0ms |
| e | 4ms |
| m | 6ms |
| n | 7ms |
| j | 18ms |

16a:
| a | 0ms |
| d | 9ms |
| f | 9ms |
| b | 10ms |
| k | 14ms |

16k:
| k | 0ms |
| f | 6ms |
| i | 6ms |
| n | 7ms |
| g | 13ms |

16n:
| n | 0ms |
| i | 6ms |
| k | 6ms |
| l | 7ms |
| j | 8ms |

16m:
| m | 0ms |
| j | 5ms |
| l | 6ms |
| n | 9ms |
| e | 15ms |

16b:
| b | 0ms |
| f | 7ms |
| c | 7ms |
| a | 10ms |
| k | 14ms |

16f:
| f | 0ms |
| k | 6ms |
| b | 7ms |
| a | 9ms |
| d | 9ms |

16j:
| j | 0ms |
| m | 5ms |
| n | 8ms |
| i | 11ms |
| h | 13ms |

16c:
| c | 0ms |
| b | 7ms |
| g | 8ms |
| f | 11ms |
| k | 13ms |

16i:
| i | 0ms |
| h | 5ms |
| k | 6ms |
| n | 6ms |
| g | 10ms |

16g:
| g | 0ms |
| c | 8ms |
| h | 8ms |
| i | 10ms |
| k | 13ms |

16o:
| o | 0ms |
| k | 7ms |
| n | 9ms |
| l | 16ms |
| e | 17ms |

16h:
| h | 0ms |
| i | 5ms |
| g | 8ms |
| j | 9ms |
| n | 13ms |

Nodes: 1a MAP(a), 1b MAP(b), 1c MAP(c), 1d MAP(d), 1e MAP(e), 1f MAP(f), 1g MAP(g), 1h MAP(h), 1i MAP(i), 1j MAP(j), 1k MAP(k), 1l MAP(l), 1m MAP(m), 1n MAP(n), 1o MAP(o)

EP 1 381 191 B1

FIG. 17

FIG. 18

EP 1 381 191 B1

FIG. 19

EP 1 381 191 B1

EP 1 381 191 B1

# FIG. 20

**MAP (k)**

NEIGHBOR MAP TABLE 116k

| IP ADDRESS | NUMBER OF HOPS | LIFETIME (sec.) | SEQUENCE NUMBER 1 | FORCED REGISTRATION LIFETIME (sec.) | SEQUENCE NUMBER 2 |
|---|---|---|---|---|---|
| k | 0 | 635 | 1653 | 0 | |
| f | 6 | 433 | 1652 | 2944 | 623 |
| i | 6 | 122 | 1650 | 0 | |
| n | 7 | 61 | 1649 | 0 | |
| g | (13) | 121 | 1650 | 0 | |

SECOND TABLE 117k

| | |
|---|---|
| SEQUENCE NUMBER 3 | 1653 |
| INITIAL LIFETIME (sec.) | 900 |
| SEARCH LIFETIME (sec.) | 60 |
| SEQUENCE NUMBER 4 | 2232 |
| FORCED REGISTRATION INITIAL LIFETIME (sec.) | 1800 |
| FORCED REGISTRATION REQUEST TRANSMISSION TIMER (sec.) | 1163 |
| INITIAL HL | (13) |

# FIG. 21

MN (a)

NEIGHBOR MAP TABLE 126a

| IP ADDRESS | NUMBER OF HOPS | LIFETIME (sec.) | SEQUENCE NUMBER 1 |
|---|---|---|---|
| f | 2 | 22 | 666 |
| k | 3 | 22 | 666 |
| b | 4 | 30 | 667 |
| a | 6 | 18 | 663 |
| d | 10 | 18 | 663 |

SECOND TABLE 127a

| SEQUENCE NUMBER 3 | 667 |
|---|---|
| INITIAL LIFETIME (sec.) | 30 |
| SEARCH LIFETIME (sec.) | 15 |
| INITIAL HL | 255 |

# FIG. 22

MAP SEARCH PACKET → (solid arrow)
ENCAPSULATED MAP NOTICE PACKET → (dash-dot arrow)
MAP NOTICE PACKET → (dashed arrow)

# FIG. 23

MAP SEARCH PACKET 103

| | |
|---|---|
| VERSION = 6<br>SOURCE ADDRESS = k<br>DESTINATION ADDRESS = n | IPv6 HEADER<br>131 |
| TYPE = 41<br>SEQUENCE NUMBER = 1654<br>INITIAL HL = 13 | DESTINATION OPTION HEADER<br>132 |

## FIG. 24A

ENCAPSULATED MAP NOTICE PACKET 104i

IPv6 HEADER 141i

```
VERSION = 6
SOURCE ADDRESS = n
DESTINATION ADDRESS = i
```

ENCAPSULATED

IPv6 HEADER 151i

```
VERSION = 6
HL = 13
SOURCE ADDRESS = n
DESTINATION ADDRESS = k
```

DESTINATION
OPTION HEADER 152i

```
TYPE = 42
INTERMEDIATE MAP ADDRESS = i
SEQUENCE NUMBER = 1654
INITIAL HL = 13
```

MAP NOTICE
PACKET
105i

## FIG. 24B

ENCAPSULATED MAP NOTICE PACKET 104j

IPv6 HEADER 141j

```
VERSION = 6
SOURCE ADDRESS = n
DESTINATION ADDRESS = j
```

ENCAPSULATED

IPv6 HEADER 151j

```
VERSION = 6
HL = 13
SOURCE ADDRESS = n
DESTINATION ADDRESS = k
```

DESTINATION
OPTION HEADER 152j

```
TYPE = 42
INTERMEDIATE MAP ADDRESS = j
SEQUENCE NUMBER = 1654
INITIAL HL = 13
```

MAP NOTICE
PACKET
105j

# FIG. 25

MAP NOTICE PACKET 105i

| | |
|---|---|
| VERSION = 6<br>HL = 7<br>SOURCE ADDRESS = n<br>DESTINATION ADDRESS = k | IPv6 HEADER<br>〜151i |
| TYPE = 42<br>INTERMEDIATE MAP ADDRESS = i<br>SEQUENCE NUMBER = 1654<br>INITIAL HL = 13 | DESTINATION OPTION HEADER<br>〜152i |

# FIG. 26

MAP (k)

NEIGHBOR MAP TABLE 116k

| IP ADDRESS | NUMBER OF HOPS | LIFETIME (sec.) | SEQUENCE NUMBER 1 | FORCED REGISTRATION LIFETIME (sec.) | SEQUENCE NUMBER 2 |
|---|---|---|---|---|---|
| k | 0 | 900 | 1654 | 0 | |
| f | 6 | 432 | 1652 | 2943 | 623 |
| i | 6 | 122 | 1650 | 0 | |
| n | 7 | 900 | 1654 | 0 | |
| g | 13 | 121 | 1650 | 0 | |

SECOND TABLE 117k

| | |
|---|---|
| SEQUENCE NUMBER 3 | 1654 |
| INITIAL LIFETIME (sec.) | 900 |
| SEARCH LIFETIME (sec.) | 60 |
| SEQUENCE NUMBER 4 | 2232 |
| FORCED REGISTRATION INITIAL LIFETIME (sec.) | 1800 |
| FORCED REGISTRATION REQUEST TRANSMISSION TIMER (sec.) | 1162 |
| INITIAL HL | 13 |

# FIG. 27

MAP NOTICE PACKET 105j

VERSION = 6
HL = 13
SOURCE ADDRESS = n
DESTINATION ADDRESS = k

IPv6 HEADER
151j

TYPE = 42
INTERMEDIATE MAP ADDRESS = j
SEQUENCE NUMBER = 1654
INITIAL HL = 13

DESTINATION OPTION HEADER
152j

## FIG. 28

101a — MAP (a)
101d — MAP (d)
101e — MAP (e)
101l — MAP (l)
101f — MAP (f)
101b — MAP (b)

102a — MN (a)

126a —
| f | 2hp |
| k | 3hp |
| b | 4hp |
| a | 6hp |
| d | 10hp |

101k — MAP (k)

102b
C ⇒ MN (b)

| n | 2hp |
| k | 4hp |
| i | 7hp |
| l | 7hp |
| e | 8hp |
126b

D

MAP (m)
101m

102b
B ⇒ MN (b)

| k | 2hp |
| i | 3hp |
| o | 4hp |
| n | 6hp |
| h | 10hp |
126b

MAP (n) — 101n

101o — MAP (o)

MAP (i) — 101i

MAP (j) — 101j

101c — MAP (c)

102b
A ⇒ MN (b)

| o | 1hp |
| g | 3hp |
| i | 6hp |
| k | 8hp |
| h | 8hp |
126b

101g — MAP (g)

102b

MAP (h) — 101h

EP 1 381 191 B1

## FIG.29

301 MAP

- 311 APPLICATION UNIT
- 312 TCP/UDP UNIT
- 313 IP LAYER UNIT
- 314 MOBILITY MANAGEMENT UNIT
- 315 NMDP UNIT
- 316 NEIGHBOR MAP TABLE
- 317 SECOND TABLE
- 318 LINK LAYER UNIT
- 319 INTERFACE

ANOTHER MAP, MN, HA

# FIG.30

302

MN

321 — APPLICATION UNIT

325

MAP SELECTION
POLICY SETTING

NEIGHBOR MAP TABLE

322 — TCP/UDP UNIT    NMDP UNIT

MAP SELECTION POLICY
HOLDING UNIT

SECOND TABLE    326

323

327    330

MOBILITY MANAGEMENT UNIT    IP LAYER UNIT

324

NOTICE OF
OPTIMUM MAP

328 — LINK LAYER UNIT

329 — INTERFACE

MAP, HA

EP 1 381 191 B1